# EUROPEAN PATENT SPECIFICATION

(11) **EP 3 993 500 B1**
(45) Date of publication and mention of the grant of the patent: **20.11.2024**
(21) Application number: 20848660.5
(22) Date of filing: 28.07.2020
(51) Int. Cl.: H04W 36/18, H04W 28/06, H04L 69/04

(54) **PACKET REDUNDANCY PROCESSING METHOD FOR SUPPORTING ENHANCED HANDOVER IN NEXT GENERATION MOBILE COMMUNICATION SYSTEM, METHOD FOR PREVENTING HEADER DECOMPRESSION FAILURE DURING HANDOVER AND APPARATUS THEREFOR**
VERFAHREN ZUR PAKETREDUNDANZVERARBEITUNG ZUR UNTERSTÜTZUNG DER VERBESSERTEN ÜBERGABE IN EINEM MOBILEN KOMMUNIKATIONSSYSTEM DER NÄCHSTEN GENERATION, VERFAHREN ZUR VERHINDERUNG VON HEADERDEKOMPRIMIERUNGSFEHLERN WÄHREND DER ÜBERGABE UND VORRICHTUNG DAFÜR
PROCÉDÉ DE TRAITEMENT DE REDONDANCE DE PAQUETS PERMETTANT LA PRISE EN CHARGE D'UN TRANSFERT INTERCELLULAIRE AMÉLIORÉ DANS UN SYSTÈME DE COMMUNICATION MOBILE DE NOUVELLE GÉNÉRATION, PROCÉDÉ DE PRÉVENTION D'UNE DÉFAILLANCE DE DÉCOMPRESSION D'EN-TÊTE PENDANT UN TRANSFERT INTERCELLULAIRE ET APPAREIL ASSOCIÉ

(30) Priority: 29.07.2019 KR 20190091556; 19.09.2019 KR 20190115657; 04.03.2020 KR 20200027391
(43) Date of publication of application: 04.05.2022
(73) Proprietor: Samsung Electronics Co., Ltd., Suwon-si, Gyeonggi-do 16677 (KR)
(72) Inventor: KIM, Donggun, Suwon-si, Gyeonggi-do 16677 (KR); KIM, Soenghun, Suwon-si, Gyeonggi-do 16677 (KR)
(74) Representative: Gulde & Partner
(86) International application number: PCT/KR2020/009890
(87) International publication number: WO 2021/020850

(56) References cited:
- EP-A1- 3 970 409
- WO-A1-2019/004396
- US-A1- 2016 044 639
- C. BORMANN: "RFC 3095 - February 7, 2001 RObust Header Compression", 7 February 2001 (2001-02-07), XP055485258, Retrieved from the Internet <URL:http://www.ietf.org/rfc/rfc3095.txt> [retrieved on 20180618]
- QUALCOMM INCORPORATED: "LTE mobility enhancements for eMBB HO using dual active protocol stack", 3GPP DRAFT; R2-1906378_LTE MOBILITY ENHANCEMENTS FOR EMBB HO USING DUAL ACTIVE PROTOCOL STACK_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, R2-1906378_LTE mobility enhancements for eMBB HO u, 3 May 2019 (2019-05-03), Mobile Competence Centre ; 650, route des Lucioles ; F-06921 Sophia-Antipolis Cedex ; France, XP051710693
- R3 (ERICSSON): "SN Status Transfer applicability for Re-establishment", 3GPP DRAFT; R2-1908491_R3-193292, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, R2-1908491_R3-193292, 23 May 2019 (2019-05-23), Mobile Competence Centre ; 650, route des Lucioles ; F-06921 Sophia-Antipolis Cedex ; France, XP051740612
- INTEL CORPORATION, MEDIATEK INC, OPPO, GOOGLE INC., VIVO, ETRI, CATT, CHINA TELECOM, XIAOMI, CHARTER COMMUNICATIONS, ASUSTEK: "Non-DC based solution for 0ms interruption time", 3GPP DRAFT; R2-1906281-NON-DC BASED SOLUTION FOR 0MS INTERRUPTION TIME, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, R2-1906281-Non-DC based solution for 0ms interrupt, 3 May 2019 (2019-05-03), Mobile Competence Centre ; 650, route des Lucioles ; F-06921 Sophia-Antipolis Cedex ; France, XP051710598
- MEDIATEK INC.: "Details of Ethernet Header Compression", 3GPP DRAFT; R2-1907074 - DETAILS OF ETHERNET HEADER COMPRESSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, R2-1907074 - Details of Ethernet Header Compressio, 2 May 2019 (2019-05-02), Mobile Competence Centre ; 650, route des Lucioles ; F-06921 Sophia-Antipolis Cedex ; France, XP051711371

## Description

### Technical Field

The disclosure relates to a packet redundancy processing method for supporting an enhanced handover in a next-generation mobile communication system, a method for preventing a header decompression failure during a handover, and an apparatus therefor.

### Background Art

In order to meet wireless data traffic demands that have increased after 4G communication system commercialization, efforts to develop an improved 5G communication system or a pre-5G communication system have been made. For this reason, the 5G communication system or the pre-5G communication system is called a beyond 4G network communication system or a post LTE system. In order to achieve a high data transmission rate, an implementation of the 5G communication system in a mmWave band (for example, 60 GHz band) is being considered. In the 5G communication system, technologies such as beamforming, massive MIMO, Full Dimensional MIMO (FD-MIMO), array antenna, analog beam-forming, and large scale antenna are being discussed as means to mitigate a propagation path loss in the mm Wave band and to increase a propagation transmission distance. Further, the 5G communication system has developed technologies such as an evolved small cell, an advanced small cell, a cloud radio access network (cloud RAN), an ultra-dense network, Device to Device communication (D2D), a wireless backhaul, a moving network, cooperative communication, Coordinated Multi-Points (CoMP), and received interference cancellation to improve the system network. In addition, the 5G system has developed Advanced Coding Modulation (ACM) schemes such as Hybrid FSK and QAM Modulation (FQAM) and Sliding Window Superposition Coding (SWSC), and advanced access technologies such as Filter Bank Multi Carrier (FBMC), non orthogonal multiple access (NOMA), and sparse code multiple access (SCMA).

Meanwhile, the Internet has been evolved to an Internet of Things (IoT) network in which distributed components such as objects exchange and process information from a human-oriented connection network in which humans generate and consume information. An Internet of Everything (IoE) technology in which a big data processing technology through a connection with a cloud server or the like is combined with the IoT technology has emerged. In order to implement IoT, technical factors such as a sensing technique, wired/wireless communication, network infrastructure, service interface technology, and security technology are required, and research on technologies such as a sensor network, Machine-to-Machine (M2M) communication, Machine Type Communication (MTC), and the like for connection between objects has recently been conducted. In an IoT environment, through collection and analysis of data generated in connected objects, an intelligent Internet Technology (IT) service to create a new value for peoples' lives may be provided. The IoT may be applied to fields such as those of a smart home, a smart building, a smart city, a smart car, a connected car, a smart grid, health care, a smart home appliance, or high-tech medical services through the convergence of the conventional Information Technology (IT) and various industries.

Accordingly, various attempts to apply the 5G communication to the IoT network are made. For example, the 5G communication technology, such as a sensor network, Machine to Machine (M2M) communication, and Machine Type Communication (MTC), has been implemented by a technique, such as beamforming, MIMO, and array antennas. The application of a cloud RAN as the big data processing technology described above may be an example of convergence of the 5G technology and the IoT technology.

Meanwhile, there has been research on a technology related to an efficient handover in connection with a next-generation mobile communication system.

Prior right EP 3 970 409 A1 discloses a method which relates to wireless communications, and more particularly, to handling header compression in scenarios with concurrent connections, such as make-before-break (MBB) handover or dual connectivity (DC) scenarios. Such a method of wireless communication performed by a user equipment (UE) can include concurrently communicating with a first base station (BS) on a connection with the first BS and with a second BS on a connection with the second BS during a handover procedure. The UE maintains a context for a header compression protocol for the connection with the first BS and the connection with the second BS. The concurrently communicating includes using the header compression protocol context for sending one or more packets, receiving one or more packets, or both. WO 2019/004396 A1 discloses an RRC reconfiguration method in the context of handovers as well as with respect to header compression.

### Disclosure of Invention

### Technical Problem

There is a need for a efficient handover method in order to support a service having a low level of transmission delay and having no data interruption in a next-generation mobile communication system. In addition, there is a need for a method for preventing a header decompression failure problem that may occur during a handover in a terminal or a base station.

### Solution to Problem

In order to solve the above-mentioned problems, a method performed by a base station is set out in claim 1 .

In addition, a method performed by a UE of a wireless communication system is set out in claim 3.

In addition, a base station associated with a first cell in a wireless communication system is set out in claim 5.

In addition, a UE for a wireless communication system is set out in claim 7. Preferred embodiments are set out in the dependent claims.

### Advantageous Effects of Invention

The disclosure proposes various efficient handover methods configured such that, when a handover is performed in a next-generation mobile communication system, no data interruption time occurs due to the handover, thereby supporting a service having no data interruption. In addition, the disclosure proposes methods for preventing a header decompression failure problem that may occur in a base station or a terminal when a handover is performed in a next-generation mobile communication system, thereby solving the problem of data loss or transmission delay due to a header decompression failure.

### Brief Description of Drawings

FIG. 1 illustrates the structure of an LTE system to which the disclosure can be applied;
FIG. 2 illustrates a radio protocol structure in an LTE system to which the disclosure can be applied;
FIG. 3 illustrates the structure of a next-generation mobile communication system to which the disclosure can be applied;
FIG. 4 illustrates a radio protocol structure of a next-generation mobile communication system to which the disclosure can be applied;
FIG. 5 illustrates a procedure in which a UE switches from an RRC idle mode to an RRC connected mode to establish a connection with a network in the disclosure;
FIG. 6 illustrates signaling procedures for performing handover in a next-generation mobile communication system;
FIG. 7 illustrates a first embodiment of an efficient handover method for minimizing data interruption time due to handover in the disclosure;
FIG. 8 illustrates a downlink or uplink original data (PDCP SDU)-based data duplicate transmission method applicable to handover proposed in the disclosure;
FIG. 9 illustrates an operation of a receiving PDCP layer device of a UE and a duplicate detection procedure when an original data-based data duplicate transmission method is not applied in the first embodiment of the efficient handover method proposed in the disclosure;
FIG. 10 illustrates an operation of a receiving PDCP layer device of a UE and a duplicate detection procedure when an original data-based data duplicate transmission method is applied in the first embodiment of the efficient handover method proposed in the disclosure;
FIG. 11 illustrates the operation of a UE that may be applied to the embodiments proposed in the disclosure;
FIG. 12 illustrates the structure of a UE to which an embodiment may be applied;
FIG. 13 illustrates a block configuration of a TRP in a wireless communication system to which an embodiment may be applied.
FIG. 14 illustrates a procedure in which a UE switches from an RRC idle mode to an RRC connected mode to establish a connection with a network in the disclosure;
FIG. 15 illustrates signaling procedures for performing handover in a next-generation mobile communication system;
FIG. 16 illustrates a header compression or decompression procedure when PDCP layer devices of a transmitting terminal and the receiving terminal use ROHC protocol in the handover procedure as shown in FIG. 15;
FIG. 17 illustrates a first embodiment in which a header decompression failure problem may occur for downlink data during handover in the disclosure;
FIG. 18 illustrates a second embodiment in which a header decompression failure problem may occur for downlink data during handover in the disclosure;
FIG. 19 illustrates another second embodiment in which a header decompression failure problem may occur for uplink data during handover in the disclosure;
FIG. 20 illustrates a third embodiment in which a header decompression failure problem may occur for downlink data during handover in the disclosure;
FIG. 21 illustrates another third embodiment in which a header decompression failure problem may occur for uplink data during handover in the disclosure;
FIG. 22 illustrates an operation of a UE proposed in the disclosure;
FIG. 23 shows the structure of a UE to which an embodiment of the disclosure may be applied; and
FIG. 24 shows a block configuration of TRP in a wireless communication system to which an embodiment of the disclosure may be applied.

### Mode for the Invention

Hereinafter, the operation principle of the disclosure will be described in detail in conjunction with the accompanying drawings. In the following description of the disclosure, a detailed description of known functions or configurations incorporated herein will be omitted when it may make the subject matter of the disclosure rather unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, a detailed description of known functions or configurations incorporated herein will be omitted when it may make the subject matter of the disclosure rather unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

In the following description, the disclosure uses terms and names defined in 3rd generation partnership project long term evolution (3GPP LTE) standards for the convenience of description. However, the disclosure is not limited by these terms and names, and may be applied in the same way to systems that conform other standards. In the disclosure, the term "eNB" may be interchangeably used with the term "gNB" for the convenience of description. That is, a base station described as "eNB" may refer to "gNB".

The disclosure proposes seamless handover methods capable of minimizing data interruption time due to handover or reducing the same to 0 ms in a next-generation mobile communication system.

Specifically, efficient handover methods proposed in the disclosure may have one or more of a plurality of features as follows.
- If a UE that transmits and receives data to or from a source base station (uplink or downlink data transmission/reception) through respective protocol layer devices of a plurality of first bearers (PHY layer devices, MAC layer devices, RLC layer devices, or PDCP layer devices) receives a handover command message (or an RRC reconfiguration message) from the source base station, the UE may configure new protocol layer devices of a plurality of second bearers corresponding to (for example, having the same bearer identifiers as) the protocol layer devices of the plurality of first bearers, and may maintain the transmission and reception of data (uplink or downlink data transmission/reception) to or from the source base station (without stopping the same) through the plurality of first bearers, thereby performing the transmission and reception of data (uplink or downlink data transmission/reception) .
- The protocol layer devices of the plurality of second bearers (PHY layer devices, MAC layer devices, RLC layer devices, or PDCP layer devices), which are newly configured after receiving the handover command message as described above, may be configured for performing data transmission or reception to or from a target base station, based on bearer configuration information or protocol layer device information included in the handover command message.
- The UE may perform a procedure of random access to a target base station through protocol layer devices of the plurality of second bearers (for example, MAC layer devices) while performing data transmission or reception to or from the source base station (uplink or downlink data transmission/reception) through the protocol layer devices of the plurality of first bearers. Here, the random access procedure may include transmitting a preamble, receiving a random access response, or transmitting message 3.
- The UE may complete a procedure of random access to the target base station through the protocol layer devices of the plurality of second bearers (for example, MAC layer devices) while performing data transmission or reception to or from the source base station (uplink and downlink data transmission and reception) through the protocol layer devices of the plurality of first bearers, and may transmit a handover completion message to the target base station through the protocol layer devices of the plurality of second bearers.
- In the above, when performing data transmission or reception to or from the source base station through the protocol layer devices of the plurality of first bearers, if the UE receives a first uplink transmission resource allocated by the target base station, the UE may receive downlink data through the protocol layer devices of the plurality of first bearers but may stop uplink data transmission, may switch uplink data transmission through the protocol layer devices of the plurality of second bearers (e.g., MAC layer devices) to thereby transmit uplink data to the target base station, and may receive downlink data from the target base station through the protocol layer devices of the plurality of second bearers (e.g., MAC layer devices).

In the following of the disclosure, efficient handover procedures with no data interruption time and low transmission delay are proposed based on the above characteristics.

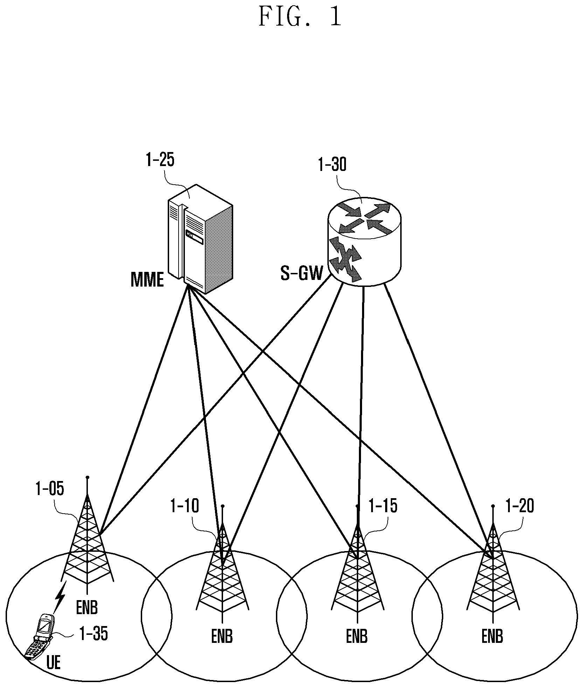

FIG. 1 illustrates the structure of an LTE system to which the disclosure can be applied.

Referring to FIG. 1, a radio access network of an LTE system includes next-generation base stations (also referred to as evolved node Bs, hereinafter eNBs, node Bs, or base stations) 1-05, 1-10, 1-15, and 1-20, a mobility management entity (MME) 1-25, and a serving gateway (S-GW) 1-30. A user equipment (hereinafter UE or terminal) 1-35 accesses an external network through the eNBs 1-05 to 1-20 and S-GW 1-30.

In FIG. 1, the eNBs 1-05 to 1-20 correspond to an existing node B of an UMTS system. The eNBs are connected to the UE 1-35 through a radio channel, and perform a more complicated role than the existing node B. In the LTE system, since all user traffic pertaining to real-time service, such as voice over IP (VoIP), via the Internet protocol, is serviced through a shared channel, a device that performs scheduling by collecting state information, such as buffer states, available transmit power states, and channel states of UEs, is required, and eNBs 1-05 to 1-20 are in charge of this function of the device. In general, one eNB controls multiple cells. For example, in order to implement a transmission rate of 100 Mbps, the LTE system uses orthogonal frequency division multiplexing (OFDM) as a radio access technology in the bandwidth of 20 MHz. In addition, the LTE system adopts an adaptive modulation & coding (hereinafter referred to as AMC) scheme for determining a modulation scheme and a channel coding rate based on the channel state of the UE. The S-GW 1-30 is a device for providing a data bearer and generating or removing a data bearer under the control of the MME 1-25. The MME is in charge of various control functions in addition to a mobility management function for the UE, and is connected to multiple base stations.

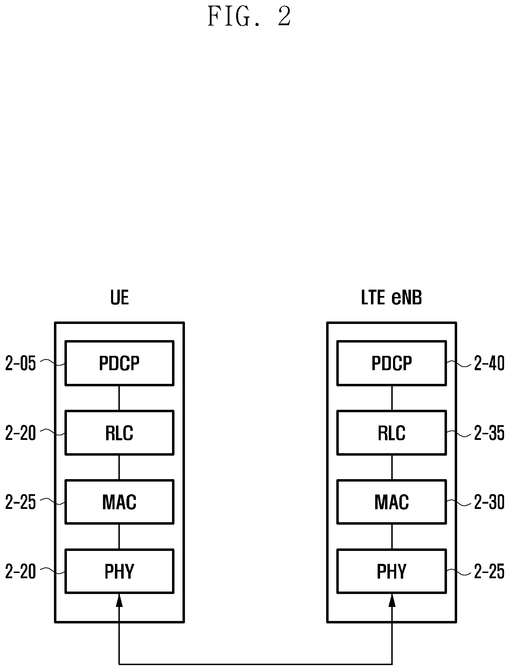

FIG. 2 illustrates a radio protocol structure in an LTE system to which the disclosure can be applied.

Referring to FIG. 2, the radio protocol of the LTE system includes packet data convergence protocols (PDCPs) 2-05 and 2-40, radio link controls (RLCs) 2-10 and 2-35, and medium access controls (MACs) 2-15 and 2-30, in a UE and an eNB, respectively. The packet data convergence protocols (PDCPs) 2-05 and 2-40 are used to perform operations, such as IP header compression/restoration. The main functions of PDCPs are summarized as follows.
- Header compression and decompression: ROHC only
- Transfer of user data
- In-sequence delivery of upper layer PDUs at PDCP re-establishment procedure for RLC acknowledged mode (AM)
- Sequence reordering (for split bearers in DC (only support for RLC AM) : PDCP PDU routing for transmission and PDCP PDU reordering for reception)
- Duplicate detection of lower layer service data units (SDUs) in a PDCP re-establishment procedure for RLC AM
- Retransmission of PDCP SDUs at handover and, for split bearers in DC, of PDCP PDUs at PDCP data-recovery procedure, for RLC AM)
- Ciphering and deciphering
- Timer-based SDU discard in uplink

The radio link control (hereinafter referred to as RLC) 2-10 and 2-35 performs ARQ operation by reconfiguring a PDCP protocol data unit (PDU) or RLC service data unit (SDU) to an appropriate size. The main functions of RLC are summarized below.
- Transfer of upper layer PDUs
- ARQ function (Error correction through ARQ (only for AM data transfer))
- Concatenation, segmentation and reassembly of RLC SDUs (only for unacknowledged mode (UM) and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MACs 2-15 and 2-30 are connected to multiple RLC layer devices configured in one UE, and may perform an operation of multiplexing RLC PDUs to MAC PDUs and demultiplexing RLC PDUs from MAC PDUs. The main functions of MACs are summarized as follows.
- Mapping between logical channels and transport channels
- Multiplexing/de-multiplexing of MAC SDUs belonging to one or different logical channels into/from transport blocks (TB) transferred to/from the physical layer on transport channels
- Scheduling information reporting
- Error correction through hybrid automatic repeat request (HARQ)
- Priority handling between logical channels of one UE
- Priority handling between UEs by means of dynamic scheduling
- MBMS service identification
- Transport format selection
- Padding

Physical layers 2-20 and 2-25 may perform operations of channel coding and modulating higher layer data, forming the higher layer data into an OFDM symbol, transmitting the OFDM symbol through a radio channel, or of demodulating an OFDM symbol received through a radio channel, channel-decoding the OFDM symbol, and transmitting the OFDM symbol to a higher layer.

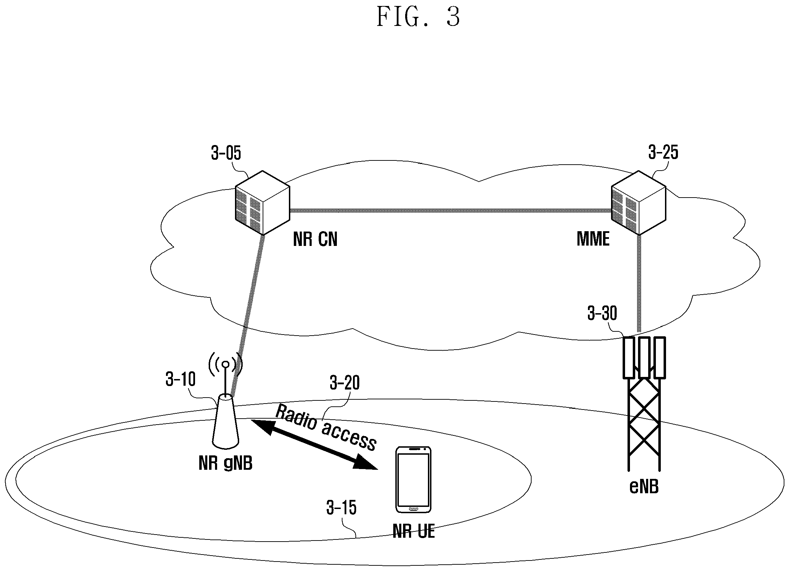

FIG. 3 illustrates the structure of a next-generation mobile communication system to which the disclosure can be applied.

Referring to FIG. 3, a radio access network of a next-generation mobile communication system (hereinafter referred to as NR or 5G) includes a new radio node B (hereinafter referred to as an NR gNB, or NR base station) 3-10 and a new radio core network (NR CN) 3-05. A user terminal (a new radio user equipment, hereinafter referred to as NR UE or a UE) 3-15 accesses an external network via an NR gNB 3-10 and an NR CN 3-05.

In FIG. 3, the NR gNB 3-10 corresponds to an evolved node B (eNB) of the existing LTE system. The NR gNB is connected to the NR UE 3-15 via a radio channel, and may provide an excellent service as compared to the existing node B. In the next-generation mobile communication system, since all types of user traffics are serviced through a shared channel, there is a need for a device for performing scheduling by collecting state information, such as buffer states, available transmission power states, and channel states of UEs. Further, the NR NB 3-10 is in charge of this function of the device. In general, one NR gNB typically controls multiple cells. In order to implement ultra-high speed data transmission as compared to the existing LTE, the NR gNB may have the existing maximum bandwidth or more, and may additionally employ beamforming technology using orthogonal frequency division multiplexing (hereinafter referred to as OFDM) as a radio access technology. In addition, the NR gNB adopts an adaptive modulation & coding (AMC) scheme that determines a modulation scheme and a channel coding rate based on the channel state of a UE. The NR CN 3-05 performs functions, such as mobility support, bearer configuration, QoS configuration, and the like. The NR CN is a device that is in charge of various control functions in addition to a mobility management function for a UE, and is connected to multiple base stations. In addition, the next-generation mobile communication system may also operate in conjunction with the existing LTE system, and the NR CN may be connected to an MME 3-25 via a network interface. The MME is connected to an eNB 3-30, that is, to the existing base station.

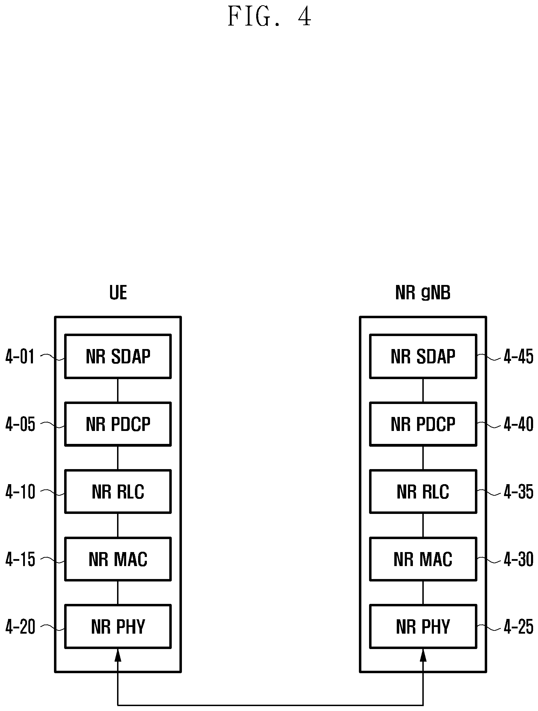

FIG. 4 illustrates a radio protocol structure of a next-generation mobile communication system to which the disclosure can be applied.

Referring to FIG. 4, the radio protocol of the next-generation mobile communication system includes NR SDAPs 4-01 and 4-45, NR PDCPs 4-05 and 4-40, NR RLCs 4-10 and 4-35, and NR MACs 4-15 and 4-30, respectively, in a UE and an NR base station.

The main functions of the NR SDAPs 4-01 and 4-45 may include some of the following functions.
- Transfer of user plane data
- Mapping between a QoS flow and a data bearer (DRB) for both downlink (DL) and uplink (UL)
- Marking QoS flow ID in both DL and UL packets
- Mapping reflective QoS flow to DRB for the UL SDAP PDUs

For the SDAP layer device, the UE may be configured as to whether or not use the header of the SDAP layer device (or new layer device) or the function of the SDAP layer device (or new layer device) for each PDCP layer device, for each bearer, and for each logical channel through an RRC message. When the SDAP header is configured, an NAS reflective QoS reflective configuration 1-bit indicator (NAS reflective QoS) and an AS QoS reflective configuration 1-bit indicator (AS reflective QoS) of the SDAP header are used to instruct the UE to enable updating or reconfiguration of the mapping information relating to the QoS flow of uplink and downlink and data bearer. The SDAP header may include QoS flow ID information indicating QoS. The QoS information may be used as data processing priority, scheduling information, etc., in order to support a smooth service.

The main functions of the NR PDCPs 4-05 and 4-40 may include some of the following functions.
- Header compression and decompression (ROHC only)
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The reordering function of the NR PDCP device refers to a function of sequentially reordering PDCP PDUs, received from a lower layer, based on a PDCP sequence number (SN), and may include a function of transmitting data to a higher layer in the reordered sequence, a function of directly transmitting data to a higher layer without taking the sequence into consideration, a function of reordering the sequence and recording missing PDCP PDUs, a function of providing a state report on the missing PDCP PDUs to a transmission side, and a function of requesting retransmission of the missing PDCP PDUs.

The main functions of the NR RLCs 4-10 and 4-35 may include some of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery function of the NR RLC device refers to a function of transmitting RLC SDUs, which are received from a lower layer, to a higher layer in a sequence of reception, and may include, if one RLC SDU is originally segmented into multiple RLC SDUs and received, a function of reassembling and transmitting the multiple RLC SDUs. The in-sequence delivery function may include a function of reordering the received RLC PDUs based on an RLC SN or PDCP SN, reordering the sequence, and recording missing RLC PDUs, providing a state report on the missing RLC PDUs to a transmission side, and requesting retransmission of the missing RLC PDUs. Alternatively, the in-sequence delivery function of the NR RLC device may include a function of sequentially transmitting only RLC SDUs prior to the missing RLC SDU to a higher layer if an RLC SDU is missing, or sequentially transmitting all the RLC SDUs received before a timer starts to a higher layer if the timer expires even if there is a missing RLC SDU, or sequentially transmitting all RLC SDUs received so far to a higher layer if a predetermined timer expires even if there is a missing RLC SDU. In addition, the RLC PDUs may be processed in a sequence in which the RLC PDUS are received (in a sequence of arrival regardless of the serial number or sequence number), and may be transmitted to a PDCP device in out-of-sequence delivery. The in-sequence delivery function may include a function of receiving segments stored in a buffer or segments to be received later, reconfiguring the segments in one complete RLC PDU, processing the RLC PDU, and transmitting the RLC PDU to the PDCP device. The NR RLC layer may not include a concatenation function, and the concatenation function may be performed by the NR MAC layer, or may be replaced by a multiplexing function of the NR MAC layer.

The out-of-sequence delivery function of the NR RLC device refers to a function of directly transmitting the RLC SDUs, received from the lower layer, to a higher layer regardless of the order thereof, and may include, if one RLC SDU has been originally segmented into multiple RLC SDUs and received, a function of reassembling the multiple RLC SDUs and transmitting the same, and a function of storing the RLC SNs or PDCP SNs of the received RLC PDUs, reordering the sequence, and recording the missing RLC PDUs.

The NR MACs 4-15 and 4-30 may be connected to multiple NR RLC layer devices configured in one UE, and the main function of the NR MAC may include some of the following functions.
- Mapping between logical channels and transport channels
- Multiplexing/de-multiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layers 4-20 and 4-25 may perform operations of channel-coding and modulating higher layer data, forming the higher layer data into an OFDM symbol, transmitting the OFDM symbols via a radio channel or demodulating and channel decoding of the OFDM symbols received via the radio channel, and transferring the OFDM symbol to a higher layer.

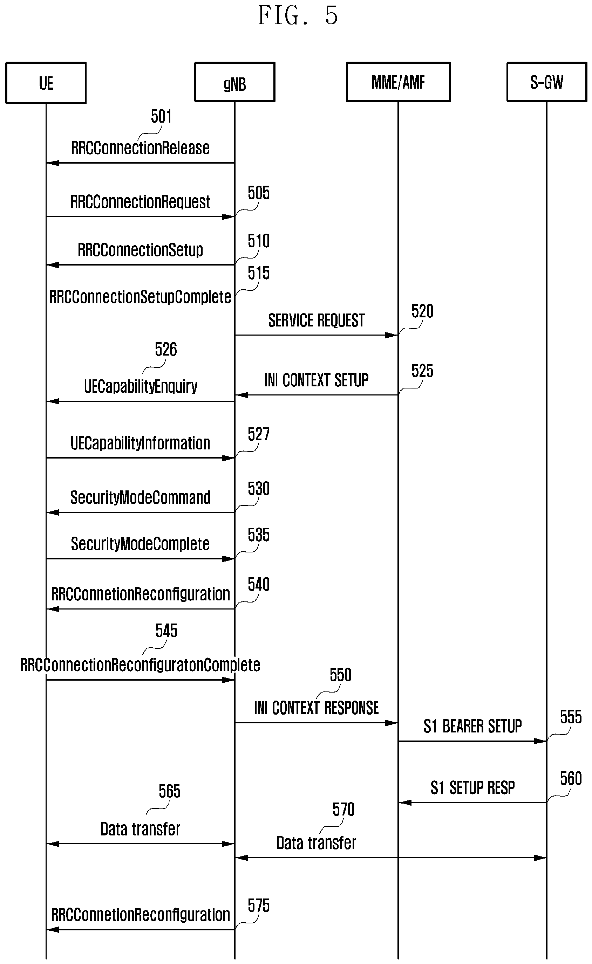

FIG. 5 illustrates a procedure in which a UE switches from an RRC idle mode to an RRC connected mode to establish a connection with a network in the disclosure.

In FIG. 5, when a UE for performing data transmission or reception in the RRC connected mode does not perform data transmission or reception for a predetermined reason or for a predetermined period of time, a base station may transmit an RRCConnectionRelease message to the UE to allow the UE to be switched to an RRC idle mode (indicated by reference numeral 5-01). Subsequently, a UE (hereinafter, idle mode UE), to which a connection is not currently established, may perform an RRC connection establishment process with the base station if there is data to be transmitted. The UE establishes reverse transmission synchronization with the base station through a random access process and transmits the RRCConnectionRequest message to the base station (indicated by reference numeral 5-05). The message may include a cause (establishmentCause) for establishing a connection with an identifier of the UE. The base station may transmit an RRCConnectionSetup message so that the UE establishes an RRC connection (indicated by reference numeral 5-10).

The message includes configuration information for each service/bearer/each RLC device, for each logical channel, or for each bearer, information on whether or not to use ROHC for each bearer/logical channel, ROHC configuration information (e.g., ROHC version, initial information, etc.), statusReportRequired information (information through which the base station instructs the UE to perform the PDCP Status report), or drb-ContinueROHC information (which is configuration information for maintaining and using the ROHC configuration information as it is, and may be included in PDCP layer device configuration information (pdcp-config) and then be transmitted). In addition, the message may include RRC connection setup information and the like. A bearer for RRC connection is also referred to as a signaling radio bearer (SRB) and is used for transmitting or receiving an RRC message, which is a control message between a UE and a base station.

A UE, which has established an RRC connection, may transmit an RRCConnetionSetupComplete message to the base station (indicated by reference numeral 5-15). The message includes a control message called SERVICE REQUEST, which the UE requests a bearer setup for a predetermined service from an MME. The base station may transmit the SERVICE REQUEST message stored in the RRCConnetionSetupComplete message to the MME or AMF (indicated by reference numeral 5-20). The MME or AMF determines whether to provide a service requested by the UE. As a result of the determination, if the UE determines to provide the requested service, the MME or AMF may transmit an INITIAL CONTEXT SETUP REQUEST message to the base station (indicated by reference numeral 5-25). The message includes information, such as quality of service (QoS) information to be applied in a case where a data radio bearer (DRB) is configured and security-related information (for example, a security key and a security algorithm) to be applied to the DRB.

In addition, when the base station fails to receive capability information of the UE from the MME or the AMF, the base station may transmit a UE capability information request message to the UE in order to identify the capability information of the UE (indicated by reference numeral 5-26). Upon receiving the UE capability information request message, the UE may configure and generate a UE capability information message and report the UE capability information message to the base station (indicated by reference numeral 5-27). The UE capability information message may include the type of handover methods supported by the UE. For example, an indicator for each handover method may be defined in the UE capability information report message, and handover methods supported by the UE may be indicated by the indicator, to thereby whether each handover method is supported may be reported to the base station. When the base station identifies the UE capability information, the base station may configure, for the UE, a handover method to be indicated by considering the reported UE capability by using an indicator, which is defined for each handover method in a handover command message (e.g., RRCReconfiguration message), when instructing the UE to perform handover. The UE may perform a handover procedure to a target base station according to a handover method indicated in the handover command message.

The base station exchanges a SecurityModeCommand message (indicated by reference numeral 5-30) and a SecurityModeComplete message (indicated by reference numeral 5-35) in order to establish security with the UE. If the security configuration is completed, the base station may transmit an RRCConnectionReconfiguration message to the UE (indicated by reference numeral 5-40).

The message includes configuration information for each service/bearer/each RLC device, for each logical channel, or for each bearer, information on whether or not to use ROHC for each bearer/logical channel, ROHC configuration information (e.g., ROHC version, initial information, etc.), statusReportRequired information (information indicating that the base station instructs the UE to perform the PDCP Status report), or drb-ContinueROHC information (which is configuration information for maintaining and using the ROHC configuration information as it is and may be included in the PDCP layer device configuration information and then be transmitted (pdcp-config)). In addition, the message may include RRC connection setup information and the like. A bearer for RRC connection is also referred to as a signaling radio bearer (SRB) and is used for transmitting or receiving an RRC message, which is a control message between a UE and a base station.

In addition, the message includes configuration information of a DRB in which user data is to be processed, and the UE configures the DRB by applying the information and transmits an RRCConnectionReconfigurationComplete message to the base station (indicated by reference numeral 5-45). The base station, which has completed DRB setup with the UE, transmits an INITIAL CONTEXT SETUP COMPLETE message to the MME or AMF (indicated by reference numeral 5-50), and the MME or AMF, which has received the INITIAL CONTEXT SETUP COMPLETE message, may exchange an S1 BEARER SETUP message and an S1 BEARER SETUP RESPONSE message in order to establish the S-GW and S1 bearer (indicated by reference numerals 5-055 and 5-60). The S1 bearer is a connection for data transmission, established between the S-GW and the base station, and corresponds to the DRB in a one-to-one relationship. When the above process is completed, the UE transmits or receives data through S-GW to or from the base station (indicated by reference numerals 5-65 and 5-70). As such, the general data transmission process may largely include three operations of: RRC connection setup, security configuration, and DRB configuration. In addition, the base station may transmit an RRCConnectionReconfiguration message to the UE in order to perform updating, adding, or changing of a configuration (indicated by reference numeral 5-75).

In the disclosure, a bearer may include SRB and DRB, the SRB denotes a signaling radio bearer, and the DRB denotes a data radio bearer. The SRB is mainly used to transmit or receive RRC messages of an RRC layer device, and the DRB is mainly used to transmit or receive user layer data. In addition, a UM DRB denotes a DRB which uses an RLC layer device operating in an unacknowledged mode (UM mode), and an AM DRB denotes a DRB which uses an RLC layer device operating in an acknowledged mode (AM mode).

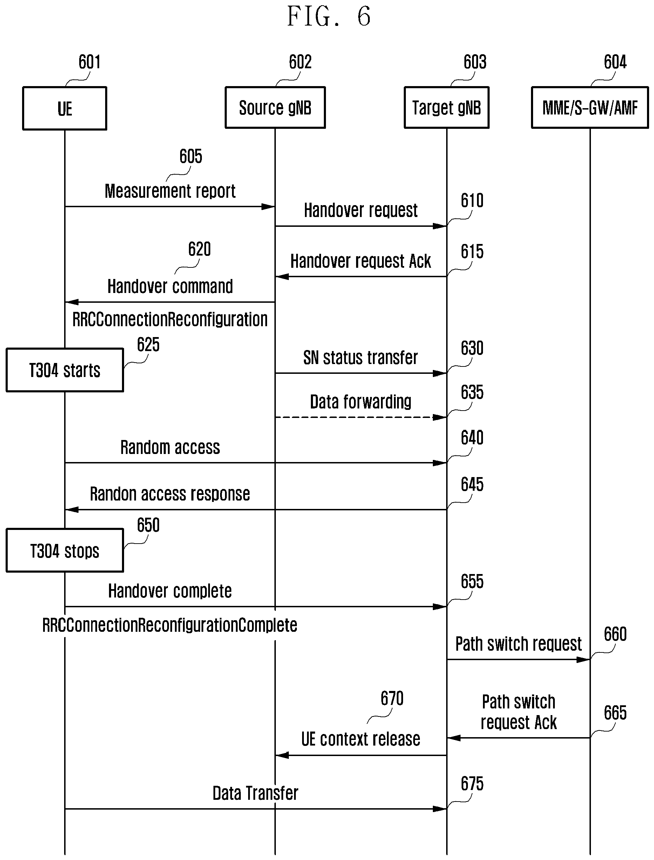

FIG. 6 illustrates signaling procedures for performing handover in a next-generation mobile communication system.

A UE 6-01 in the RRC connected mode reports cell measurement information (measurement Report) to a current source base station 6-02 when a periodic or specific event is satisfied (indicated by reference numeral 6-05). The source base station determines whether the UE performs handover to an adjacent cell based on the measurement information. The handover is technology for switching a source base station, which provides a service to the connected-mode UE, to another base station (or another cell of the same base station). When the source base station determines to perform the handover, the source base station transmits a handover (HO) request message to a new base station, that is, a target base station 6-03 to provide a service to the UE and make a request for the handover (indicated by reference numeral 6-10).

The HO request message may include a handover method supported or preferred by the source base station or multiple handover methods, or may include an indicator for requesting a handover method preferred by the target base station according to another method.

When the target base station accepts the handover request, the target base station transmits a handover request acknowledgement (HO request Ack) message to the source base station (indicated by reference numeral 6-15) .

The HO request Ack message may include a handover method, which the source base station includes in the handover request message or a handover method, which is supported by (or preferred or instructed by) the target base station, and the source base station may indicate, to the UE, a handover method indicated by the target base station through the HO request Ack message. As another method, the target base station may indicate the handover method, supported by the target base station through the HO request Ack message, using an indicator, so that the source base station and the UE perform the indicated handover method.

Upon receiving the message, the source base station transmits a handover (HO) command message to the UE (indicated by reference numeral 6-20). The HO command message is transmitted to the UE by the source base station by using an RRC Connection Reconfiguration message (indicated by reference numeral 6-20).

By using an indicator, which is defined for each handover method in the handover command message (e.g., the RRCReconfiguration message), the base station may configure, for the UE, a handover method indicated by considering the UE capability. The UE may perform a handover procedure to the target base station according to the handover method indicated through the handover command message.

Upon receiving the message, the UE stops data transmission or reception to or from the source base station and starts a T304 timer. When the handover of the UE to the target base station is not successful for a predetermined time, T304 returns the UE to the original configuration and switches the UE to the RRC idle state. The source base station transmits a sequence number (SN) status for uplink/downlink data, and if there is downlink data, the source base station transmits the downlink data to the target base station (indicated by reference numerals 6-30 and 6-35). The UE attempts random access to the target cell indicated by the source base station (indicated by reference numeral 6-40). The random access is to inform the target cell that the UE moves through the handover and also to synchronize uplink. For the random access, the UE transmits a preamble corresponding to a preamble ID received from the source base station or a randomly selected preamble ID to the target cell. After transmitting the preamble, the UE monitors whether a random access response (RAR) is transmitted from the target cell after a predetermined number of subframes. A time window during which monitoring is performed is referred to as a random access response (RAR) window. When the RAR is received for a particular time in operation 6-45, the UE transmits a handover (HO) complete message, which is an RCConnectionReconfigurationComplete message, to the target base station in operation 6-55. As described above, upon successfully receiving the RAR from the target base station, the UE terminates the timer T304 in operation 6-50. In order to switch a path of bearers established in the source base station, the target base station makes a request for switching the path in operations 6-60 and 6-65, and notifies the source base station of deletion of UE context in operation 6-70. Accordingly, the UE attempts data reception from the target base station at a RAR window start time point, and after RAR reception, starts data transmission or reception to or from the target base station while transmitting an RRCConnectionReconfigurationComplete message.

The disclosure proposes seamless handover methods capable of minimizing data interruption time due to handover or reducing the same to 0 ms in the next-generation mobile communication system. Further, in order to minimize transmission delay that may occur during handover, the disclosure proposes a downlink or uplink packet (e.g., PDCP SDU) duplication processing method.

The UE establishes a plurality of first bearers with respect to the source base station, and may perform data transmission or reception (uplink or downlink data transmission or reception) through respective protocol layer devices (PHY layer device, MAC layer device, RLC layer device, or PDCP layer device) of each bearer. Further, the UE establishes a plurality of second bearers with the target base station, and may perform data transmission or reception (uplink or downlink data transmission or reception) through respective protocol layer devices (PHY layer device, MAC layer device, RLC layer device, or PDCP layer device) of each bearer. Therefore, in the disclosure, for convenience of description, it may be assumed that the UE has set up one bearer, but this does not limit the scope of the disclosure.

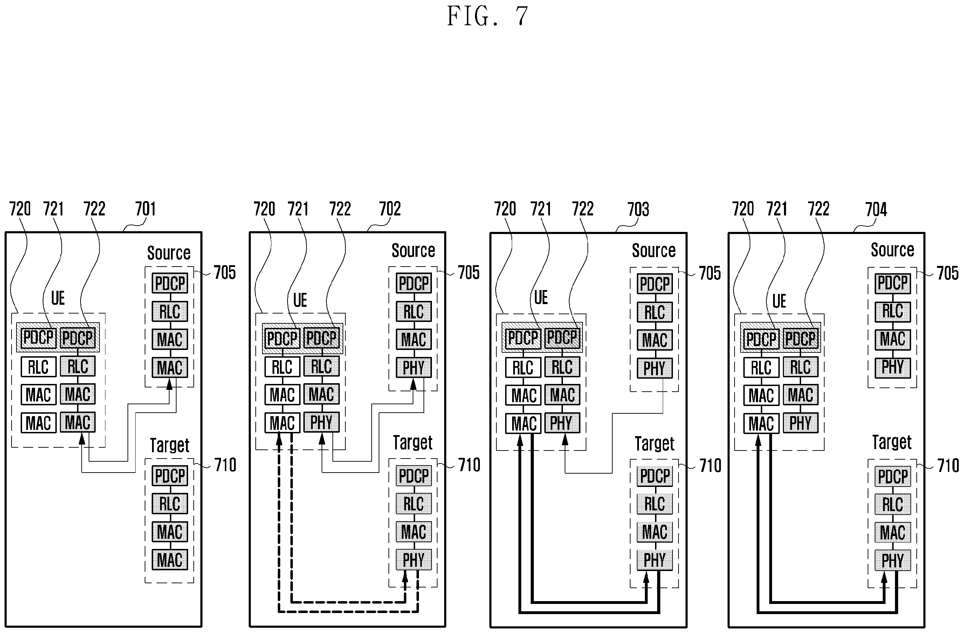

FIG. 7 illustrates a first embodiment of an efficient handover method for minimizing data interruption time due to handover in the disclosure.

In FIG. 7, when the UE identifies an indicator indicating the improved handover method through the handover command message or an indicator indicating the handover method of the first embodiment proposed in the disclosure, the UE may apply the method of the following first embodiment of the disclosure.

In first operation 7-01 of the first embodiment of the efficient handover method of FIG. 7, even if the UE 7-20 receives a handover command message from a source base station 7-05 while performing data transmission or reception to or from the source base station, the UE may continue to perform data transmission or reception to or from the source base station through protocol layer devices 7-22 of the first bearer in order to minimize data interruption time that occurs during handover.

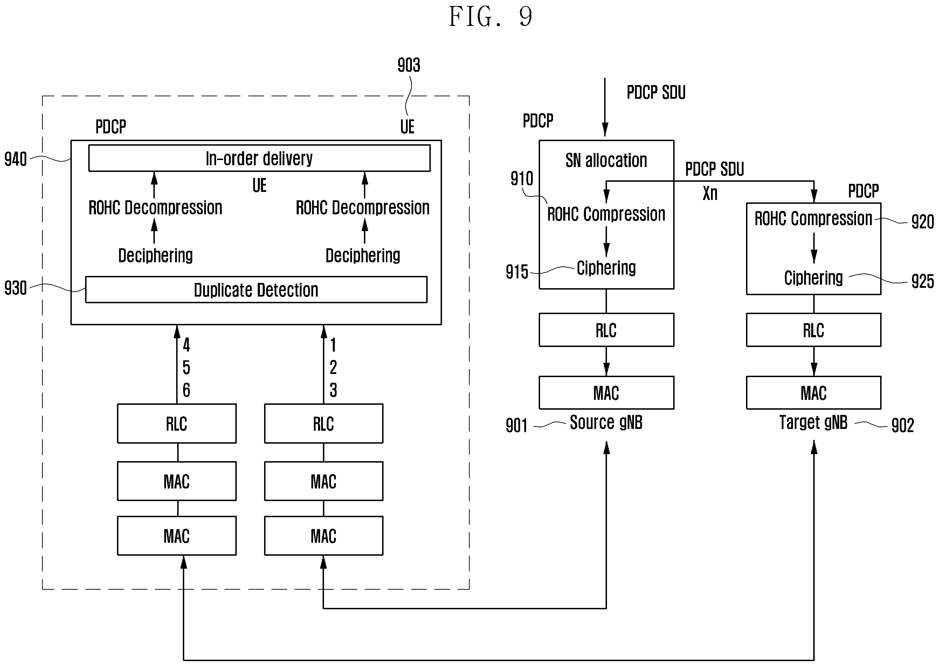

In addition, according to the configuration included in the received handover command message above, the UE may preconfigure or establish protocol layer devices (PHY layer device, MAC layer device, RLC layer device, or PDCP layer device) 7-21 of the second bearer for the target base station. The second bearer may be configured and established to have the same bearer identifier or logical channel identifier as that of the first bearer so that data interruption time does not occur for each bearer. Further, in the first embodiment, the PDCP layer device of the first bearer and the PDCP layer device of the second bearer may logically operate as a single PDCP layer device, and a more detailed operation method will be described with reference to FIG. 9. The layer devices of the first bearer (or a first RLC layer device) and the layer devices of the second bearer (or a second RLC layer device) for a single PDCP layer device are distinguished by considering that they are connected to different MAC layer devices, by allowing them to have different logical channel identifiers, by considering that they are different RLC layer devices connected to different MAC layer devices, or based on that they use different ciphering keys, and uplink data and downlink data may be ciphered or deciphered using different security keys, and may be compressed or decompressed using different compression protocol contexts.

In addition, in the first embodiment, in a case where the UE is allowed to transmit uplink data both to the source base station and to the target base station, there may be a problem with reduction in coverage due to insufficient transmission power of the UE or with determination of the base station to which a request for a transmission resource is to be made and uplink data is to be transmitted when transmitting uplink data (link selection problem). In order to prevent the above problem, the UE may transmit uplink data to only one of the source base station and the target base station in the first embodiment. That is, according to the uplink data transmission in the first embodiment of the improved handover method proposed by the disclosure, the UE may not perform uplink data transmission to different base stations at the same time, and when the first condition is satisfied while performing uplink data transmission to the source base station, the UE may perform switching from the source base station to the target base station to perform uplink data transmission to the target base station. Therefore, the UE may make a request for scheduling to only one of the source base station and the target base station, may report the size of pieces of data to be transmitted in the PDCP layer device (e.g., a buffer status report (BSR)) to only one of the source base station and the target base station, may receive an uplink transmission resource, and may then transmit uplink data to only one base station. In addition, even if the UE receives a handover command message from the source base station, the UE may continue transmission or reception of data due to HARQ retransmission in order to prevent loss of data, and thus may not initialize a MAC layer device of the first bearer.

In second operation 7-02 of the first embodiment of the efficient handover method of FIG. 7, even when the UE 7-20 performs a procedure of random access to the target base station 7-10 indicated by the handover command message through the protocol layer devices of the second bearer, the UE may continuously perform data transmission or reception (uplink data transmission and downlink data reception) to or from the source base station through the protocol layer devices of the first bearer.

In third operation 7-03 of the first embodiment of the efficient handover method of FIG. 7, when the first condition is satisfied, the UE 7-20 may stop performing uplink data transmission to the source base station through the protocol layer devices 7-22 of the first bearer, and may transmit uplink data to the target base station through the protocol layer devices 7-21 of the second bearer. In addition, the UE may continuously receive downlink data from the source base station and the target base station through the protocol layer devices of the first bearer and the second bearer. In addition, the PDCP layer device 7-21 of the second bearer may continue to perform the seamless transmission or reception of data to or from the target base station using transmission/reception data, serial number information, information such as header compression and decompression contexts, or security key information, which are stored in the PDCP layer device 7-22 of the first bearer, and may receive and process downlink data from the source base station.

The first condition in which the UE switches uplink data transmission from the source base station to the target base station in the third operation 7-03 is as follows.
- When the UE performs a procedure of random access to the target base station through the layer devices of the second bearer, receives a random access response, configures and transmits a handover completion message to the target base station, and receives an uplink transmission resource that is initially allocated by the target base station, or receives an initial indication of an uplink transmission resource)
- If the specific condition is extended based on the above conditions, when the UE successfully completes a procedure of random access to the target base station through the layer devices of the second bearer, and receives an uplink transmission resource initially allocated by the target base station, or receives an initial indication of an uplink transmission resource
   ■ When the UE receives a handover command message from the source base station and is instructed to perform random access to the target base station, and if the indicated random access is contention-free random access (CFRA) (for example, if a predetermined preamble or a UE cell identifier (e.g., C-RNTI) is allocated)
   ◆ The UE may determine that the random access procedure is successfully completed when the UE transmits a predetermined preamble to the cell of the target base station and receives a random access response (RAR) message. Further, the UE may determine that the first condition is satisfied when the UE receives a first uplink transmission resource allocated, included, or indicated in the random access response message.
   ■ When the UE receives a handover command message from the source base station and is instructed to perform random access to the target base station, and if the indicated random access is contention-based random access (CBRA) (for example, if a predetermined preamble or a UE cell identifier (e.g., C-RNTI) is not allocated)
   ◆ The UE may determine that the procedure of random access to the target base station is successfully completed when the UE transmits a preamble (e.g., a random preamble) to the cell of the target base station, receives a random access response (RAR) message, transmits message 3 (e.g., a handover completion message) using the uplink transmission resource allocated, included, or indicated in the random access response message, and receives a MAC CE (contention resolution MAC CE) indicating that the contention has been resolved from the target base station. Thereafter, the UE may determine that the first condition is satisfied when the UE monitors a PDCCH and initially receives an uplink transmission resource through the PDCCH corresponding to the C-RNTI of the UE or initially receives an indication thereof. As another method, if the size of the uplink transmission resource allocated by the random access response message is sufficient enough for the UE to transmit message 3 and additionally transmit uplink data, the UE may determine that an initial uplink transmission resource has been received, thereby determining that the first condition is satisfied.
- In a case where a handover method that does not require a random access procedure (RACH-less handover) is indicated by the handover command message received by the UE
   ■ If the handover command message includes an uplink transmission resource with regard to the target base station
   ◆ The UE may determine that the random access procedure is successfully completed when the UE transmits message 3 (e.g., a handover completion message or an "RRCReconfigurationComplete" message) using the uplink transmission resource of the target base station and receives a UE identity confirmation MAC CE from the base station, thereby determining that the first condition is satisfied. As another method, when the UE receives a first uplink transmission resource through a PDCCH corresponding to a C-RNTI of the UE by monitoring the PDCCH after a random access procedure is successfully completed, the UE may determine that the first condition is satisfied.
   ■ If the handover command message does not include an uplink transmission resource for the target base station
   ◆ When the UE receives an uplink transmission resource through a PDCCH corresponding to a C-RNTI of the UE by monitoring the PDCCH for the target base station (or cell), or when the UE transmits message 3 (e.g., a handover completion message or an "RRCReconfigurationComplete" message) using the uplink transmission resource and receives a UE identity confirmation MAC CE from the base station, the UE may determine that the random access procedure is successfully completed, thereby determining that the first condition is satisfied. As another method, when the UE receives a first uplink transmission resource through a PDCCH corresponding to a C-RNTI of the UE by monitoring the PDCCH after a random access procedure is successfully completed, the UE may determine that the first condition is satisfied.

In the above, when the UE receives downlink data from the source base station and the target base station through the protocol layer devices of the first bearer and the second bearer, in order to facilitate reception of downlink data from the source base station (or the target base station) or facilitate the source base station (or the target base station) to transmit downlink data to the UE, the UE may, with regard to AM bearers, allow an RLC status report to be transmitted to the source base station (or the target base station) in uplink through the protocol layer devices of the first bearer (or the second bearer). This is due to the fact that if an RLC status report of successful delivery is not indicated (that is, if the RLC status report is not received) after the AM bearers transmit data to a transmitting terminal, the AM bearers are unable to continue to transmit data thereafter. In addition, even if the UE stops transmitting uplink data to the source base station through the protocol layer devices of the first bearer because the first condition is satisfied, and starts transmission of uplink data to the target base station through the protocol layer devices 7-21 of the second bearer, in order to facilitate reception of downlink data from the source base station (or the target base station) or facilitate the source base station (or the target base station) to transmit downlink data, the UE may allow, with regard to AM bearers, continuous transmission of HARQ ACK, HARQ NACK information, RLC control data (for example, ACK or NACK information of RLC status report), or PDCP control data (for example, a PDCP status report or ROHC feedback information) through the protocol layer devices of the first bearer (or the second bearer). In addition, even if the UE stops transmitting uplink data to the source base station through the protocol layer devices of the first bearer because the first condition is satisfied, and starts transmission of uplink data to the target base station through the protocol layer devices of the second bearer, the UE may continue transmission of data due to retransmission of HARQ of a MAC layer device or transmission of data due to retransmission of an RLC layer device in an AM mode in order to prevent loss of data to the source base station. In a case where the UE stops transmitting uplink data to the source base station through the protocol layer devices of the first bearer because the first condition is satisfied, and starts transmission of uplink data to the target base station through the protocol layer devices of the second bearer, the source base station or the target base station may allocate transmission resources to the UE by dividing time such that the uplink transmission resource to the target base station and the uplink transmission resource to the source base station do not overlap each other. If the uplink transmission resource to the target base station overlaps the uplink transmission resource to the source base station, the UE may prioritize the uplink transmission resource to the source base station in order to maintain transmission of downlink data from the source base station, thereby performing data transmission to the source base station. As another method, if the uplink transmission resource to the target base station overlaps the uplink transmission resource to the source base station, the UE may prioritize the uplink transmission resource to the target base station in order to maintain transmission of downlink data from the target base station, thereby performing data transmission to the target base station.

In a case where the efficient handover of the disclosure is indicated when the UE receives a handover command message, the UE may perform scheduling request through a first protocol layer device until the first condition is satisfied, may transmit a buffer status report to the source base station, may receive an uplink transmission resource, may transmit uplink data, and may receive downlink data from the source base station. However, if the first condition is satisfied, the UE may no longer transmit data to the source base station, may switch the uplink to perform scheduling request through the second protocol layer device, may transmit a buffer status report to the target base station, may receive an uplink transmission resource, and may transmit uplink data to the target base station. However, the UE may continue to receive downlink data from the source base station, and may continue to transmit HARQ ACK, HARQ NACK, an RLC status report, or PDCP control data (for example, a PDCP status report or ROHC feedback information) corresponding to the downlink data. The UE may also receive downlink data from the target base station if the first condition is satisfied.

In fourth operation 7-04 of the first embodiment of the efficient handover method of FIG. 7, the UE 7-20 may stop receiving downlink data from the source base station 7-05 through the protocol layer devices 7-22 of the first bearer if a second condition is satisfied. In the above, the second condition may include one of the following conditions.
- When the UE performs a procedure of random access to the target base station through the layer devices of the second bearer and receives a random access response
- When the UE performs a procedure of random access to the target base station through the layer devices of the second bearer, receives a random access response, and configures and transmits a handover completion message to the target base station
- When the UE completes a procedure of random access to the target base station through the layer devices of the second bearer and initially transmits data using a PUCCH or PUSCH uplink transmission resource
- When the base station configures a separate timer for the UE through an RRC message and the timer expires
   ■ The timer may start when the UE receives a handover command message from the source base station, when the UE starts random access to the target base station (when transmitting a preamble), when the UE receives a random access response from the target base station, when the UE transmits a handover completion message to the target base station, or when the UE initially transmits data using a PUCCH or PUSCH uplink transmission resource.
- When the UE performs a procedure of random access to the target base station through the layer devices of the second bearer, receives a random access response, and configures and transmits a handover completion message to the target base station and when the successful transmission of the handover completion message is identified by a MAC layer device (HARQ ACK) or an RLC layer device (RLC ACK)
- When the UE performs a procedure of random access to the target base station through the layer devices of the second bearer, receives a random access response, configures and transmits a handover completion message to the target base station, and then receives an uplink transmission resource that is initially allocated by the target base station, or receives an initial indication of an uplink transmission resource
- When the UE performs a procedure of random access to the target base station through the layer devices of the second bearer, receives a random access response, configures and transmits a handover completion message to the target base station, and then receives an uplink transmission resource that is initially allocated by the target base station, transmits data using the uplink transmission resource, or identifies successful transmission of the transmitted data
- The source base station may determine the time to stop transmitting the downlink data to the UE or the time to release the connection with the UE, based on a predetermined method (for example, when a predetermined timer expires (the timer may start after indication of handover) or when an indication indicating that the UE has successfully performed the handover to the target base station is received from the target base station). In addition, if no downlink data is received from the source base station for a predetermined period of time, the UE may determine that the connection with the source base station is released, and may release the connection.
- When the UE receives, from the target base station, an indication (e.g., an RRC message (e.g., an "RRCReconfiguration" message), a MAC CE, an RLC control PDU, or a PDCP control PDU to release the connection with the source base station
- When the UE receives, from the source base station, an indication (e.g., an RRC message (e.g., an "RRCReconfiguration" message), a MAC CE, an RLC control PDU, or a PDCP control PDU to release the connection with the source base station
- When the UE fails to receive downlink data from the source base station for a predetermined period of time
- If the specific condition is extended based on the above conditions, when the UE successfully completes a procedure of random access to the target base station through the layer devices of the second bearer, and receives a first uplink transmission resource allocated by the target base station, or receives an initial indication of an uplink transmission resource
   ■ If the UE receives a handover command message from the source base station and is instructed to perform random access to the target base station, and if the indicated random access is contention-free random access (CFRA) (for example, if a predetermined preamble or a UE cell identifier (e.g., C-RNTI) is allocated)
   ◆ The UE may determine that the random access procedure is successfully completed when the UE transmits a predetermined preamble to the cell of the target base station and receives a random access response (RAR) message. Further, when the UE receives a first uplink transmission resource allocated, included, or indicated in the random access response message, the UE may determine that the second condition is satisfied.
   ■ If the UE receives a handover command message from the source base station and is instructed to perform random access to the target base station, and if the indicated random access is contention-based random access (CBRA) (for example, if a predetermined preamble or a UE cell identifier (e.g., C-RNTI) is not allocated)
   ◆ The UE may determine that the procedure of random access to the target base station is successfully completed when the UE transmits a preamble (e.g., a random preamble) to the cell of the target base station, receives a random access response (RAR) message, transmits message 3 (e.g., a handover completion message) using the uplink transmission resource allocated, included, or indicated in the random access response message, and receives a MAC CE (contention resolution MAC CE) indicating that the contention has been resolved from the target base station. Thereafter, when the UE monitors a PDCCH and initially receives an uplink transmission resource through the PDCCH corresponding to the C-RNTI of the UE or initially receives an indication thereof, the UE may determine that the second condition is satisfied. As another method, if the size of the uplink transmission resource allocated by the random access response message is sufficient enough for the UE to transmit message 3 and additionally transmit uplink data, the UE may determine that an initial uplink transmission resource has been received, thereby determining that the second condition is satisfied.
- In a case where a handover method that does not require a random access procedure (RACH-less handover) is indicated by the handover command message received by the UE
   ■ If the handover command message includes an uplink transmission resource to the target base station
   ◆ The UE may determine that the random access procedure is successfully completed when the UE transmits message 3 (e.g., a handover completion message or an "RRCReconfigurationComplete" message) using the uplink transmission resource of the target base station and receives a UE identity confirmation MAC CE from the base station, thereby determining that the second condition is satisfied. As another method, when the UE receives a first uplink transmission resource through a PDCCH corresponding to a C-RNTI of the UE by monitoring the PDCCH after a random access procedure is successfully completed, the UE may determine that the second condition is satisfied.
   ■ If the handover command message does not include an uplink transmission resource for the target base station
- When the UE receives an uplink transmission resource through a PDCCH corresponding to a C-RNTI of the UE by monitoring the PDCCH for the target base station (or cell), or when the UE transmits message 3 (e.g., a handover completion message or an "RRCReconfigurationComplete" message) using the uplink transmission resource and receives a UE identity confirmation MAC CE from the base station, the UE may determine that the random access procedure is successfully completed, thereby determining that the second condition is satisfied. As another method, when the UE receives a first uplink transmission resource through a PDCCH corresponding to a C-RNTI of the UE by monitoring the PDCCH after a random access procedure is successfully completed, the UE may determine that the second condition is satisfied.

In the above, when the source base station transmits downlink data to the UE and then fails to receive HARQ ACK or NACK information for the downlink data from the UE, it may be determined that the UE stops receiving downlink data from the source base station. In another method, the UE transmits the newly defined MAC control information, RLC control information, PDCP control information, or RRC message to the source base station in uplink so as to indicate no longer reception of downlink data from the source base station or release of a connection with the source base station.

In addition, the PDCP layer device 7-21 of the second bearer may continue to perform the seamless data transmission or reception to or from the target base station using information such as transmission/reception data, serial number information, header compression and decompression contexts, or the like, which are stored in the PDCP layer device 7-22 of the first bearer.

In the disclosure, when transmitting the handover command message to the UE, the base station may define indicators for the embodiments proposed in the disclosure, and may indicate, to the UE, the handover procedure corresponding to a specific embodiment to be triggered through the handover command message (e.g., an RRCReconfiguration message). The UE may perform a handover procedure according to the handover method indicated by the handover command message, thereby performing handover to the target base station while minimizing data interruption time. As another method, the indicators for the embodiments proposed by the disclosure may be defined for each bearer through the handover command message. The base station may indicate more specifically the embodiment and the bearer to which handover is applied using the handover command message. For example, the embodiments may be applied only to an AM bearer in which an RLC layer device is driven in an AM mode, or may be extendedly applied to a UM bearer in which an RLC layer device is driven in a UM mode. In addition, it is assumed that the embodiments proposed in the disclosure are applied to the DRBs. However, if necessary (for example, when the UE maintains an SRB for the source base station and fails to perform handover to the target base station, thereby reporting a handover failure message or recovering the same through the SRB for the source base station), the embodiments proposed in the disclosure may be extendedly applied to the SRB.

In the embodiments of the disclosure, for the convenience of description, it has been described that the UE has configured the first bearer for the source base station or the second bearer for the target base station, and the embodiments may be easily extended and applied, in the same manner, to a case where the UE has configured multiple first bearers for the source base station or multiple second bearers for the target base station. As another method, the embodiments of the disclosure may be readily extended and applied, in the same manner, to a case where multiple bearers are configured for multiple target base stations. For example, the UE may configure second bearers while performing a procedure of handover to a first target base station, and if the handover is unsuccessful, the UE may configure second bearers while performing a procedure of handover to a second target base station. Accordingly, the UE may search for and determine cells, which satisfy a predetermined condition (for example, a predetermined signal strength or more), among the plurality of target base stations, and may determine to perform the handover procedure in one cell.

Meanwhile, in the first embodiment of the efficient handover method for minimizing data interruption time due to handover in the disclosure, it may be difficult for the source base station to know exactly when the UE stops receiving downlink data. Accordingly, the possibility of loss of downlink data transmitted by the source base station to the UE increases, and a lot of data may be lost. In a case of RLC AM mode, although loss of data as described above may be recovered due to retransmission of the PDCP layer device (e.g., a PDCP re-establishment procedure or a PDCP data recovery procedure) during handover, transmission delay may occur. In addition, in a case of RLC UM mode, there is no method of recovering loss of data as described above.

Accordingly, the disclosure proposes a data duplicate transmission method applicable to a source base station and a target base station in order to prevent transmission delay or data loss that may occur during handover as described above.

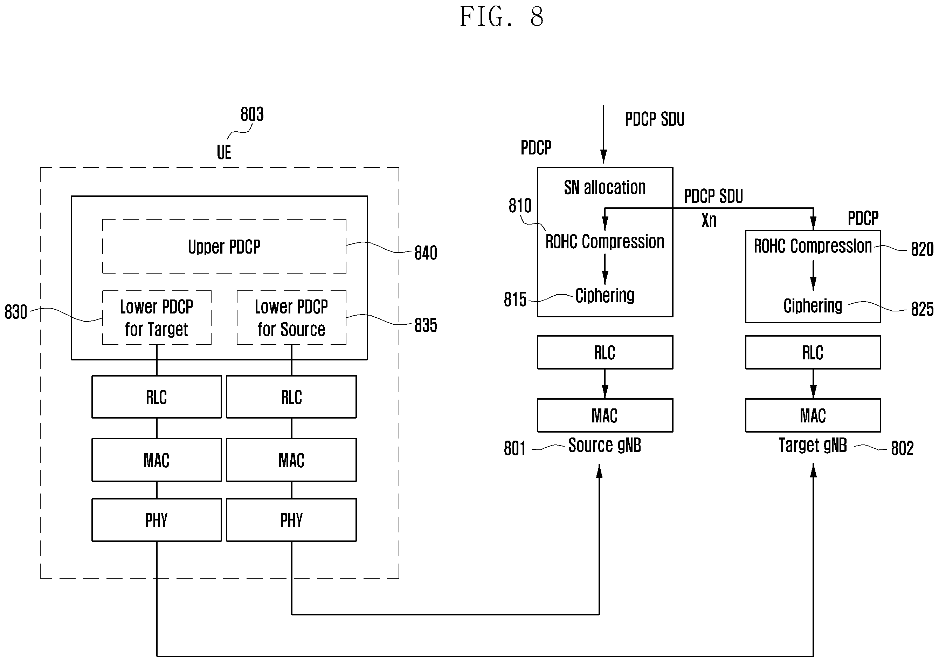

FIG. 8 illustrates a downlink or uplink original data (PDCP SDU)-based data duplicate transmission method applicable to handover proposed in the disclosure.

The data duplicate transmission method proposed in FIG. 8 is characterized in that original data (PDCP SDU)-based data duplicate transmission is used. Specifically, the source base station and the target base station may transmit the same data as the original data once from the source base station and once from the target base station to perform duplicate transmission. When the source base station transmits the original data (PDCP SDU), the header compression procedure of the original data is performed by applying a header compression protocol context 8-10 of the source base station, and the integrity protection or ciphering procedure of the original data (or the compressed original data) may be performed by applying a security key of the source base station (indicated by reference numeral 8-15). On the other hand, when the target base station transmits the original data (PDCP SDU), the header compression procedure of the original data is performed by applying the header compression protocol context of the target base station (indicated by reference numeral 8-20), and the integrity protection or ciphering procedure of the original data (or the compressed original data) may be performed by applying a security key of the target base station (indicated by reference numeral 8-25). With regard to the original data, the source base station and the target base station may transmit different pieces of data (PDCP PDU), generated by performing each data processing in each PDCP layer device, to the UE.

Therefore, if the UE receives the different pieces of data (PDCP PDU), in a case of data received from the source base station, the UE may perform a deciphering or integrity verification procedure using a security key configured in the source base station (indicated by reference numeral 8-35), and may perform header decompression using a header compression protocol context configured with the source base station (indicated by reference numeral 8-35) and configure original data. In a case of data received from the target base station, the UE may perform a deciphering or integrity verification procedure using a security key configured in the target base station (indicated by reference numeral 8-30), and may perform header decompression using a header compression protocol context configured with the target base station (indicated by reference numeral 8-30), configure original data, and transfer the original data to an upper layer device. That is, the two PDCP PDUs transmitted above are different data, but the PDCP SDU generated through data processing of the receiving PDCP layer device may be the same data.

In addition, in the above, the UE may simultaneously receive downlink data from the source base station and the target base station, may perform the deciphering, integrity verification, or header decompression procedure for downlink data from the source base station by using a security key or header compression for the source base station in reference numeral 8-35, may perform the deciphering, integrity verification, or header decompression procedure for downlink data from the target base station by using a security key or header compression for the target base station in reference numeral 8-30, and then may perform a function of arranging the PDCP SDUs for which data processing has been completed through the above procedure in the ascending order of the COUNT values or PDCP serial numbers and then sequentially transferring the PDCP SDUs to the upper layer in reference numeral 8-40.

The original data (PDCP SDU)-based data duplicate transmission method proposed in the disclosure may be instructed to the UE by defining a new indicator in a handover command message (e.g., RRCReconfiguration message), and the original data-based data duplicate transmission method or the efficient handover method of the first embodiment may be indicated by separately defining an indicator for each downlink or uplink, and may also be indicated by separately defining an indicator for each bearer, for each PDCP layer device, or for each logical channel. If an indicator is defined for each bearer when defining a new indicator in the handover command message, the original data-based data duplicate transmission method or the efficient handover method of the first embodiment may be applied to a specific service (e.g., only for a specific bearer or PDCP layer device sensitive to transmission delay).

In FIG. 8, the UE may perform data transmission or reception to or from the source base station through the protocol layer devices of the first bearer, and may simultaneously perform data transmission or reception to or from the target base station through the protocol layer devices of the second bearer.

In the above, although the PDCP layer device of the first bearer and the PDCP layer device of the second bearer may be configured in the UE, respectively, they can logically operate as a single PDCP layer device as shown in FIG. 8. Specifically, the one PDCP layer device may be implemented as an upper PDCP layer device and two lower PDCP layer devices for the source base station and the target base station, respectively, by dividing the functions of the PDCP layer device.

In the above, the upper transmitting PDCP layer device may perform allocation of PDCP serial numbers to pieces of data received from the upper layer device. Further, the upper transmitting PDCP layer device may perform header compression. In addition, when integrity protection is configured using separate security keys set for the source base station and the target base station, two lower transmission PDCP layer devices for respective ones of the source base station and the target base station may apply the integrity protection procedure to the PDCP header and data (PDCP SDU), may apply a ciphering procedure thereto, and may transmit the same to the transmitting RLC layer device of the first bearer or the transmitting RLC layer device of the second bearer to perform transmission. The two lower transmission PDCP layer devices may perform parallel data processing of performing header compression, integrity protection, or ciphering procedure in parallel to accelerate data processing speed, and may perform the integrity protection or ciphering procedure using different security keys. In addition, the integrity protection or ciphering procedure may be performed on different data in logically one transmitting PDCP layer device using different security keys or security algorithms.

The upper receiving PDCP layer device may perform a duplicate detection function on the data received from lower layer devices, based on PDCP serial numbers. Alternatively, the upper receiving PDCP layer device may sort the received data in ascending order of the PDCP serial numbers, and may transmit the same to the upper layer in sequence. In addition, the upper receiving PDCP layer device may perform header decompression. Further, when integrity protection is configured using separate security keys set for the source base station and the target base station, two lower receiving PDCP layer devices for respective ones of the source base station and the target base station may apply an integrity verification procedure to the PDCP header and data (PDCP SDUs), may apply a deciphering procedure thereto, and may transmit the same to the upper receiving PDCP layer device, thereby processing the data. In order to reduce unnecessary integrity verification or deciphering procedures, the two lower receiving PDCP layer devices may perform a procedure of driving a window, discarding data outside the window, and discarding duplicate data, based on the PDCP serial numbers, and may perform the integrity verification or deciphering procedure only on the valid data inside the window. In order to accelerate a data processing rate, the two lower transmitting PDCP layer devices may perform parallel data processing in which header compression, integrity protection, and ciphering procedures are performed in parallel, based on the PDCP serial numbers, and may perform the integrity protection verification or deciphering procedure using different security keys. In addition, the integrity protection or ciphering procedure may be performed on different data in logically one transmitting PDCP layer device using different security keys or security algorithms. Further, the lower receiving PDCP layer devices may perform an out-of-sequence deciphering or integrity verification procedure for each piece of data received regardless of the sequence of the PDCP serial numbers.

The upper PDCP layer device and the lower PDCP layer device may be considered as a single PDCP layer device, and the one receiving or transmitting PDCP layer device distinguishes the layer devices of the first bearer (or first RLC layer device) and the layer devices of the second bearer (or second RLC layer device) by considering that they are connected to different MAC layer devices, by allowing them to have different logical channel identifiers, by considering that they are different RLC layer devices connected to different MAC layer devices, or based on that they use different ciphering keys, and uplink data and downlink data may be ciphered or deciphered using different security keys, and may be compressed or decompressed using different compression protocol contexts.

When the efficient handover method (e.g., dual active protocol stack (DAPS)) proposed in the disclosure may be indicated to the UE through a handover command message, if a fourth condition below is satisfied for each bearer, the UE may convert, change, or reconfigure the PDCP layer device, which is used for each bearer before the handover command message is received, into the efficient PDCP layer device proposed in FIG. 8, and may apply the same. The fourth condition may be one or more of the following conditions.
- In a case where the UE receives, from the source base station, a handover command message that indicates to perform efficient handover proposed in the disclosure or indicates the method of applying the efficient PDCP layer device structure proposed in FIG. 8,
- When the UE performs a procedure of random access to the target base station through the layer devices of the second bearer and receives a random access response
- When the UE performs a procedure of random access to the target base station through the layer devices of the second bearer, receives a random access response, and configures and transmits a handover completion message to the target base station
- When the UE completes a procedure of random access to the target base station through the layer devices of the second bearer and initially transmits data using a PUCCH or PUSCH uplink transmission resource
- When the base station configures a separate timer for the UE through an RRC message and the timer expires
   ■ The timer may start when the UE receives a handover command message from the source base station, when the UE starts random access to the target base station (when transmitting a preamble), when the UE receives a random access response from the target base station, when the UE transmits a handover completion message to the target base station, or when the UE initially transmits data using a PUCCH or PUSCH uplink transmission resource.
- when the UE performs a p0rocedure of random access to the target base station through the layer devices of the second bearer, receives a random access response, and configures and transmits a handover completion message to the target base station and then when the successful transmission of the handover completion message is identified by a MAC layer device (HARQ ACK) or an RLC layer device (RLC ACK)
- When the UE performs a procedure of random access to the target base station through the layer devices of the second bearer, receives a random access response, configures and transmits a handover completion message to the target base station, and then receives an uplink transmission resource that is initially allocated by the target base station, or receives an initial indication of an uplink transmission resource
- If describing specific conditions based on the above conditions, when the UE successfully completes a procedure of random access to the target base station through the layer devices of the second bearer, and receives a first uplink transmission resource allocated by the target base station, or receives an indication of a first uplink transmission resource
   ■ If the UE receives a handover command message from the source base station and is instructed to perform random access to the target base station, and if the indicated random access is contention-free random access (CFRA) (for example, if a predetermined preamble or a UE cell identifier (e.g., C-RNTI) is allocated)
   ◆ The UE may determine that the random access procedure is successfully completed when the UE transmits a predetermined preamble to the cell of the target base station and receives a random access response (RAR) message. Further, when the UE receives a first uplink transmission resource allocated, included, or indicated in the random access response message, the UE may determine that the fourth condition is satisfied.
   ■ If the UE receives a handover command message from the source base station and is instructed to perform random access to the target base station, and if the indicated random access is contention-based random access (CBRA) (for example, if a predetermined preamble or a UE cell identifier (e.g., C-RNTI) is not allocated)
   ◆ The UE may determine that the procedure of random access to the target base station is successfully completed when the UE transmits a preamble (e.g., a random preamble) to the cell of the target base station, receives a random access response (RAR) message, transmits message 3 (e.g., a handover completion message) using the uplink transmission resource allocated, included, or indicated in the random access response message, and receives a MAC CE (contention resolution MAC CE) indicating that the contention has been resolved from the target base station. Thereafter, when the UE monitors a PDCCH and initially receives an uplink transmission resource through the PDCCH corresponding to the C-RNTI of the UE or initially receives an indication thereof, the UE may determine that the fourth condition is satisfied. As another method, if the size of the uplink transmission resource allocated by the random access response message is sufficient enough for the UE to transmit message 3 and additionally transmit uplink data, the UE may determine that an initial uplink transmission resource has been received, thereby determining that the fourth condition is satisfied.
- In a case where a handover method that does not require a random access procedure (RACH-less handover) is indicated by the handover command message received by the UE
   ■ If the handover command message includes an uplink transmission resource to the target base station
   ◆ The UE may determine that the random access procedure is successfully completed when the UE transmits message 3 (e.g., a handover completion message or an "RRCReconfigurationComplete" message) using the uplink transmission resource of the target base station and receives a UE identity confirmation MAC CE from the base station, thereby determining that the fourth condition is satisfied. As another method, when the UE receives a first uplink transmission resource through a PDCCH corresponding to a C-RNTI of the UE by monitoring the PDCCH after a random access procedure is successfully completed, the UE may determine that the fourth condition is satisfied.
   ■ If the handover command message does not include an uplink transmission resource for the target base station
   ◆ when the UE receives an uplink transmission resource through a PDCCH corresponding to a C-RNTI of the UE by monitoring the PDCCH for the target base station (or cell), or when the UE transmits message 3 (e.g., a handover completion message or an "RRCReconfigurationComplete" message) using the uplink transmission resource and receives a UE identity confirmation MAC CE from the base station, the UE may determine that the random access procedure is successfully completed, thereby determining that the fourth condition is satisfied. As another method, when the UE receives a first uplink transmission resource through a PDCCH corresponding to a C-RNTI of the UE by monitoring the PDCCH after a random access procedure is successfully completed, the UE may determine that the fourth condition is satisfied.

In addition, when the efficient handover proposed in the disclosure is indicated to the UE by a handover command message, if the fourth condition is satisfied for each bearer, the UE may convert, change, or reconfigure the PDCP layer device, which is used for each bearer before the handover command message is received, into the efficient PDCP layer device proposed in FIG. 8, and may apply the same. Further, if a fifth condition below is satisfied, the UE may stop receiving downlink data from the source base station, may convert, change, or reconfigure the PDCP layer device for each bearer into the efficient PDCP layer device proposed in FIG. 8, or may reconvert, re-change, or reapply the structure of the reconfigured PDCP layer device into the PDCP layer device used for each bearer before the handover command message is received. The fifth condition may be one or more of the following conditions.
- When the UE performs a procedure of random access to the target base station through the layer devices of the second bearer and receives a random access response
- When the UE performs a procedure of random access to the target base station through the layer devices of the second bearer, receives a random access response, and configures and transmits a handover completion message to the target base station
- When the UE completes a procedure of random access to the target base station through the layer devices of the second bearer and initially transmits data using a PUCCH or PUSCH uplink transmission resource
- When the base station configures a separate timer for the UE through an RRC message and the timer expires
   ■ The timer may start when the UE receives a handover command message from the source base station, when the UE starts random access to the target base station (when transmitting a preamble), when the UE receives a random access response from the target base station, when the UE transmits a handover completion message to the target base station, or when the UE initially transmits data using a PUCCH or PUSCH uplink transmission resource.
- When the UE performs a procedure of random access to the target base station through the layer devices of the second bearer, receives a random access response, and configures and transmits a handover completion message to the target base station and when the successful transmission of the handover completion message is identified by a MAC layer device (HARQ ACK) or an RLC layer device (RLC ACK)
- When the UE performs a procedure of random access to the target base station through the layer devices of the second bearer, receives a random access response, configures and transmits a handover completion message to the target base station, and receives an uplink transmission resource that is initially allocated by the target base station, or receives an initial indication of an uplink transmission resource
- When the UE receives, from the target base station, an indication (e.g., an RRC message (e.g., an "RRCReconfiguration" message), a MAC CE, an RLC control PDU, or a PDCP control PDU) to release the connection with the source base station
- When the UE receives, from the source base station, an indication (e.g., an RRC message (e.g., an "RRCReconfiguration" message), a MAC CE, an RLC control PDU, or a PDCP control PDU) to release the connection with the source base station
- When the UE fails to receive downlink data from the source base station for a predetermined period of time
- If extending specific conditions based on the above conditions, when the UE successfully completes a procedure of random access to the target base station through the layer devices of the second bearer, and receives an uplink transmission resource initially allocated by the target base station, or receives an initial indication of an uplink transmission resource
   ■ If the UE receives a handover command message from the source base station and is instructed to perform random access to the target base station, and if the indicated random access is contention-free random access (CFRA) (for example, if a predetermined preamble or a UE cell identifier (e.g., C-RNTI) is allocated)
   ◆ The UE may determine that the random access procedure is successfully completed when the UE transmits a predetermined preamble to the cell of the target base station and receives a random access response (RAR) message. Further, when the UE receives a first uplink transmission resource allocated, included, or indicated in the random access response message, the UE may determine that the fifth condition is satisfied.
   ■ If the UE receives a handover command message from the source base station and is instructed to perform random access to the target base station, and if the indicated random access is contention-based random access (CBRA) (for example, if a predetermined preamble or a UE cell identifier (e.g., C-RNTI) is not allocated)
   ◆ The UE may determine that the procedure of random access to the target base station is successfully completed when the UE transmits a preamble (e.g., a random preamble) to the cell of the target base station, receives a random access response (RAR) message, transmits message 3 (e.g., a handover completion message) using the uplink transmission resource allocated, included, or indicated in the random access response message, and receives a MAC CE (contention resolution MAC CE) indicating that the contention has been resolved from the target base station. Thereafter, when the UE monitors a PDCCH and initially receives an uplink transmission resource through the PDCCH corresponding to the C-RNTI of the UE or initially receives an indication thereof, the UE may determine that the fifth condition is satisfied. As another method, if the size of the uplink transmission resource allocated by the random access response message is sufficient enough for the UE to transmit message 3 and additionally transmit uplink data, the UE may determine that an initial uplink transmission resource has been received, thereby determining that the fifth condition is satisfied.
- In a case where a handover method that does not require a random access procedure (RACH-less handover) is indicated by the handover command message received by the UE
   ■ If the handover command message includes an uplink transmission resource to the target base station
   ◆ The UE may determine that the random access procedure is successfully completed when the UE transmits message 3 (e.g., a handover completion message or an "RRCReconfigurationComplete" message) using the uplink transmission resource of the target base station and receives a UE identity confirmation MAC CE from the base station, thereby determining that the fifth condition is satisfied. As another method, when the UE receives a first uplink transmission resource through a PDCCH corresponding to a C-RNTI of the UE by monitoring the PDCCH after a random access procedure is successfully completed, the UE may determine that the fifth condition is satisfied.
   ■ If the handover command message does not include an uplink transmission resource for the target base station
   ◆ When the UE receives an uplink transmission resource through a PDCCH corresponding to a C-RNTI of the UE by monitoring the PDCCH for the target base station (or cell), or when the UE transmits message 3 (e.g., a handover completion message or an "RRCReconfigurationComplete" message) using the uplink transmission resource and receives a UE identity confirmation MAC CE from the base station, the UE may determine that the random access procedure is successfully completed, thereby determining that the fifth condition is satisfied. As another method, when the UE receives a first uplink transmission resource through a PDCCH corresponding to a C-RNTI of the UE by monitoring the PDCCH after a random access procedure is successfully completed, the UE may determine that the fifth condition is satisfied.

As another method, if the fifth condition is satisfied, the UE may stop receiving downlink data from the source base station, may release the RLC layer device or the MAC layer device, which is the first protocol layer device, and may apply and use the structure of the efficient PDCP layer device proposed in FIG. 8 according to each bearer.

It should be noted that the data duplication procedure proposed in the disclosure is a data duplicate transmission method based on original data (PDCP SDU) rather than a data duplicate transmission method based on processed data (PDCP PDU). In addition, the structure in which the UE receives downlink data from the source base station and the target base station can be extended and applied even when the original data-based data duplication procedure is not applied.

The data duplicate transmission method based on the original data (PDCP SDU) proposed in the disclosure may be extended and applied to the uplink data transmission method. Specifically, the UE may transmit the same data as the original data once to the source base station and transmit the same once to the target base station, thereby performing duplicate transmission. The original data (PDCP SDU) is processed by one PDCP layer device, and when transmitting to the source base station, the header compression procedure of the original data is performed by applying the header compression protocol context of the source base station (indicated by reference numeral 8-35), and the integrity protection or ciphering procedure of the original data (or the compressed original data) may be performed by applying a security key of the source base station (indicated by reference numeral 8-35). On the other hand, when transmitting the original data (PDCP SDU) to the target base station, the header compression procedure of the original data is performed by applying the header compression protocol context of the target base station (indicated by reference numeral 8-30), and the integrity protection or ciphering procedure of the original data (or the compressed original data) may be performed by applying a security key of the target base station (indicated by reference numeral 8-30). With regard to the original data, the UE may transmit different pieces of data (PDCP PDU), generated by performing each data processing thereof in one PDCP layer device, to the source base station and the target base station.

Therefore, if the source base station and the target base station receive the different pieces of data (PDCP PDU), in a case of data received from the source base station, the source base station may perform a deciphering or integrity verification procedure of the received data by using a security key configured in the source base station (indicated by reference numeral 8-15), and may perform header decompression using a header compression protocol context of the source base station (indicated by reference numeral 8-10) and configure original data. The target base station may perform a deciphering or integrity verification procedure of the received data using a security key of the target base station in the PDCP layer device of the target base station (indicated by reference numeral 8-25), and may perform header decompression using a header compression protocol context of the target base station (indicated by reference numeral 8-20), configure original data, and transfer the original data to an upper layer device. That is, the two PDCP PDUs transmitted above are different data, but the PDCP SDU generated through data processing of the receiving PDCP layer device may be the same data.

When the first embodiment of the efficient handover method proposed above of the disclosure is applied, the first method for performing a duplicate detection procedure by a receiving PDCP layer device (UE or base station) is as follows.

FIG. 9 illustrates an operation of a receiving PDCP layer device of a UE and a duplicate detection procedure when an original data-based data duplicate transmission method is not applied in the first embodiment of the efficient handover method proposed in the disclosure.

In FIG. 9, the UE may simultaneously receive downlink data from a source base station and a target base station in one PDCP layer device 9-40, and may perform the deciphering, integrity verification, or header decompression procedure for downlink data from the source base station by using a security key or header compression for the source base station. Further, the UE may perform the deciphering, integrity verification, or header decompression procedure for downlink data from the target base station by using a security key or header compression for the target base station, and then may perform a function of arranging the PDCP SDUs for which data processing has been completed through the above procedure in the ascending order of the COUNT values or PDCP serial numbers and then sequentially transferring the PDCP SDUs to the upper layer.

The first method 9-30 of the duplicate detection procedure proposed in the disclosure above is characterized in that regardless of whether pieces of data received in the receiving PDCP layer device are received from the source base station or the target base station, when data having the previously received PDCP serial number or COUNT value with reference to the PDCP serial number or COUNT value is received, a duplicate detection procedure may be performed after discarding the data.

A detailed operation of the receiving PDCP layer device of the first method for performing the duplicate detection procedure is as follows.

If the receiving PDCP layer device has previously received a COUNT value corresponding to the currently received data in the duplicate detection procedure, and has previously successfully received data corresponding to the COUNT value, the receiving PDCP layer device may determine that duplicate detection has occurred and allow the received data to be discarded, thereby performing a duplicate detection procedure. The successful reception of data in the above may be understood as that the integrity verification has been successfully performed on the data corresponding to the COUNT value when the data corresponding to the COUNT value has been processed and stored in the buffer, when the data is received and processed, and delivered to the upper layer device, when the data has been transmitted to the upper layer device and discarded, or when the integrity protection and verification procedure is configured. That is, since it may be determined that the data has not been successfully received when pieces of data received due to an attack by a hacker fails to verify the integrity, normal data may not be discarded in the duplicate detection procedure.

If the PDCP PDU is received from the lower layer, the receiving PDCP layer device determines the COUNT value of the received PDCP PDU as follows.
- 1> If the received RCVD_SN is RCVD_SN <= SN(RX_DELIV) - Window_Size
   ■ 2> Update to RCVD_HFN = HFN(RX_DELIV) + 1.
- 1> otherwise, if RCVD_SN is RCVD_SN > SN(RX_DELIV) + Window_Size
   ■ 2> update to RCVD_HFN = HFN(RX_DELIV) - 1.
- 1> If not,
   ■ 2> Update to RCVD_HFN = HFN(RX_DELIV).
- 1> RCVD -COUNT is determined as RCVD_COUNT = [RCVD_HFN, RCVD_SN].

After determining the COUNT value of the received PDCP PDU, the receiving PDCP layer device updates the window state variables as follows and processes the PDCP PDU.
- 1> Deciphering is performed on the PDCP PDU using the RCVD_COUNT value, and integrity verification is performed therefor.
   ■ 2> If integrity verification fails
   ■ 2> Provide an indication of integrity verification failure to a higher layer and discard the received PDCP data PDU (data part of the PDCP PDU).
- 1> if RCVD COUNT < RX_DELIV
- 1> or if a PDCP PDU having a value of RCVD_COUNT has been successfully received before
   ■ 2> Discard the received PDCP Data PDU (data part of the PDCP PDU) .

If the received PDCP PDU is not discarded, the receiving PDCP layer device operates as follows.
- 1> The PDCP SDU processed above is stored in the reception buffer.
- 1> if RCVD COUNT >= RX_NEXT
   ■ 2> Update RX_NEXT to RCVD_COUNT + 1.
- 1> If an outOfOrderDelivery is configured (if out of order delivery operation is indicated),
   ■ 2> The PDCP SDU is transmitted to a higher layer.
- 1> If RCVD_COUNT is equal to RX_DELIV
   ■ 2> The above pieces of data are transmitted to a higher layer in the order of COUNT value.
      ◆ 3> Beginning with COUNT = RX_DELIV value, all consecutive PDCP SDUs are transmitted to a higher layer.
   ■ 2> Update the RX_DELIV value to the COUNT value of the first PDCP SDU, which has a count value greater than or equal to the current RX_DELIV and is not transmitted to a higher layer.
- 1> If the t-Reordering timer is running and the RX_DELIV value is greater than or equal to RX_REORD,
   ■ 2> Stop and reset the t-Reordering timer.
- 1> If the t-Reordering timer is not running (including a stopped case under the above conditions) and RX_DELIV is smaller than RX_NEXT,
   ■ 2> Update RX_REORD value to RX_NEXT.
   ■ 2> Start the t-Reordering timer.

Another specific operation of the receiving PDCP layer device of the first method for performing the duplicate detection procedure in the above is as follows.

If the receiving PDCP layer device has previously received the COUNT value corresponding to the currently received data in the duplicate detection procedure, and has previously successfully received the data corresponding to the COUNT value (when the integrity protection and verification procedure is configured, if the data corresponding to the COUNT value has been previously received and the integrity verification procedure has been successfully performed), the receiving PDCP layer device may determine that duplicate detection has occurred and allow the received data to be discarded to improve the duplicate detection procedure, thereby preventing hacker attacks. In addition, when the integrity protection and verification procedures are not configured, if the COUNT value corresponding to the currently received data has been previously received, the data may be immediately discarded. The successful reception of data in the above may be understood as indicating that the integrity verification has been successfully performed on the data corresponding to the COUNT value when the data corresponding to the COUNT value has been processed and stored in the buffer, when the data is received and processed, and delivered to the upper layer device, when the data has been transmitted to the upper layer device and discarded, or when the integrity protection and verification procedure is configured. That is, since it may be determined that the data has not been successfully received when pieces of data received due to an attack by a hacker fails to verify the integrity, normal data may not be discarded in the duplicate detection procedure.

If the PDCP PDU is received from the lower layer, the receiving PDCP layer device determines the COUNT value of the received PDCP PDU as follows.
- 1> If the received RCVD_SN is RCVD_SN <= SN(RX_DELIV) - Window Size
   ■ 2> Update to RCVD_HFN = HFN(RX_DELIV) + 1.
- 1> otherwise, if RCVD_SN is RCVD_SN > SN(RX_DELIV) + Window_Size
   ■ 2> update to RCVD_HFN = HFN(RX_DELIV) - 1.
- 1> If not,
   ■ 2> Update to RCVD_HFN = HFN(RX_DELIV).
- 1> RCVD_COUNT is determined as RCVD_COUNT = [RCVD_HFN, RCVD_SN].

After determining the COUNT value of the received PDCP PDU, the receiving PDCP layer device updates the window state variables as follows and processes the PDCP PDU.
- 1> Deciphering is performed on the PDCP PDU using the RCVD_COUNT value, and integrity verification is performed therefor.
   ■ 2> If integrity verification fails
   ■ 2> Provide an indication of integrity verification failure to a higher layer and discard the received PDCP data PDU (data part of the PDCP PDU).
- 1> if RCVD COUNT < RX_DELIV
- 1> or if a PDCP PDU having a value of RCVD_COUNT has been successfully received before and the integrity protection and verification procedure has been configured, and the integrity verification procedure on the PDCP PDU corresponding to the RCVD_COUNT value has been successfully performed before
- 1> or if a PDCP PDU having a value of RCVD_COUNT has been successfully received before and the integrity protection and verification procedure has not been configured therefor,
   ■ > Discard the received PDCP Data PDU (data part of the PDCP PDU).

If the received PDCP PDU is not discarded, the receiving PDCP layer device operates as follows.
- 1> The PDCP SDU processed above is stored in the reception buffer.
- 1> if RCVD_COUNT >= RX_NEXT
   ■ 2> Update RX_NEXT to RCVD_COUNT + 1.
- 1> If an outOfOrderDelivery is configured (if out of order delivery operation is indicated),
   ■ 2> The PDCP SDU is transmitted to a higher layer.
- 1> If RCVD_COUNT is equal to RX_DELIV
   ■ 2> If header decompression is not performed for all currently stored PDCP SDUs, a header decompression procedure is performed (when a header compression procedure is set), and the above pieces of data are transmitted to a higher layer in the order of COUNT value.
      ◆ 3> Beginning with COUNT = RX_DELIV value, all consecutive PDCP SDUs are transmitted to a higher layer.
   ■ 2> Update the RX_DELIV value to the COUNT value of the first PDCP SDU, which has a count value greater than or equal to the current RX_DELIV and is not transmitted to a higher layer.
- 1> If the t-Reordering timer is running and the RX_DELIV value is greater than or equal to RX_REORD,
   ■ 2> Stop and reset the t-Reordering timer.
- 1> If the t-Reordering timer is not running (including a stopped case under the above conditions) and RX_DELIV is smaller than RX_NEXT,
   ■ 2> Update RX_REORD value to RX_NEXT.
   ■ 2> Start the t-Reordering timer.

When the PDCP reordering timer (t-Reordering) expires, the receiving PDCP layer device operates as follows.
- 1> If header decompression has not been previously applied (that is, if data processing has not yet been performed for the upper layer header), the header decompression procedure is performed on the stored data, and the above pieces of data are transmitted to a higher layer in the order of COUNT value.
   ■ 2> Transfers all PDCP SDUs having COUNT values smaller than the RX_REORD value.
   ■ 2> Beginning with RX_REORD value, all PDCP SDUs having consecutive COUNT values are transferred.

1> Update the RX_DELIV value to the COUNT value of the first PDCP SDU, which has a count value greater than or equal to the RX_REORD and is not transmitted to a higher layer.

- 1> If the RX_DELIV value is smaller than RX_NEXT,
   ■ 2> Update RX_REORD value to RX_NEXT.
   ■ 2> Start the t-Reordering timer.

When the PDCP reordering timer (t-Reordering) expires, the receiving PDCP layer device operates as follows.
- 1> If header decompression has not been previously applied (that is, if data processing has not yet been performed for the upper layer header), the header decompression procedure is performed on the stored data, and the above pieces of data are transmitted to a higher layer in the order of COUNT value.
   n 2> Transfers all PDCP SDUs having COUNT values smaller than the RX_REORD value.
   ■ 2> Beginning with RX_REORD value, all PDCP SDUs having consecutive COUNT values are transferred.

   1> Update the RX_DELIV value to the COUNT value of the first PDCP SDU, which has a count value greater than or equal to the RX_REORD and is not transmitted to a higher layer.
- 1> If the RX_DELIV value is smaller than RX_NEXT,
   ■ 2> Update RX_REORD value to RX_NEXT.
   ■ 2> Start the t-Reordering timer.

When the second embodiment of the efficient handover method proposed in the disclosure is applied, the second method of performing the duplicate detection procedure in the receiving PDCP layer device (UE or base station) is as follows. The second embodiment of the efficient handover method proposed in the disclosure may represent an embodiment in which the original data-based data duplicate transmission method proposed in the disclosure is applied to the first embodiment of the efficient handover method proposed in the disclosure.

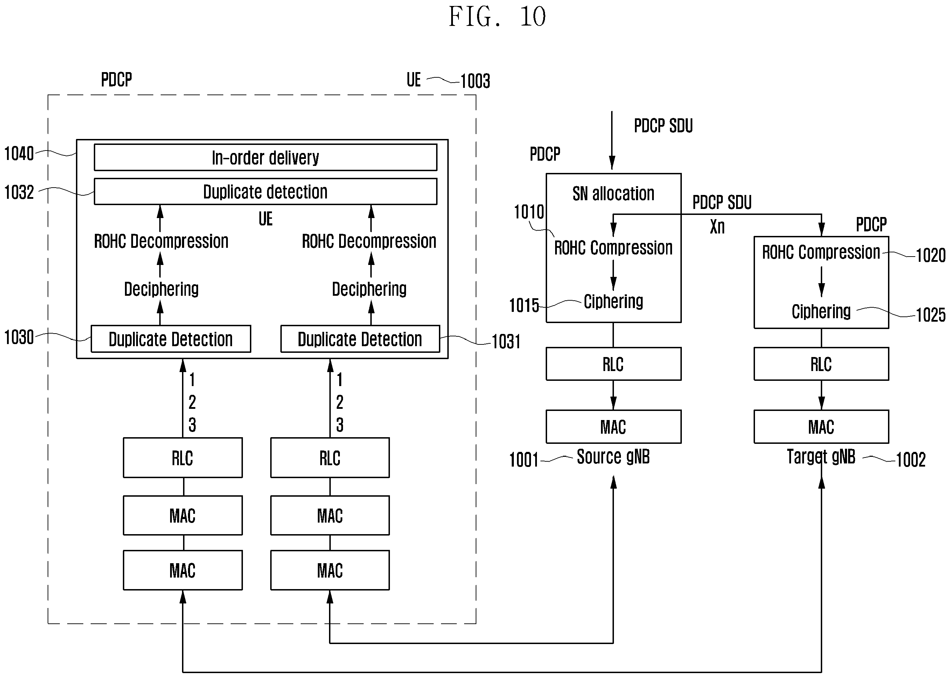

FIG. 10 illustrates an operation of a receiving PDCP layer device of a UE and a duplicate detection procedure when the original data-based data duplicate transmission method is applied in the first embodiment of the efficient handover method proposed in the disclosure.

In FIG. 10, the UE may simultaneously receive downlink data from a source base station and a target base station in one PDCP layer device 10-40, and may perform the deciphering, integrity verification, or header decompression procedure for downlink data from the source base station by using a security key or header compression for the source base station. Further, the UE may perform the deciphering, integrity verification, or header decompression procedure for downlink data from the target base station by using a security key or header compression for the target base station, and then may perform a function of arranging the PDCP SDUs for which data processing has been completed through the above procedure in the ascending order of the COUNT values or PDCP serial numbers and then sequentially transferring the PDCP SDUs to the upper layer.

The second method 10-30 of the duplicate detection procedure proposed in the disclosure above distinguishes whether pieces of data received from the receiving PDCP layer device are received from the source base station or the target base station, and separately performs the duplicate detection procedure for pieces of data received from the source base station based on the PDCP serial number or COUNT value (indicated by reference numeral 10-31), and separately performs the duplicate detection procedure for pieces of data received from the target base station based on the PDCP serial number or COUNT value (indicated by reference numeral 10-30), and filters and discards data received outside the window. In addition, the second method of the duplicate detection procedure performs deciphering, integrity verification, or header decompression procedure on pieces of valid data received within the window, and then, without distinguishing whether they are received from the source base station or the target base station, performs the duplicate detection procedure once more for all PDCP SDUs, which are generated by performing processing (such as deciphering, integrity verification, or header decompression) of the received data in the PDCP layer device, based on the PDCP serial number or COUNT value (indicated by reference numeral 10-32) .

That is, with regard to pieces of data received from the source base station, if data having the previously received PDCP serial number or COUNT value with reference to the PDCP serial number or COUNT value is received, a duplicate detection procedure may be performed after discarding the data (indicated by reference numeral 10-31), and with regard to pieces of data received from the target base station, if data having the previously received PDCP serial number or COUNT value with reference to the PDCP serial number or COUNT value is received, a duplicate detection procedure may be performed after discarding the data (indicated by reference numeral 10-30). If there are two or more pieces of identical data having each PDCP serial number or COUNT value in connection with all PDCP SUDs generated by performing processing (deciphering, integrity verification, or header decompression) of the pieces of data, which have passed the duplicate detection procedure, in the PDCP layer device, a duplicate detection procedure may be performed after discarding one piece of data (indicated by reference numeral 10-32).

In the above, for each link, that is, the duplicate detection procedure is performed once on data received from the source base station (indicated by reference numeral 10-31) or the duplicate detection procedure is performed once on data received from the target base station (indicated by reference numeral 10-30), and then the data is subject to processing of the PDCP layer device. Here, the reason for performing the duplicate detection procedure 10-32 once more on the original data (PDCP SDUs) is as follows.
- In the first embodiment of the efficient handover method proposed in the disclosure, the UE may receive downlink data from the source base station and the target base station at the same time, the data received from the source base station should be processed by applying the security key and header compression context of the source base station, and the data received from the target base station should be processed by applying the security key and header compression context of the target base station.

If the original data (PDCP SDU)-based data duplicate transmission method proposed in the disclosure is applied to the first embodiment of the disclosure (i.e., the second embodiment of the disclosure), the receiving PDCP layer device of the UE should process data, which has the same original data but includes different PDCP PDUs received from the source base station, should be processed by applying the security key and header compression context of the source base station, and data received from the target base station should be processed by applying the security key and header compression context of the target base station.
- However, if the first method of the duplicate detection procedure proposed in the disclosure is applied, that is, if received data (PDCP PDUs) are distinguished based on a PDCP serial number or COUNT value, without distinguishing whether the received data is received from a source base station or a target base station, a problem of discarding data, which is received from the target base station and has the same PDCP serial number or COUNT value as that of data received from the source base station may occur. For example, the source base station transmits, to the UE, data (PDCP PDU) including information for updating the header compression context of the source base station as PDCP serial number 3, then if the target base station processes data having the same PDCP SDU to configure the PDCP PDU having PDCP serial number 3 and previously transmits the same to the UE, the UE discards data, which has received from the source base station and including header compression context update information having the PDCP serial number 3 since the UE has received the data having PDCP serial number 3 from the target base station, thereby may cause problems, errors, or failures in the header compression context update procedure.
- Therefore, the second method of the duplicate detection procedure of the disclosure is to perform duplicate detection procedure according to whether data is received from the source base station or from the target base station. This is because, even with regard to data received from each base station, duplicate data may occur due to HARQ retransmission or retransmission of the RLC layer device. In addition, the reason for performing the duplicate detection procedure once more after processing each data in the PDCP layer device is that, since the original data-based data duplicate transmission method proposed in the disclosure is characterized in that the PDCP SDUs have the same data after processing of the PDCP layer device is completed, if there are two or more same data for each PDCP serial number or COUNT value, only one data should be left and the remaining data should be discarded so that the same data may not be repeatedly delivered to the upper layer.

In order to apply the second method of the duplicate detection procedure in the above, one PDCP layer device of the UE or the base station may apply the second method of the duplicate detection procedure (indicated by reference numerals 10-30 and 10-31) by distinguishing data (e.g., layer devices of the first bearer) received from the source base station and data (e.g., layer devices of the second bearer) received from the target base station in consideration that they are connected to different MAC layer devices or have different logical channel identifiers, they are different RLC layer devices connected to different MAC layer devices, or they are using different ciphering keys, and may apply the second method of the duplicate detection procedure (indicated by reference numeral 10-32) by performing ciphering or deciphering procedure with respect to uplink data and downlink data by using different security keys, and performing compression or decompression thereof using different compression protocol contexts.

A detailed operation of the receiving PDCP layer device according to the second method for performing the duplicate detection procedure is as follows.

If the receiving PDCP layer device has previously received the COUNT value corresponding to the currently received data in the duplicate detection procedure, and has previously successfully received the data corresponding to the COUNT value (when the integrity protection and verification procedure is configured, if the data corresponding to the COUNT value has been previously received and the integrity verification procedure has been successfully performed), the receiving PDCP layer device may determine that duplicate detection has occurred and allow the received data to be discarded to improve the duplicate detection procedure, thereby preventing hacker attacks. In addition, when the integrity protection and verification procedures are not configured, if the COUNT value corresponding to the currently received data has been previously received, the data may be immediately discarded. The successful reception of data in the above may be understood as indicating that the integrity verification has been successfully performed on the data corresponding to the COUNT value when the data corresponding to the COUNT value has been processed and stored in the buffer, when the data is received and processed, and delivered to the upper layer device, when the data has been transmitted to the upper layer device and discarded, or when the integrity protection and verification procedure is configured. That is, since it may be determined that the data has not been successfully received when pieces of data received due to an attack by a hacker fails to verify the integrity, normal data may not be discarded in the duplicate detection procedure.

If the PDCP PDU is received from the lower layer, the receiving PDCP layer device determines the COUNT value of the received PDCP PDU as follows.
- 1> If the received RCVD_SN is RCVD_SN <= SN(RX_DELIV) - Window_Size
   ■ 2> Update to RCVD_HFN = HFN(RX_DELIV) + 1.
- 1> otherwise, if RCVD_SN is RCVD_SN > SN(RX_DELIV) + Window_Size
   ■ 2> update to RCVD_HFN = HFN(RX_DELIV) - 1.
- 1> If not,
   ■ 2> Update to RCVD_HFN = HFN(RX_DELIV).
- 1> RCVD -COUNT is determined as RCVD_COUNT = [RCVD_HFN, RCVD_SN].

After determining the COUNT value of the received PDCP PDU, the receiving PDCP layer device updates the window state variables as follows and processes the PDCP PDU.
- 1> Deciphering is performed on the PDCP PDU using the RCVD_COUNT value, and integrity verification is performed therefor.
   ■ 2> If integrity verification fails
   ■ 2> Provide an indication of integrity verification failure to a higher layer and discard the received PDCP data PDU (data part of the PDCP PDU).
- 1> if RCVD COUNT < RX_DELIV
- 1> or if a PDCP PDU having a value of RCVD_COUNT has been successfully received before, and if the downlink original data-based data duplicate transmission method or the efficient handover method of the first embodiment is not configured
- 1> or if a PDCP PDU having a value of RCVD_COUNT has been successfully received before from a lower layer device (e.g., when a PDCP layer device is connected to a plurality of RLC layer devices, if a PDCP PDU with the same RCVD COUNT value has been successfully received before from the same RLC layer device (from an RLC layer device that is connected to the same MAC layer device or has the same logical channel identifier according to another method)), and if downlink original data-based data duplicate transmission method or the efficient handover method of the first embodiment is configured
   ■ 2> Discard the received PDCP Data PDU (data part of the PDCP PDU).

If the received PDCP PDU is not discarded, the receiving PDCP layer device operates as follows.
- 1> The PDCP SDU processed above is stored in the reception buffer.
- 1> if RCVD COUNT >= RX_NEXT
   ■ 2> Update RX_NEXT to RCVD_COUNT + 1.
- 1> If an outOfOrderDelivery is configured (if out of order delivery operation is indicated),
   ■ 2> The PDCP SDU is transmitted to a higher layer.
- 1> If RCVD_COUNT is equal to RX_DELIV
   ■ 2> Perform a duplicate detection procedure on all currently stored PDCP SDUs (for example, when the original data-based data duplicate transmission or the efficient handover method of the first embodiment is configured, if there are two or more PDCP SDUs having the same COUNT value among the currently stored PDCP SDUs, only one PDCP SDU is left for each COUNT value and the remaining duplicate data (PDCP SDUs) may be discarded. That is, the duplicate detection procedure is performed for PDCP SDUs having the same COUNT value among all stored PDCP SDUs, to allow only one PDCP SDU corresponding to one COUNT value to be stored and delivered to the upper layer. Further, if data duplicate transmission based on original data or efficient handover method according to the first embodiment is configured, the header decompression procedure may also be performed in the ascending order of COUNT values for each data received by each lower RLC layer device), if header decompression has not been performed on the data, the header decompression procedure (when the header compression procedure is configured) is performed therefor, and the data is transmitted to the upper layer in the order of COUNT values. Alternatively, with regard to data received from the same (or the identical) lower layer device (for example, when a PDCP layer device is connected to multiple RLC layer devices, from the same RLC layer device (from the RLC layer device connected to the same MAC layer device or having the same logical channel according to another method), the header decompression procedure is performed in ascending order of the PDCP serial numbers or COUNT values using the ROHC context (source base station or target base station) corresponding to the lower layer device, and then the duplicate detection procedure may be performed and the data may be transmitted to the upper layer in the order of the COUNT values.
      ◆ 3> Beginning with COUNT = RX_DELIV value, all consecutive PDCP SDUs are transmitted to a higher layer.
   ■ 2> Update the RX_DELIV value to the COUNT value of the first PDCP SDU, which has a count value greater than or equal to the current RX_DELIV and is not transmitted to a higher layer.
- 1> If the t-Reordering timer is running and the RX_DELIV value is greater than or equal to RX_REORD,
   ■ 2> Stop and reset the t-Reordering timer.
- 1> If the t-Reordering timer is not running (including a stopped case under the above conditions) and RX_DELIV is smaller than RX_NEXT,
   ■ 2> Update RX_REORD value to RX_NEXT.
   ■ 2> Start the t-Reordering timer.

When the PDCP reordering timer (t-Reordering) expires, the receiving PDCP layer device operates as follows.
- 1> Perform a duplicate detection procedure on all currently stored PDCP SDUs (for example, when the original data-based data duplicate transmission or the efficient handover method of the first embodiment is configured, if there are two or more PDCP SDUs having the same COUNT value among the currently stored PDCP SDUs, only one PDCP SDU is left for each COUNT value and the remaining duplicate data (PDCP SDUs) may be discarded. That is, the duplicate detection procedure is performed for PDCP SDUs having the same COUNT value among all stored PDCP SDUs, to allow only one PDCP SDU corresponding to one COUNT value to be stored and delivered to the upper layer. Further, if data duplicate transmission based on original data or efficient handover method according to the first embodiment is configured, the header decompression procedure may also be performed in the ascending order of COUNT values for each data received by each lower RLC layer device), if header decompression has not been performed on the data, the header decompression procedure (when the header compression procedure is configured) is performed therefor, and the data is transmitted to the upper layer in the order of COUNT values. Alternatively, with regard to data received from the same (or the identical) lower layer device (for example, when a PDCP layer device is connected to multiple RLC layer devices, from the same RLC layer device (from the RLC layer device connected to the same MAC layer device or having the same logical channel according to another method), the header decompression procedure is performed in ascending order of the PDCP serial numbers or COUNT values using the ROHC context (source base station or target base station) corresponding to the lower layer device, and then the duplicate detection procedure may be performed and the data may be transmitted to the upper layer in the order of the COUNT values.
   ■ 2> Transfers all PDCP SDUs having COUNT values smaller than the RX_REORD value.
   ■ 2> Beginning with RX_REORD value, all PDCP SDUs having consecutive COUNT values are transferred.

   1> Update the RX_DELIV value to the COUNT value of the first PDCP SDU, which has a count value greater than or equal to the RX_REORD and is not transmitted to a higher layer.
- 1> If the RX_DELIV value is smaller than RX_NEXT,
   ■ 2> Update RX_REORD value to RX_NEXT.
   ■ 2> Start the t-Reordering timer.

Another specific operation of the receiving PDCP layer device of the second method for performing the duplicate detection procedure in the above is as follows.

If the receiving PDCP layer device has previously received the COUNT value corresponding to the currently received data in the duplicate detection procedure, and has previously successfully received the data corresponding to the COUNT value (when the integrity protection and verification procedure is configured, if the data corresponding to the COUNT value has been previously received and the integrity verification procedure has been successfully performed), the receiving PDCP layer device may determine that duplicate detection has occurred and allow the received data to be discarded to improve the duplicate detection procedure, thereby preventing hacker attacks. In addition, when the integrity protection and verification procedures are not configured, if the COUNT value corresponding to the currently received data has been previously received, the data may be immediately discarded. The successful reception of data in the above may be understood as indicating that that the integrity verification has been successfully performed on the data corresponding to the COUNT value when the data corresponding to the COUNT value has been processed and stored in the buffer, when the data is received and processed, and delivered to the upper layer device, when the data has been transmitted to the upper layer device and discarded, or when the integrity protection and verification procedure is configured. That is, since it may be determined that the data has not been successfully received when pieces of data received due to an attack by a hacker fails to verify the integrity, normal data may not be discarded in the duplicate detection procedure.

If the PDCP PDU is received from the lower layer, the receiving PDCP layer device determines the COUNT value of the received PDCP PDU as follows.
- 1> If the received RCVD_SN is RCVD_SN <= SN(RX_DELIV) - Window_Size
   ■ 2> Update to RCVD_HFN = HFN(RX_DELIV) + 1.
- 1> otherwise, if RCVD_SN is RCVD_SN > SN(RX_DELIV) + Window_Size
   ■ 2> update to RCVD_HFN = HFN(RX_DELIV) - 1.
- 1> If not,
   ■ 2> Update to RCVD_HFN = HFN(RX_DELIV).
- 1> RCVD_COUNT is determined as RCVD_COUNT = [RCVD_HFN, RCVD_SN].

After determining the COUNT value of the received PDCP PDU, the receiving PDCP layer device updates the window state variables as follows and processes the PDCP PDU.
- 1> Deciphering is performed on the PDCP PDU using the RCVD_COUNT value, and integrity verification is performed therefor.
   ■ 2> If integrity verification fails
   ■ 2> Provide an indication of integrity verification failure to a higher layer and discard the received PDCP data PDU (data part of the PDCP PDU).
- 1> if RCVD COUNT < RX_DELIV
- 1> or if a PDCP PDU having a value of RCVD_COUNT has been successfully received before and the integrity protection and verification procedure has been configured, and the integrity verification procedure on the PDCP PDU corresponding to the RCVD_COUNT value has been successfully performed before, and if the downlink original data-based data duplicate transmission method or the efficient handover method of the first embodiment is not configured
- 1> or if a PDCP PDU having a value of RCVD_COUNT has been successfully received before and the integrity protection and verification procedure has not been configured, and if the downlink original data-based data duplicate transmission method or the efficient handover method of the first embodiment is not configured,
- 1> or if a PDCP PDU having a value of RCVD_COUNT has been successfully received before from a lower layer device (e.g., when a PDCP layer device is connected to multiple RLC layer devices, if a PDCP PDU with the same RCVD_COUNT value has been successfully received before from the same RLC layer device (from an RLC layer device that is connected to the same MAC layer device or has the same logical channel identifier according to another method)) and the integrity protection and verification procedure has been configured, and if the integrity verification procedure on the PDCP PDU corresponding to the RCVD_COUNT value has been successfully performed before and if downlink original data-based data duplicate transmission method or the efficient handover method of the first embodiment is configured
- 1> or if a PDCP PDU having a value of RCVD_COUNT has been successfully received before from a lower layer device, for example, when a PDCP layer device is connected to multiple RLC layer devices, if a PDCP PDU with the same RCVD_COUNT value has been successfully received before from the same RLC layer device (from an RLC layer device that is connected to the same MAC layer device or has the same logical channel identifier according to another method)), and if the integrity protection and verification procedure are not configured, and the downlink original data-based data duplicate transmission method or the efficient handover method of the first embodiment is configured
   ■ > Discard the received PDCP Data PDU (data part of the PDCP PDU) .

If the received PDCP PDU is not discarded, the receiving PDCP layer device operates as follows.
- 1> The PDCP SDU processed above is stored in the reception buffer.
- 1> if RCVD_COUNT >= RX_NEXT
   ■ 2> Update RX_NEXT to RCVD_COUNT + 1.
- 1> If an outOfOrderDelivery is configured (if out of order delivery operation is indicated),
   ■ 2> The PDCP SDU is transmitted to a higher layer.
- 1> If RCVD_COUNT is equal to RX_DELIV
   ■ 2> Perform a duplicate detection procedure on all currently stored PDCP SDUs (for example, when the original data-based data duplicate transmission or the efficient handover method of the first embodiment is configured, if there are two or more PDCP SDUs having the same COUNT value among the currently stored PDCP SDUs, only one PDCP SDU is left for each COUNT value and the remaining duplicate data (PDCP SDUs) may be discarded. That is, the duplicate detection procedure is performed for PDCP SDUs having the same COUNT value among all stored PDCP SDUs, to allow only one PDCP SDU corresponding to one COUNT value to be stored and delivered to the upper layer. Further, if data duplicate transmission based on original data or efficient handover method according to the first embodiment is configured, the header decompression procedure may also be performed in the ascending order of COUNT values for each data received by each lower RLC layer device), if header decompression has not been performed on the data, the header decompression procedure (when the header compression procedure is configured) is performed therefor, and the data is transmitted to the upper layer in the order of COUNT values. Alternatively, with regard to data received from the same (or the identical) lower layer device (for example, when a PDCP layer device is connected to multiple RLC layer devices, from the same RLC layer device (from the RLC layer device connected to the same MAC layer device or having the same logical channel according to another method), the header decompression procedure is performed in ascending order of the PDCP serial numbers or COUNT values using the ROHC context (source base station or target base station) corresponding to the lower layer device, and then the duplicate detection procedure may be performed and the data may be transmitted to the upper layer in the order of the COUNT values.
      ◆ 3> Beginning with COUNT = RX_DELIV value, all consecutive PDCP SDUs are transmitted to a higher layer.
   ■ 2> Update the RX_DELIV value to the COUNT value of the first PDCP SDU, which has a count value greater than or equal to the current RX_DELIV and is not transmitted to a higher layer.
- 1> If the t-Reordering timer is running and the RX_DELIV value is greater than or equal to RX_REORD,
   ■ 2> Stop and reset the t-Reordering timer.
- 1> If the t-Reordering timer is not running (including a stopped case under the above conditions) and RX_DELIV is smaller than RX_NEXT,
   ■ 2> Update RX_REORD value to RX_NEXT.
   ■ 2> Start the t-Reordering timer.

When the PDCP reordering timer (t-Reordering) expires, the receiving PDCP layer device operates as follows.
- 1> Perform a duplicate detection procedure on all currently stored PDCP SDUs (for example, when the original data-based data duplicate transmission or the efficient handover method of the first embodiment is configured, if there are two or more PDCP SDUs having the same COUNT value among the currently stored PDCP SDUs, only one PDCP SDU is left for each COUNT value and the remaining duplicate data (PDCP SDUs) may be discarded. That is, the duplicate detection procedure is performed for PDCP SDUs having the same COUNT value among all stored PDCP SDUs, to allow only one PDCP SDU corresponding to one COUNT value to be stored and delivered to the upper layer. Further, if data duplicate transmission based on original data or efficient handover method according to the first embodiment is configured, the header decompression procedure may also be performed in the ascending order of COUNT values for each data received by each lower RLC layer device), if header decompression has not been performed on the data, the header decompression procedure (when the header compression procedure is configured) is performed therefor, and the data is transmitted to the upper layer in the order of COUNT values. Alternatively, with regard to data received from the same (or the identical) lower layer device (for example, when a PDCP layer device is connected to multiple RLC layer devices, from the same RLC layer device (from the RLC layer device connected to the same MAC layer device or having the same logical channel according to another method), the header decompression procedure is performed in ascending order of the PDCP serial numbers or COUNT values using the ROHC context (source base station or target base station) corresponding to the lower layer device, and then the duplicate detection procedure may be performed and the data may be transmitted to the upper layer in the order of the COUNT values.
   ■ 2> Transfers all PDCP SDUs having COUNT values smaller than the RX_REORD value.
   ■ 2> Beginning with RX_REORD value, all PDCP SDUs having consecutive COUNT values are transferred.
- 1> Update the RX_DELIV value to the COUNT value of the first PDCP SDU, which has a count value greater than or equal to the RX_REORD and is not transmitted to a higher layer.
- 1> If the RX_DELIV value is smaller than RX_NEXT value,
   ■ 2> Update RX_REORD value to RX_NEXT value.
   ■ 2> Start the t-Reordering timer.

Further, in the above procedure, with regard to data received from the same (or the identical) lower layer device (for example, when a PDCP layer device is connected to multiple RLC layer devices, from the same RLC layer device (from the RLC layer device connected to the same MAC layer device or having the same logical channel according to another method), the receiving PDCP layer device may perform the header decompression procedure in ascending order of the PDCP serial numbers or COUNT values using the ROHC context (source base station or target base station) corresponding to the lower layer device, and then may independently operate different PDCP windows and PDCP window state variables with regard to data received from each lower layer device in order to perform the duplicate detection procedure. For example, in the embodiment of the disclosure, since the receiving PDCP layer device is connected to the RLC layer device for the source base station and the RLC layer device for the target base station, the receiving PDCP layer device may operate the first PDCP window and the first PDCP window state variables with regard to data received from the RLC layer device for the source base station, and may operate the second PDCP window and the second PDCP window state variables with regard to data received from the RLC layer device for the target base station. In addition, the receiving PDCP layer device may decipher data received from each base station with a security key corresponding to each base station by independently operating the PDCP window and PDCP state variables as described above, may arrange pieces of data received from each base station in sequence, may perform a header decompression procedure to be suitable for each base station in sequence or in ascending order, may apply a duplicate detection procedure to data, which are received from the source base station and for which the header compression procedure has been completed and data, which are received from the target base station and for which the header compression procedure has been completed, may discard the duplicate PDCP SUDs, and may transfer the data to an upper layer device in ascending order of the PDCP serial numbers or COUNT values.

According to still another method of the second method 10-30 of the duplicate detection procedure proposed in the disclosure above, when the second embodiment of the disclosure is indicated by the handover command message, the method does not perform a duplicate detection procedure on data received from the receiving PDCP layer device, and filters and discards only data received outside the window. In addition, the method performs deciphering, integrity verification, or header decompression procedure on pieces of valid data received within the window, and then, without distinguishing whether they are received from the source base station or the target base station, performs the duplicate detection procedure for all PDCP SDUs, which are generated by performing processing (such as deciphering, integrity verification, or header decompression) of the received data in the PDCP layer device, based on the PDCP serial number or COUNT value (indicated by reference numeral 10-32) .

That is, if there are two or more pieces of identical data having each PDCP serial number or COUNT value with reference to the PDCP serial number or COUNT value in connection with all PDCP SUDs generated by performing processing (deciphering, integrity verification, or header decompression) of the received data in the PDCP layer device, a duplicate detection procedure may be performed after discarding one piece of data (indicated by reference numeral 10-32).

Another specific operation of the receiving PDCP layer device of the second method for performing the duplicate detection procedure in the above is as follows.

If the receiving PDCP layer device has previously received the COUNT value corresponding to the currently received data in the duplicate detection procedure, and has previously successfully received the data corresponding to the COUNT value (when the integrity protection and verification procedure is configured, if the data corresponding to the COUNT value has been previously received and the integrity verification procedure has been successfully performed), the receiving PDCP layer device may determine that duplicate detection has occurred and allow the received data to be discarded to improve the duplicate detection procedure, thereby preventing hacker attacks. In addition, when the integrity protection and verification procedures are not configured, if the COUNT value corresponding to the currently received data has been previously received, the data may be immediately discarded. The successful reception of data in the above may be understood as indicating that the integrity verification has been successfully performed on the data corresponding to the COUNT value when the data corresponding to the COUNT value has been processed and stored in the buffer, when the data is received and processed, and delivered to the upper layer device, when the data has been transmitted to the upper layer device and discarded, or when the integrity protection and verification procedure is configured. That is, since it may be determined that the data has not been successfully received when pieces of data received due to an attack by a hacker fails to verify the integrity, normal data may not be discarded in the duplicate detection procedure.

If the PDCP PDU is received from the lower layer, the receiving PDCP layer device determines the COUNT value of the received PDCP PDU as follows.
- 1> If the received RCVD_SN is RCVD_SN <= SN(RX_DELIV) - Window Size
   ■ 2> Update to RCVD_HFN = HFN(RX DELIV) + 1.
- 1> otherwise, if RCVD_SN is RCVD_SN > SN(RX_DELIV) + Window_Size
   ■ 2> update to RCVD_HFN = HFN(RX_DELIV) - 1.
- 1> If not,
   ■ 2> Update to RCVD_HFN = HFN(RX_DELIV).
- 1> RCVD_COUNT is determined as RCVD_COUNT = [RCVD_HFN, RCVD_SN].

After determining the COUNT value of the received PDCP PDU, the receiving PDCP layer device updates the window state variables as follows and processes the PDCP PDU.
- 1> Deciphering is performed on the PDCP PDU using the RCVD_COUNT value, and integrity verification is performed therefor.
   ■ 2> If integrity verification fails
   ■ 2> Provide an indication of integrity verification failure to a higher layer and discard the received PDCP data PDU (data part of the PDCP PDU).
- 1> if RCVD COUNT < RX_DELIV
- 1> or if a PDCP PDU having a value of RCVD_COUNT has been successfully received before, and if the downlink original data-based data duplicate transmission method or the efficient handover method of the first embodiment is not configured
   ■ 2> Discard the received PDCP Data PDU (data part of the PDCP PDU).

If the received PDCP PDU is not discarded, the receiving PDCP layer device operates as follows.
- 1> The PDCP SDU processed above is stored in the reception buffer.
- 1> if RCVD COUNT >= RX_NEXT
   ■ 2> Update RX_NEXT to RCVD_COUNT + 1.
- 1> If an outOfOrderDelivery is configured (if out of order delivery operation is indicated),
   ■ 2> The PDCP SDU is transmitted to a higher layer.
- 1> If RCVD_COUNT is equal to RX_DELIV
   ■ 2> Perform a duplicate detection procedure on all currently stored PDCP SDUs (for example, when the original data-based data duplicate transmission or the efficient handover method of the first embodiment is configured, if there are two or more PDCP SDUs having the same COUNT value among the currently stored PDCP SDUs, only one PDCP SDU is left for each COUNT value and the remaining duplicate data (PDCP SDUs) may be discarded. That is, the duplicate detection procedure is performed for PDCP SDUs having the same COUNT value among all stored PDCP SDUs, to allow only one PDCP SDU corresponding to one COUNT value to be stored and delivered to the upper layer. Further, if data duplicate transmission based on original data or efficient handover method according to the first embodiment is configured, the header decompression procedure may also be performed in the ascending order of COUNT values for each data received by each lower RLC layer device), if header decompression has not been performed on the data, the header decompression procedure (when the header compression procedure is configured) is performed therefor, and the data is transmitted to the upper layer in the order of COUNT values. Alternatively, with regard to data received from the same (or the identical) lower layer device (for example, when a PDCP layer device is connected to multiple RLC layer devices, from the same RLC layer device (from the RLC layer device connected to the same MAC layer device or having the same logical channel according to another method)), the header decompression procedure is performed in ascending order of the PDCP serial numbers or COUNT values using the ROHC context (source base station or target base station) corresponding to the lower layer device, and then the duplicate detection procedure may be performed and the data may be transmitted to the upper layer in the order of the COUNT values.
      ◆ 3> Beginning with COUNT = RX_DELIV value, all consecutive PDCP SDUs are transmitted to a higher layer.
   ■ 2> Update the RX_DELIV value to the COUNT value of the first PDCP SDU, which has a count value greater than or equal to the current RX_DELIV and is not transmitted to a higher layer.
- 1> If the t-Reordering timer is running and the RX_DELIV value is greater than or equal to RX_REORD,
   ■ 2> Stop and reset the t-Reordering timer.
- 1> If the t-Reordering timer is not running (including a stopped case under the above conditions) and RX_DELIV is smaller than RX_NEXT,
   ■ 2> Update RX_REORD value to RX_NEXT.
   ■ 2> Start the t-Reordering timer.

When the PDCP reordering timer (t-Reordering) expires, the receiving PDCP layer device operates as follows.
- 1> Perform a duplicate detection procedure on all currently stored PDCP SDUs (for example, when the original data-based data duplicate transmission or the efficient handover method of the first embodiment is configured, if there are two or more PDCP SDUs having the same COUNT value among the currently stored PDCP SDUs, only one PDCP SDU is left for each COUNT value and the remaining duplicate data (PDCP SDUs) may be discarded. That is, the duplicate detection procedure is performed for PDCP SDUs having the same COUNT value among all stored PDCP SDUs, to allow only one PDCP SDU corresponding to one COUNT value to be stored and delivered to the upper layer. Further, if data duplicate transmission based on original data or efficient handover method according to the first embodiment is configured, the header decompression procedure may also be performed in the ascending order of COUNT values for each data received by each lower RLC layer device), if header decompression has not been performed on the data, the header decompression procedure (when the header compression procedure is configured) is performed therefor, and the data is transmitted to the upper layer in the order of COUNT values. Alternatively, with regard to data received from the same (or the identical) lower layer device (for example, when a PDCP layer device is connected to multiple RLC layer devices, from the same RLC layer device (from the RLC layer device connected to the same MAC layer device or having the same logical channel according to another method), the header decompression procedure is performed in ascending order of the PDCP serial numbers or COUNT values using the ROHC context (source base station or target base station) corresponding to the lower layer device, and then the duplicate detection procedure may be performed and the data may be transmitted to the upper layer in the order of the COUNT values.
   ■ 2> Transfers all PDCP SDUs having COUNT values smaller than the RX_REORD value.
   ■ 2> Beginning with RX_REORD value, all PDCP SDUs having consecutive COUNT values are transferred.
- 1> Update the RX_DELIV value to the COUNT value of the first PDCP SDU, which has a count value greater than or equal to the RX_REORD and is not transmitted to a higher layer.
- 1> If the RX_DELIV value is smaller than RX_NEXT,
   ■ 2> Update RX_REORD value to RX_NEXT.
   ■ 2> Start the t-Reordering timer.

Another specific operation of the receiving PDCP layer device of the second method for performing the duplicate detection procedure in the above is as follows.

If the receiving PDCP layer device has previously received the COUNT value corresponding to the currently received data in the duplicate detection procedure, and has previously successfully received the data corresponding to the COUNT value (when the integrity protection and verification procedure is configured, if the data corresponding to the COUNT value has been previously received and the integrity verification procedure has been successfully performed), the receiving PDCP layer device may determine that duplicate detection has occurred and allow the received data to be discarded to improve the duplicate detection procedure, thereby preventing hacker attacks. In addition, when the integrity protection and verification procedures are not configured, if the COUNT value corresponding to the currently received data has been previously received, the data may be immediately discarded. The successful reception of data in the above may be understood as indicating that that the integrity verification has been successfully performed on the data corresponding to the COUNT value when the data corresponding to the COUNT value has been processed and stored in the buffer, when the data is received and processed, and delivered to the upper layer device, when the data has been transmitted to the upper layer device and discarded, or when the integrity protection and verification procedure is configured. That is, since it may be determined that the data has not been successfully received when pieces of data received due to an attack by a hacker fails to verify the integrity, normal data may not be discarded in the duplicate detection procedure.

If the PDCP PDU is received from the lower layer, the receiving PDCP layer device determines the COUNT value of the received PDCP PDU as follows.
- 1> If the received RCVD_SN is RCVD_SN <= SN(RX_DELIV) - Window Size
   ■ 2> Update to RCVD_HFN = HFN(RX_DELIV) + 1.
- 1> otherwise, if RCVD_SN is RCVD_SN > SN(RX_DELIV) + Window_Size
   ■ 2> update to RCVD_HFN = HFN(RX_DELIV) - 1.
- 1> If not,
   ■ 2> Update to RCVD_HFN = HFN(RX_DELIV).
- 1> RCVD_COUNT is determined as RCVD_COUNT = [RCVD_HFN, RCVD_SN].

After determining the COUNT value of the received PDCP PDU, the receiving PDCP layer device updates the window state variables as follows and processes the PDCP PDU.
- 1> Deciphering is performed on the PDCP PDU using the RCVD_COUNT value, and integrity verification is performed therefor.
   ■ 2> If integrity verification fails
   ■ 2> Provide an indication of integrity verification failure to a higher layer and discard the received PDCP data PDU (data part of the PDCP PDU).
- 1> if RCVD COUNT < RX_DELIV
- 1> or if a PDCP PDU having a value of RCVD_COUNT has been successfully received before and the integrity protection and verification procedure has been configured, and the integrity verification procedure on the PDCP PDU corresponding to the RCVD_COUNT value has been successfully performed before, and if the downlink original data-based data duplicate transmission method or the efficient handover method of the first embodiment is not configured
- 1> or if a PDCP PDU having a value of RCVD_COUNT has been successfully received before and the integrity protection and verification procedure has not been configured, and if the downlink original data-based data duplicate transmission method or the efficient handover method of the first embodiment is not configured,
   ■ > Discard the received PDCP Data PDU (data part of the PDCP PDU).

If the received PDCP PDU is not discarded, the receiving PDCP layer device operates as follows.
- 1> The PDCP SDU processed above is stored in the reception buffer.
- 1> if RCVD COUNT >= RX_NEXT
   ■ 2> Update RX_NEXT to RCVD_COUNT + 1.
- 1> If an outOfOrderDelivery is configured (if out of order delivery operation is indicated),
   ■ 2> The PDCP SDU is transmitted to a higher layer.
- 1> If RCVD_COUNT is equal to RX_DELIV
   ■ 2> Perform a duplicate detection procedure on all currently stored PDCP SDUs (for example, when the original data-based data duplicate transmission or the efficient handover method of the first embodiment is configured, if there are two or more PDCP SDUs having the same COUNT value among the currently stored PDCP SDUs, only one PDCP SDU is left for each COUNT value and the remaining duplicate data (PDCP SDUs) may be discarded. That is, the duplicate detection procedure is performed for PDCP SDUs having the same COUNT value among all stored PDCP SDUs, to allow only one PDCP SDU corresponding to one COUNT value to be stored and delivered to the upper layer. Further, if data duplicate transmission based on original data or efficient handover method according to the first embodiment is configured, the header decompression procedure may also be performed in the ascending order of COUNT values for each data received by each lower RLC layer device), if header decompression has not been performed on the data, the header decompression procedure (when the header compression procedure is configured) is performed therefor, and the data is transmitted to the upper layer in the order of COUNT values. Alternatively, with regard to data received from the same (or the identical) lower layer device (for example, when a PDCP layer device is connected to multiple RLC layer devices, from the same RLC layer device (from the RLC layer device connected to the same MAC layer device or having the same logical channel according to another method), the header decompression procedure is performed in ascending order of the PDCP serial numbers or COUNT values using the ROHC context (source base station or target base station) corresponding to the lower layer device, and then the duplicate detection procedure may be performed and the data may be transmitted to the upper layer in the order of the COUNT values.
      ◆ 3> Beginning with COUNT = RX_DELIV value, all consecutive PDCP SDUs are transmitted to a higher layer.
   ■ 2> Update the RX_DELIV value to the COUNT value of the first PDCP SDU, which has a count value greater than or equal to the current RX_DELIV and is not transmitted to a higher layer.
- 1> If the t-Reordering timer is running and the RX_DELIV value is greater than or equal to RX_REORD,
   ■ 2> Stop and reset the t-Reordering timer.
- 1> If the t-Reordering timer is not running (including a stopped case under the above conditions) and RX_DELIV is smaller than RX_NEXT,
   ■ 2> Update RX_REORD value to RX_NEXT.
   ■ 2> Start the t-Reordering timer.

When the PDCP reordering timer (t-Reordering) expires, the receiving PDCP layer device operates as follows.
- 1> Perform a duplicate detection procedure on all currently stored PDCP SDUs (for example, when the original data-based data duplicate transmission or the efficient handover method of the first embodiment is configured, if there are two or more PDCP SDUs having the same COUNT value among the currently stored PDCP SDUs, only one PDCP SDU is left for each COUNT value and the remaining duplicate data (PDCP SDUs) may be discarded. That is, the duplicate detection procedure is performed for PDCP SDUs having the same COUNT value among all stored PDCP SDUs, to allow only one PDCP SDU corresponding to one COUNT value to be stored and delivered to the upper layer. Further, if data duplicate transmission based on original data or efficient handover method according to the first embodiment is configured, the header decompression procedure may also be performed in the ascending order of COUNT values for each data received by each lower RLC layer device), if header decompression has not been performed on the data, the header decompression procedure (when the header compression procedure is configured) is performed therefor, and the data is transmitted to the upper layer in the order of COUNT values. Alternatively, with regard to data received from the same (or the identical) lower layer device (for example, when a PDCP layer device is connected to multiple RLC layer devices, from the same RLC layer device (from the RLC layer device connected to the same MAC layer device or having the same logical channel according to another method), the header decompression procedure is performed in ascending order of the PDCP serial numbers or COUNT values using the ROHC context (source base station or target base station) corresponding to the lower layer device, and then the duplicate detection procedure may be performed and the data may be transmitted to the upper layer in the order of the COUNT values.
   ■ 2> Transfers all PDCP SDUs having COUNT values smaller than the RX_REORD value.
   ■ 2> Beginning with RX_REORD value, all PDCP SDUs having consecutive COUNT values are transferred.
- 1> Update the RX_DELIV value to the COUNT value of the first PDCP SDU, which has a count value greater than or equal to the RX_REORD and is not transmitted to a higher layer.
- 1> If the RX_DELIV value is smaller than RX_NEXT,
   ■ 2> Update RX_REORD value to RX_NEXT.
   ■ 2> Start the t-Reordering timer.

Further, in the above procedure, with regard to data received from the same (or the identical) lower layer device (for example, when a PDCP layer device is connected to multiple RLC layer devices, from the same RLC layer device (from the RLC layer device connected to the same MAC layer device or having the same logical channel according to another method), the receiving PDCP layer device may perform the header decompression procedure in ascending order of the PDCP serial numbers or COUNT values using the ROHC context (source base station or target base station) corresponding to the lower layer device, and then may independently operate different PDCP windows and PDCP window state variables with regard to data received from each lower layer device in order to perform the duplicate detection procedure. For example, in the embodiment of the disclosure, since the receiving PDCP layer device is connected to the RLC layer device for the source base station and the RLC layer device for the target base station, the receiving PDCP layer device may operate the first PDCP window and the first PDCP window state variables with regard to data received from the RLC layer device for the source base station, and may operate the second PDCP window and the second PDCP window state variables with regard to data received from the RLC layer device for the target base station. In addition, the receiving PDCP layer device may decipher data received from each base station with a security key corresponding to each base station by independently operating the PDCP window and PDCP state variables as described above, may arrange pieces of data received from each base station in sequence, may perform a header decompression procedure to be suitable for each base station in sequence or in ascending order, may apply a duplicate detection procedure to data, which are received from the source base station and for which the header compression procedure has been completed and data, which are received from the target base station and for which the header compression procedure has been completed, may discard the duplicate PDCP SUDs, and may transfer the data to an upper layer device in ascending order of the PDCP serial numbers or COUNT values.

The efficient handover method for minimizing the data interruption time due to handover in the disclosure described above with reference to FIG. 7 may also be applied to the second embodiment of the efficient handover method proposed by the disclosure.

In the first operation 7-01 of the second embodiment of the efficient handover method of FIG. 7, even if the UE 7-20 receives a handover command message from a source base station 7-05 while performing data transmission or reception to or from the source base station, the UE may continue to perform data transmission or reception to or from the source base station through protocol layer devices 7-22 of the first bearer in order to minimize data interruption time that occurs during handover. If an indicator indicating the improved handover method or an indicator indicating the handover method of the second embodiment proposed in the disclosure is identified through the handover command message, the UE may apply the method of the second embodiment of the disclosure. In addition, through the handover command message (e.g., RRCReconfiguration message), a new indicator indicating the original data (PDCP SDU)-based data duplicate transmission method proposed in the disclosure can be defined and instructed to the UE, and the original data-based data duplicate transmission method or the efficient handover method of the first embodiment may be indicated by separately defining an indicator for each downlink or uplink. In addition, the indicator may be separately defined and indicated for each bearer, for each PDCP layer device, or for each logical channel. If an indicator is defined for each bearer when defining a new indicator through the handover command message, the efficient handover method of the first embodiment can be applied to the downlink or the uplink only with regard to a specific service (e.g., only for a specific bearer or PDCP layer device sensitive to transmission delay).

In the second embodiment of the disclosure, when the first embodiment of the efficient handover method is indicated using an indicator through the handover command message, and when the original data-based data duplicate transmission method or the efficient handover method of the first embodiment is indicated using the indicator, the specific handover methods and procedures are proposed in the following.

In addition, according to the configuration included in the received handover command message above, the UE may preconfigure or establish protocol layer devices (PHY layer device, MAC layer device, RLC layer device, or PDCP layer device) 7-21 of the second bearer for the target base station. The second bearer may be configured and established to have the same bearer identifier or logical channel identifier as that of the first bearer so that data interruption time does not occur for each bearer. Further, in the second embodiment, the PDCP layer device of the first bearer and the PDCP layer device of the second bearer may logically operate as a single PDCP layer device, and a more detailed operation method will be described with reference to FIG. 9. The layer devices of the first bearer (or a first RLC layer device) and the layer devices of the second bearer (or a second RLC layer device) for a single PDCP layer device are distinguished by considering that they are connected to different MAC layer devices, by allowing them to have different logical channel identifiers, by considering that they are different RLC layer devices connected to different MAC layer devices, or based on that they use different ciphering keys, and uplink data and downlink data may be ciphered or deciphered using different security keys, and may be compressed or decompressed using different compression protocol contexts.

In addition, in the second embodiment, in a case where the UE is allowed to transmit uplink data both to the source base station and to the target base station, there may be a problem with reduction in coverage due to insufficient transmission power of the UE or with determination of the base station to which a request for a transmission resource is to be made and uplink data is to be transmitted when transmitting uplink data (link selection problem). In order to prevent the above problem, the UE may transmit uplink data to only one of the source base station and the target base station in the second embodiment. That is, according to the uplink data transmission in the first embodiment of the improved handover method proposed by the disclosure, the UE may not perform uplink data transmission to different base stations at the same time, and when the first condition is satisfied while performing uplink data transmission to the source base station, the UE may perform switching from the source base station to the target base station to perform uplink data transmission to the target base station. Therefore, the UE may make a request for scheduling to only one of the source base station and the target base station, may report the size of pieces of data to be transmitted in the PDCP layer device (e.g., a buffer status report (BSR)) to only one of the source base station and the target base station, may receive an uplink transmission resource, and may then transmit uplink data to only one base station. In addition, even if the UE receives a handover command message from the source base station, the UE may continue transmission or reception of data due to HARQ retransmission in order to prevent loss of data, and thus may not initialize a MAC layer device of the first bearer.

If the original data-based data duplicate transmission method or the efficient handover method of the first embodiment is configured for the uplink through the handover command message, the UE may transmit uplink data to the source base station and the target base station through the first bearer or the second bearer by applying the original data-based data duplicate transmission method or the efficient handover method of the first embodiment. In addition, one receiving PDCP layer device of the source base station and the target base station may process received data by applying the second method of performing the duplicate detection procedure proposed above.

In the second operation 7-02 of the second embodiment of the efficient handover method of FIG. 7, even when the UE 7-20 performs a procedure of random access to the target base station 7-10 indicated by the handover command message through the protocol layer devices of the second bearer, the UE may continuously perform data transmission or reception (uplink data transmission and downlink data reception) to or from the source base station through the protocol layer devices of the first bearer.

In the third operation 7-03 of the second embodiment of the efficient handover method of FIG. 7, when the first condition is satisfied, the UE 7-20 may stop performing uplink data transmission to the source base station through the protocol layer devices 7-22 of the first bearer, and may transmit uplink data to the target base station through the protocol layer devices 7-21 of the second bearer. In addition, the UE may continuously receive downlink data from the source base station and the target base station through the protocol layer devices of the first bearer and the second bearer. In the above, the UE may perform an RLC re-establishment procedure for the transmitting RLC layer device among the protocol layer devices when stopping transmitting uplink data to the source base station through the protocol layer devices 7-22 of the first bearer.

If the original data-based data duplicate transmission method or the efficient handover method of the first embodiment is configured for the downlink through the handover command message, the source base station and the target base station may transmit data to the UE through the first bearer or the second bearer by applying the original data-based data duplicate transmission method or the efficient handover method of the first embodiment. In addition, one receiving PDCP layer device of the UE may process received data by applying the second method of performing the duplicate detection procedure proposed above.

The first condition in which the UE switches uplink data transmission from the source base station to the target base station in the third operation 7-03 is as follows.
- When the UE performs a procedure of random access to the target base station through the layer devices of the second bearer, receives a random access response, configures and transmits a handover completion message to the target base station, and then receives an uplink transmission resource that is initially allocated by the target base station, or receives an initial indication of an uplink transmission resource

In the above, when the UE receives downlink data from the source base station and the target base station through the protocol layer devices of the first bearer and the second bearer, In the above, when the UE receives downlink data from the source base station and the target base station through the protocol layer devices of the first bearer and the second bearer, in order to facilitate reception of downlink data from the source base station (or the target base station) or facilitate the source base station (or the target base station) to transmit downlink data to the UE, with regard to AM bearers, an RLC status report is allowed to be transmitted to the source base station (or the target base station) in uplink through the protocol layer devices of the first bearer (or the second bearer). This is due to the fact that if an RLC status report of successful delivery is not indicated (that is, if the RLC status report is not received) after the AM bearers transmit data to a transmitting terminal, the AM bearers are unable to continue to transmit data thereafter.

In fourth operation 7-04 of the second embodiment of the efficient handover method of FIG. 7, the UE 7-02 may stop receiving downlink data from the source base station 7-05 through the protocol layer devices 7-22 of the first bearer if a second condition is satisfied. In the above, the second condition may include one of the following conditions.
- When the UE performs a procedure of random access to the target base station through the layer devices 7-21 of the second bearer and receives a random access response
- When the UE performs a procedure of random access to the target base station through the layer devices of the second bearer, receives a random access response, and configures and transmits a handover completion message to the target base station
- When the UE completes a procedure of random access to the target base station through the layer devices of the second bearer and initially transmits data using a PUCCH or PUSCH uplink transmission resource
- When the base station configures a separate timer for the UE through an RRC message and the timer expires
   ■ The timer may start when the UE receives a handover command message from the source base station, when the UE starts random access to the target base station (when transmitting a preamble), when the UE receives a random access response from the target base station, when the UE transmits a handover completion message to the target base station, or when the UE initially transmits data using a PUCCH or PUSCH uplink transmission resource.
- When the UE performs a procedure of random access to the target base station through the layer devices of the second bearer, receives a random access response, and configures and transmits a handover completion message to the target base station and then when the successful transmission of the handover completion message is identified by a MAC layer device (HARQ ACK) or an RLC layer device (RLC ACK)
- When the UE performs a procedure of random access to the target base station through the layer devices of the second bearer, receives a random access response, configures and transmits a handover completion message to the target base station, and then receives an uplink transmission resource that is initially allocated by the target base station, or receives an initial indication of an uplink transmission resource
- When the UE performs a procedure of random access to the target base station through the layer devices of the second bearer, receives a random access response, configures and transmits a handover completion message to the target base station, and then receives an uplink transmission resource that is initially allocated by the target base station and transmits data using the uplink transmission resource, or identifies successful transmission of the transmitted data
- The source base station may determine the time to stop transmitting the downlink data to the UE or the time to release the connection with the UE, based on a predetermined method (for example, when a predetermined timer expires (the timer may start after indication of handover) or when an indication indicating that the UE has successfully performed the handover to the target base station is received from the target base station). In addition, if no downlink data is received from the source base station for a predetermined period of time, the UE may determine that the connection with the source base station is released, and may release the connection.
- When the UE receives, from the target base station, an indication (e.g., an RRC message (e.g., an "RRCReconfiguration" message) to release the connection with the source base station, a MAC CE, an RLC control PDU, or a PDCP control PDU
- When the UE receives, from the source base station, an indication (e.g., an RRC message (e.g., an "RRCReconfiguration" message) to release the connection with the source base station, a MAC CE, an RLC control PDU, or a PDCP control PDU
- When the UE fails to receive downlink data from the source base station for a predetermined period of time
- If describing specific conditions based on the above conditions, when the UE successfully completes a procedure of random access to the target base station through the layer devices of the second bearer, and receives a first uplink transmission resource allocated by the target base station, or receives an initial indication of an uplink transmission resource
   ■ If the UE receives a handover command message from the source base station and is instructed to perform random access to the target base station, and if the indicated random access is contention-free random access (CFRA) (for example, if a predetermined preamble or a UE cell identifier (e.g., C-RNTI) is allocated)
   ◆ The UE may determine that the random access procedure is successfully completed when the UE transmits a predetermined preamble to the cell of the target base station and receives a random access response (RAR) message. Further, when the UE receives a first uplink transmission resource allocated, included, or indicated in the random access response message, the UE may determine that the second condition is satisfied.
   ■ If the UE receives a handover command message from the source base station and is instructed to perform random access to the target base station, and if the indicated random access is contention-based random access (CBRA) (for example, if a predetermined preamble or a UE cell identifier (e.g., C-RNTI) is not allocated)
   ◆ The UE may determine that the procedure of random access to the target base station is successfully completed when the UE transmits a preamble (e.g., a random preamble) to the cell of the target base station, receives a random access response (RAR) message, transmits message 3 (e.g., a handover completion message) using the uplink transmission resource allocated, included, or indicated in the random access response message, and receives a MAC CE (contention resolution MAC CE) indicating that the contention has been resolved from the target base station. Thereafter, when the UE monitors a PDCCH and initially receives an uplink transmission resource through the PDCCH corresponding to the C-RNTI of the UE or initially receives an indication thereof, the UE may determine that the second condition is satisfied. As another method, if the size of the uplink transmission resource allocated by the random access response message is sufficient enough for the UE to transmit message 3 and additionally transmit uplink data, the UE may determine that an initial uplink transmission resource has been received, thereby determining that the second condition is satisfied.
- In a case where a handover method that does not require a random access procedure (RACH-less handover) is indicated by the handover command message received by the UE
   ■ If the handover command message includes an uplink transmission resource to the target base station
   ◆ The UE may determine that the random access procedure is successfully completed when the UE transmits message 3 (e.g., a handover completion message or an "RRCReconfigurationComplete" message) using the uplink transmission resource of the target base station and receives a UE identity confirmation MAC CE from the base station, thereby determining that the second condition is satisfied. As another method, when the UE receives a first uplink transmission resource through a PDCCH corresponding to a C-RNTI of the UE by monitoring the PDCCH after a random access procedure is successfully completed, the UE may determine that the second condition is satisfied.
   ■ If the handover command message does not include an uplink transmission resource for the target base station
   ◆ When the UE receives an uplink transmission resource through a PDCCH corresponding to a C-RNTI of the UE by monitoring the PDCCH for the target base station (or cell), or when the UE transmits message 3 (e.g., a handover completion message or an "RRCReconfigurationComplete" message) using the uplink transmission resource and receives a UE identity confirmation MAC CE from the base station, the UE may determine that the random access procedure is successfully completed, thereby determining that the first condition is satisfied. As another method, when the UE receives a first uplink transmission resource through a PDCCH corresponding to a C-RNTI of the UE by monitoring the PDCCH after a random access procedure is successfully completed, the UE may determine that the first condition is satisfied.

In the above, when the source base station transmits downlink data to the UE and then fails to receive HARQ ACK or NACK information for the downlink data from the UE, it may be determined that the UE stops receiving downlink data from the source base station. In another method, the UE transmits the newly defined MAC control information, RLC control information, PDCP control information, or RRC message to the source base station in uplink so as to indicate no longer reception of downlink data from the source base station or release of a connection with the source base station.

In addition, the PDCP layer device 7-21 of the second bearer may continue to perform the seamless data transmission or reception to or from the target base station using information such as transmission/reception data, serial number information, header compression and decompression contexts, or the like, which are stored in the PDCP layer device 7-22 of the first bearer.

In FIG. 6 of the disclosure, when transmitting the handover command message 6-20 to the UE, the base station may define indicators for the embodiments proposed in the disclosure, and may indicate, to the UE, the handover procedure corresponding to a specific embodiment to be triggered through the handover command message (e.g., an RRCReconfiguration message). The UE may perform a handover procedure according to the handover method indicated by the handover command message, thereby performing handover to the target base station while minimizing data interruption time.

In the embodiments of the disclosure, when the UE performs data transmission or reception to or from the source base station through the protocol layer devices of the first bearer and performs data transmission or reception to or from the target base station through the protocol layer devices of the second bearer, the MAC layer device of the first bearer and the MAC layer device of the second bearer may each operate a separate discontinuous reception (DRX) cycle to reduce battery consumption of the UE. That is, the UE may apply the DRX cycle of the MAC layer device when transmitting and receiving data through the protocol layer devices of the first bearer and continue to apply the DRX cycle even after receiving the handover command message, and may stop the DRX cycle according to the first condition or the second condition of the disclosure. In addition, the UE may separately operate the application of the DRX cycle to the MAC layer device of the second bearer according to the instruction of the target base station.

In addition, in the disclosure, the UE stops uplink transmission to the source base station through the protocol layer devices of the first bearer and stops downlink reception from the source base station may be understood as that the UE re-establishes, initializes, or releases the protocol layer devices of the first bearer (PHY layer device, MAC layer device, RLC layer device, or PDCP layer device).

In the embodiments of the disclosure, for convenience of explanation, it has been described that the UE configures the first bearer for the source base station or the second bearer for the target base station, but the UE uses multiple first bearers for the source base station. Alternatively, it may be easily extended and applied to a case in which multiple first bearers for the source base station and multiple second bearers for the target base station are configured.

The first or second embodiment of the efficient handover method proposed in the disclosure, and the first method and the second method of the original data-based data duplicate transmission method and the duplicate detection procedure are easily extended and applied to the uplink case as well.

FIGS. 9 and 10 show the structure of an efficient PDCP layer device that may be applied to embodiments of the disclosure.

The disclosure proposes the structure of an efficient PDCP layer device as shown in FIGS. 9 and 10. The structure of the PDCP layer device shown in FIGS. 9 and 10 may be applied to first embodiment or the second embodiment of the efficient handover method for minimizing data interruption time proposed in the disclosure.

In FIGS. 9 and 10, the UE may perform data transmission or reception to or from a source base station through protocol layer devices of a first bearer, and may perform data transmission or reception to or from a target base station through protocol layer devices of a second bearer at the same time.

Although a PDCP layer device of the first bearer and a PDCP layer device of the second bearer are configured in the UE, respectively, the PDCP layer device of the first bearer and the PDCP layer device of the second bearer may logically operate as a single PDCP layer device as shown in FIGS. 9 and 10. Specifically, the single PDCP layer device may be implemented to have an upper PDCP layer device and two lower PDCP layer devices for the source base station and the target base station, respectively, by dividing the functions of the PDCP layer device.

In the above, the upper transmitting PDCP layer device may perform allocation of PDCP serial numbers to pieces of data received from the upper layer device. Further, the upper transmitting PDCP layer device may perform header compression. In addition, when integrity protection is configured using separate security keys set for the source base station and the target base station, two lower transmission PDCP layer devices for respective ones of the source base station and the target base station may apply the integrity protection procedure to the PDCP header and data (PDCP SDU), may apply a ciphering procedure thereto, and may transmit the same to the transmitting RLC layer device of the first bearer or the transmitting RLC layer device of the second bearer to perform transmission. The two lower transmission PDCP layer devices may perform parallel data processing of performing header compression, integrity protection, or ciphering procedure in parallel to accelerate data processing speed, and may perform the integrity protection or ciphering procedure using different security keys. In addition, the integrity protection or ciphering procedure may be performed on different data in logically one transmitting PDCP layer device using different security keys or security algorithms.

In the above, the upper receiving PDCP layer device may perform a duplicate detection function on the data received from lower layer devices, based on PDCP serial numbers. Alternatively, the upper receiving PDCP layer device may sort the received data in ascending order of the PDCP serial numbers, and may transmit the same to the upper layer in sequence. In addition, the upper receiving PDCP layer device may perform header decompression. Further, when integrity protection is configured using separate security keys set for the source base station and the target base station, two lower receiving PDCP layer devices for respective ones of the source base station and the target base station may apply an integrity verification procedure to the PDCP header and data (PDCP SDUs), may apply a deciphering procedure to the PDCP header and data, and may transmit the same to the upper receiving PDCP layer device, thereby processing the data. In order to reduce unnecessary integrity verification or deciphering procedures, the two lower receiving PDCP layer devices may perform a procedure of driving a window, discarding data outside the window, and discarding duplicate data, based on the PDCP serial numbers, and may perform the integrity verification or deciphering procedure only on the valid data inside the window. In order to accelerate a data processing rate, the two lower transmitting PDCP layer devices may perform parallel data processing in which header compression, integrity protection, and ciphering procedures are performed in parallel, based on the PDCP serial numbers, and may perform the integrity protection verification or deciphering procedure using different security keys. In addition, the integrity protection or ciphering procedure may be performed on different data in logically one transmitting PDCP layer device using different security keys or security algorithms. Further, the lower receiving PDCP layer devices may perform an out-of-sequence deciphering or integrity verification procedure for each piece of data received regardless of the sequence of the PDCP serial numbers.

The embodiments of the PDCP layer device procedure proposed in the disclosure may be extended and applied to the structure in which the upper PDCP layer device performs a header compression procedure on data transmitted in the PDCP layer device structure, by using a common header compression protocol context (e.g., ROHC context), and each of the lower PDCP layer devices performs a ciphering procedure using a different security key.

As another method, in order to process the ciphering or deciphering procedure in parallel with respect to data to be processed with different security keys, two devices or processors may respectively perform ciphering or deciphering procedure on data having different security keys.

As another method, in order to uniformly process ciphering or deciphering procedure with respect to data to be processed with different security keys, when one device or processor performs ciphering or deciphering procedure on respective pieces of data having different security keys, data processing may be performed by changing the security key according to each data.

As another method, in order to process the header compression or header decompression procedure in parallel with respect to data to be processed with different header compression contexts, two devices or processors may respectively perform header compression or header decompression procedure on respective pieces of data to be processed with different header compression contexts.

As another method, in order to uniformly process the header compression or header decompression procedure with respect to data to be processed with different header compression contexts, when one device or processor performs the header compression or header decompression procedure on respective pieces of data to be processed with different header compression contexts, data processing may be performed by changing the header compression contexts according to each data.

In addition, the embodiments of the PDCP layer device procedure proposed in the disclosure may be extended and applied to the structure in which lower PDCP layer devices 9-21 and 9-22 perform a deciphering procedure for respective pieces of data received in the PDCP layer device structure, by using different security keys, as shown in FIG. 9, and the upper PDCP layer device performs a header decompression procedure for the data, by using a common header compression protocol context (e.g., ROHC context).

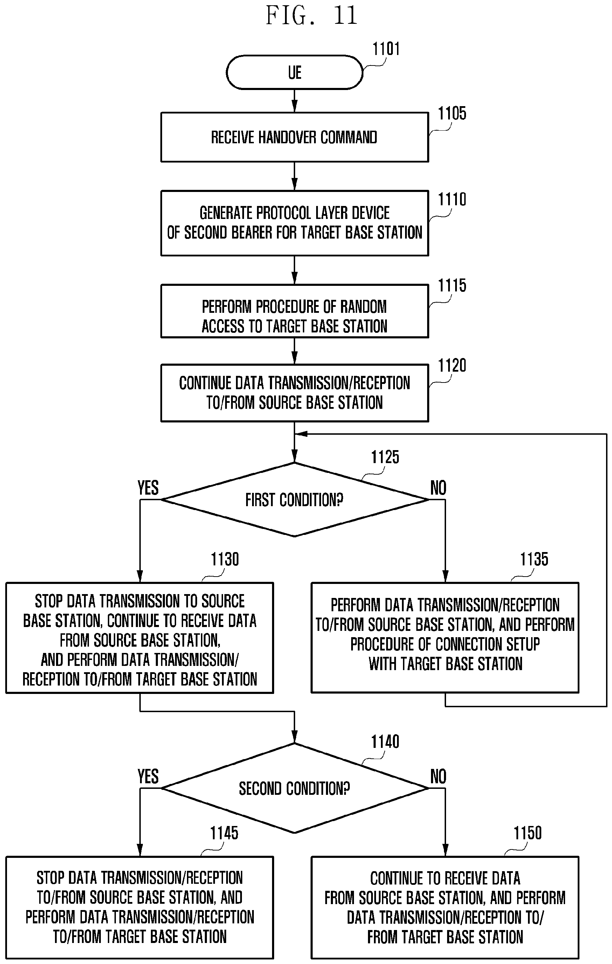

FIG. 11 illustrates the operation of a UE that may be applied to embodiments proposed in the disclosure.

In FIG. 11, when the UE 11-01 receives a handover command message in operation 11-05, if an indicator indicating the first embodiment of the efficient handover method is included in the message, the UE configures and establishes protocol layer devices of a second bearer in operation 11-10. In addition, when the UE performs a procedure of random access to a target base station through the established protocol layer devices in operation 11-15, the UE may continue to data transmission or reception (uplink data transmission and downlink data reception) to or from a source base station through protocol layer devices of the first bearer in operation 11-20. In addition, if an indicator indicating the original data-based data duplicate transmission method or the efficient handover method of the first embodiment is configured for downlink through the message, the receiving PDCP layer device of the UE applies a second method for performing a duplicate detection procedure on the received data. However, if an indicator indicating the original data-based data duplicate transmission method or the efficient handover method of the first embodiment is not configured for the downlink through the handover command message, the reception PDCP layer device of the UE applies a first method for performing a duplicate detection procedure.

If the first condition is satisfied, the UE may stop transmitting uplink data to the source base station through the protocol layer devices of the first bearer, and may transmit uplink data to the target base station through the protocol layer devices 7-21 of the second bearer. In addition, the UE may continuously receive downlink data from the source base station and the target base station through protocol layer devices of the first bearer and the second bearer in operation 11-30.

If the first condition is not satisfied in the above, the UE may continuously identify the first condition while continuing the previously performed procedure in operation 11-30.

Further, if the second condition is satisfied, the UE may stop receiving downlink data from the source base station 7-05 through the protocol layer devices of the first bearer in operation 11-45. In addition, the PDCP layer device 7-21 of the second bearer may continue to perform the seamless transmission or reception of data to or from the target base station using information such as transmission/reception data, serial number information, header compression and decompression contexts, or the like, which are stored in the PDCP layer device 7-22 of the first bearer.

If the second condition is not satisfied, the UE may continuously identify the second condition while continuing the previously performed procedure in operation 11-50.

The operation of the UE or the base station according to the embodiment of the disclosure is as follows.
- If an indicator indicating the first embodiment of the efficient handover method is included in the received handover command message
   ■ The source base station and the target base station perform an operation according to the first embodiment of the handover method
   ■ The UE performs the operation according to the first embodiment of the efficient handover method
   ■ The receiving PDCP layer device of the UE applies the first method of performing the duplicate detection procedure
- If an indicator indicating the second embodiment of the efficient handover method is included in the received handover command message, or an indicator indicating the first embodiment of the efficient handover method and an indicator indicating downlink original data-based data duplicate transmission method or the efficient handover method of the first embodiment are included therein
   ■ The source base station and the target base station perform an operation according to the second embodiment of the efficient handover method
   ■ The source base station and the target base station apply the original data-based data duplicate transmission method or the efficient handover method of the first embodiment
   ■ The UE performs an operation according to the second embodiment of the efficient handover method
   ■ The receiving PDCP layer device of the UE applies the second method of performing the duplicate detection procedure

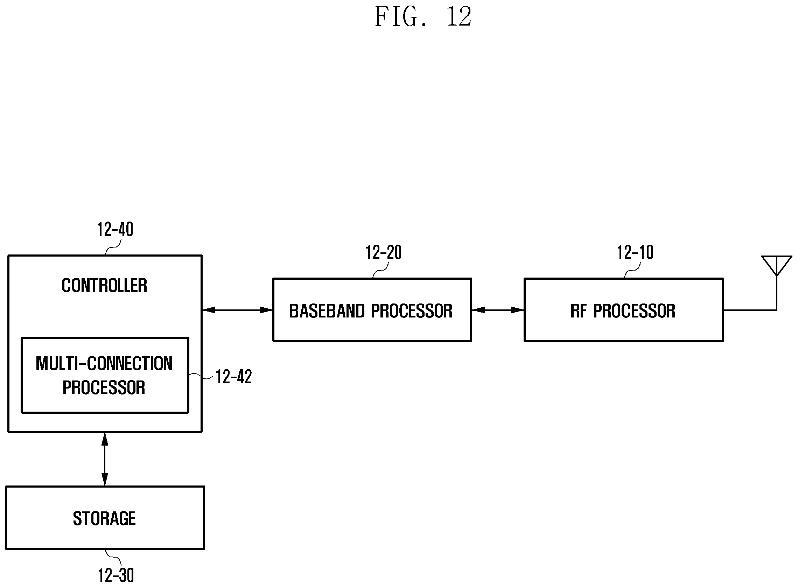

FIG. 12 illustrates the structure of a UE to which an embodiment may be applied.

Referring to FIG. 12, the UE includes a radio frequency (RF) processor 12-10, a baseband processor 12-20, a storage 12-30, and a controller 12-40.

The RF processor 12-10 performs a function of transmitting and receiving a signal through a radio channel, such as band conversion and amplification of a signal. That is, the RF processor 12-10 up-converts a baseband signal provided from the baseband processor 12-20 to an RF band signal to thus transmit the same through an antenna, and down-converts an RF band signal received through the antenna to a baseband signal. For example, the RF processor 12-10 may include a transmission filter, a reception filter, an amplifier, a mixer, an oscillator, a digital-to-analog converter (DAC), an analog-to-digital converter (ADC), and the like. Although only one antenna is illustrated in FIG. 12, the UE may have a plurality of antennas. In addition, the RF processor 12-10 may include a plurality of RF chains. Further, the RF processor 12-10 may perform beamforming. To perform beamforming, the RF processor 12-10 may adjust the phases and magnitudes of signals transmitted and received through a plurality of antennas or antenna elements. In addition, the RF processor may perform MIMO, and may receive multiple layers when performing the MIMO operation. The RF processor 12-10 may perform reception beam sweeping by appropriately setting a plurality of antennas or antenna elements under the control of the controller, or may adjust the direction and beam width of the reception beam such that the reception beam is coordinated with the transmission beam.

The baseband processor 12-20 performs a function of conversion between a baseband signal and a bit string according to the physical layer specification of the system. For example, in a case of data transmission, the baseband processor 12-20 encodes and modulates transmission bit strings, thereby generating complex symbols. In addition, upon receiving data, the baseband processor 12-20 demodulates and decodes a baseband signal provided from the RF processor 12-10 to thus recover reception bit strings. For example, in a case where an orthogonal frequency division multiplexing (OFDM) scheme is applied, when transmitting data, the baseband processor 12-20 generates complex symbols by encoding and modulating transmission bit strings, maps the complex symbols to subcarriers, and then configures OFDM symbols through an inverse fast Fourier transform (IFFT) operation and cyclic prefix (CP) insertion. In addition, when receiving data, the baseband processor 12-20 divides the baseband signal provided from the RF processor 12-10 into OFDM symbol units, restores the signals mapped to the subcarriers through a fast Fourier transform (FFT) operation, and then restores reception bit strings through demodulation and decoding.

The baseband processor 12-20 and the RF processor 12-10 transmit and receive signals as described above. Accordingly, the baseband processor 12-20 and the RF processor 12-10 may be referred to as a "transmitter", a "receiver", a "transceiver", or a "communication unit". Further, at least one of the baseband processor 12-20 and the RF processor 12-10 may include a plurality of communication modules in order to support a plurality of different radio access techniques. In addition, at least one of the baseband processor 12-20 and the RF processor 12-10 may include different communication modules to process signals in different frequency bands. For example, the different radio access techniques may include an LTE network, an NR network, and the like. In addition, the different frequency bands may include super-high frequency (SHF) (e.g., 2.5 GHz or 5 GHz) bands or millimeter wave (e.g., 60 GHz) bands.

The storage 12-30 stores data such as fundamental programs, application programs, and configuration information for the operation of the UE. The storage 12-30 provides the stored data in response to a request from the controller 12-40.

The controller 12-40 controls the overall operation of the UE. For example, the controller 12-40 transmits and receives signals through the baseband processor 12-20 and the RF processor 12-10. In addition, the controller 12-40 records and reads data in and from the storage 12-30. To this end, the controller 12-40 may include at least one processor. For example, the controller 12-40 may include a communication processor (CP) for controlling communication and an application processor (AP) for controlling upper layers such as application programs.

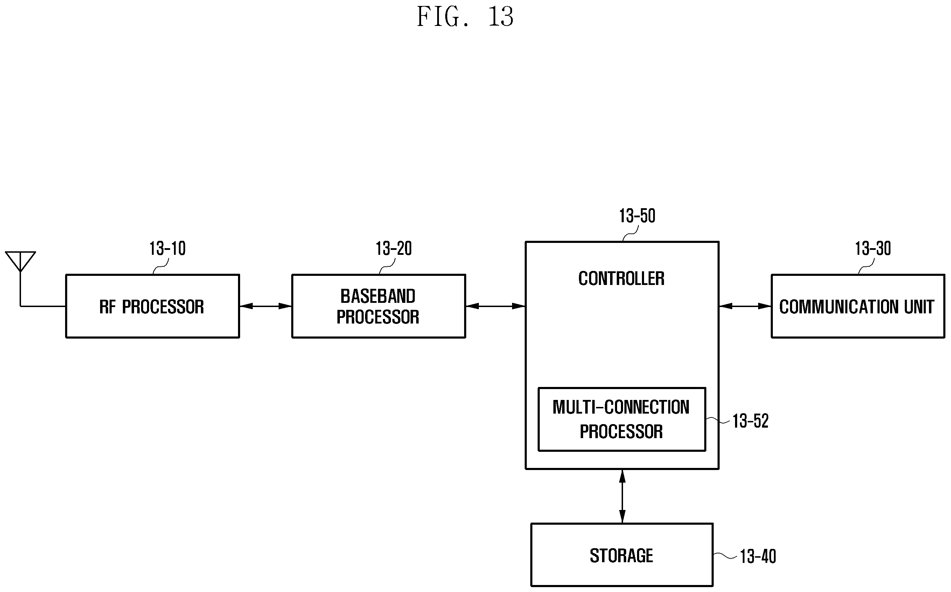

FIG. 13 illustrates a block diagram of a TRP in a wireless communication system to which an embodiment may be applied.

As shown in FIG. 13, the base station includes an RF processor 13-10, a baseband processor 13-20, a backhaul communication unit 13-30, a storage 13-40, and a controller 13-50.

The RF processor 13-10 performs a function of transmitting and receiving signals, such as band conversion and amplification of a signal, through a radio channel. That is, the RF processor 13-10 up-converts a baseband signal provided from the baseband processor 13-20 to an RF band signal to thus transmit the same through an antenna, and down-converts an RF band signal received through the antenna to a baseband signal. For example, the RF processor 13-10 may include a transmission filter, a reception filter, an amplifier, a mixer, an oscillator, a DAC, an ADC, and the like. Although only one antenna is shown in the drawing, the first access node may have a plurality of antennas. In addition, the RF processor 13-10 may include a plurality of RF chains. Further, the RF processor 13-10 may perform beamforming. To perform beamforming, the RF processor 13-10 may adjust the phases and magnitudes of signals transmitted and received through a plurality of antennas or antenna elements. The RF processor may perform a downlink MIMO operation by transmitting one or more layers.

The baseband processor 13-20 performs a function of conversion between a baseband signal and a bit string according to a physical layer specification of a first radio access technique. For example, in the case of data transmission, the baseband processor 13-20 encodes and modulates transmission bit strings, thereby generating complex symbols. In addition, upon receiving data, the baseband processor 13-20 demodulates and decodes a baseband signal provided from the RF processor 13-10 to thus recover reception bit strings. For example, in a case where an OFDM scheme is applied, when transmitting data, the baseband processor 13-20 generates complex symbols by encoding and modulating transmission bit strings, maps the complex symbols to subcarriers, and then configures OFDM symbols through the IFFT operation and CP insertion. In addition, when receiving data, the baseband processor 13-20 divides the baseband signal provided from the RF processor 13-10 into OFDM symbol units, restores the signals mapped to the subcarriers through the FFT operation, and then restores reception bit strings through demodulation and decoding. The baseband processor 13-20 and the RF processor 13-10 transmit and receive signals as described above. Accordingly, the baseband processor 13-20 and the RF processor 13-10 may be referred to as a "transmitter", a "receiver", a "transceiver", a "communication unit", or a "wireless communication unit".

The communication unit 13-30 provides an interface for performing communication with other nodes in the network.

The storage 13-40 stores data such as fundamental programs, application programs, and configuration information for the operation of the primary base station. In particular, the storage 13-40 may store information about bearers allocated to a connected terminal, a measurement result reported from a connected terminal, and the like. In addition, the storage 13-40 may store information that is a criterion for determining whether a multi-connection is provided to the UE or is released. In addition, the storage 13-40 provides the stored data in response to a request from the controller 13-50.

The controller 13-50 controls the overall operation of the primary base station. For example, the controller 13-50 transmits and receives signals through the baseband processor 13-20 and the RF processor 13-10 or the backhaul communication unit 13-30. In addition, the controller 13-50 records and reads data in and from the storage 13-40. To this end, the controller 13-50 may include at least one processor.

Meanwhile, in the disclosure, a header compression decompression failure problem that may occur when a handover is performed in a next-generation mobile communication system is considered for each scenario, and a base station operation or a UE operation capable of preventing the header compression failure problem is proposed.

Hereinafter, the structure of an LTE system, the radio protocol structure in the LTE system, the structure of a next-generation mobile communication system, and the radio protocol structure of the next-generation mobile communication system, which are applicable in describing the present embodiment, may refer to details that have been described above with reference to FIGS. 1 to 4.

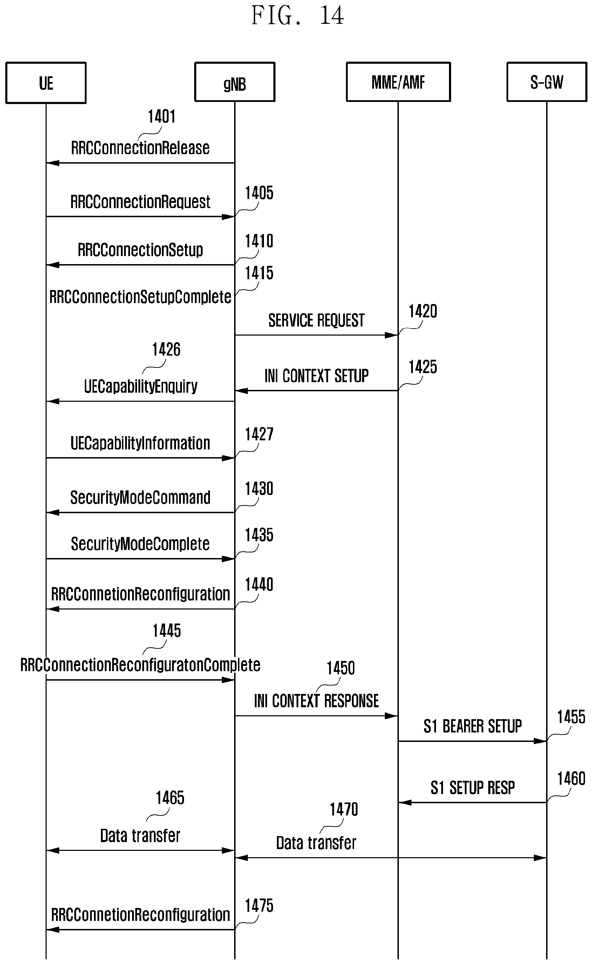

FIG. 14 illustrates a procedure in which a UE switches from an RRC idle mode to an RRC connected mode to establish a connection with a network in the disclosure.

In FIG. 14, when a UE for performing data transmission or reception in the RRC connected mode does not perform data transmission or reception for a predetermined reason or for a predetermined period of time, a base station may transmit an RRCConnectionRelease message to the UE to allow the UE to be switched to an RRC idle mode (indicated by reference numeral 14-01). Subsequently, a UE (hereinafter, idle mode UE), to which a connection is not currently established, may perform an RRC connection establishment process with the base station if there is data to be transmitted. The UE establishes reverse transmission synchronization with the base station through a random access process and transmits the RRCConnectionRequest message to the base station (indicated by reference numeral 14-05). The message may include a cause (establishmentCause) for establishing a connection with an identifier of the UE. The base station may transmit an RRCConnectionSetup message so that the UE establishes an RRC connection (indicated by reference numeral 14-10).

The message includes configuration information for each service/bearer/each RLC device, for each logical channel, or for each bearer, information on whether or not to use ROHC for each bearer/logical channel, ROHC configuration information (e.g., ROHC version, initial information, etc.), statusReportRequired information (information through which the base station instructs the UE to perform the PDCP Status report), or drb-ContinueROHC information (which is configuration information for maintaining and using the ROHC configuration information as it is, and may be included in PDCP layer device configuration information (pdcp-config) and then be transmitted). In addition, the message may include RRC connection setup information and the like. A bearer for RRC connection is also referred to as a signaling radio bearer (SRB) and is used for transmitting or receiving an RRC message, which is a control message between a UE and a base station.

A UE, which has established an RRC connection, may transmit an RRCConnetionSetupComplete message to the base station (indicated by reference numeral 14-15). The message includes a control message called SERVICE REQUEST, which the UE requests a bearer setup for a predetermined service from an MME. The base station may transmit the SERVICE REQUEST message stored in the RRCConnetionSetupComplete message to the MME or AMF (indicated by reference numeral 14-20). The MME or AMF determines whether to provide a service requested by the UE. As a result of the determination, if the UE determines to provide the requested service, the MME or AMF may transmit an INITIAL CONTEXT SETUP REQUEST message to the base station (indicated by reference numeral 14-25). The message includes information, such as quality of service (QoS) information to be applied in a case where a data radio bearer (DRB) is configured and security-related information (for example, a security key and a security algorithm) to be applied to the DRB.

In addition, when the base station fails to receive capability information of the UE from the MME or the AMF, the base station may transmit a UE capability information request message to the UE in order to identify the capability information of the UE (indicated by reference numeral 14-26). Upon receiving the UE capability information request message, the UE may configure and generate a UE capability information message and report the UE capability information message to the base station (indicated by reference numeral 14-27). The UE capability information message may include the type of handover methods supported by the UE. For example, an indicator for each handover method may be defined in the UE capability information report message, and handover methods supported by the UE may be indicated by the indicator, to thereby whether each handover method is supported may be reported to the base station. When the base station identifies the UE capability information, the base station may configure, for the UE, a handover method to be indicated by considering the reported UE capability by using an indicator, which is defined for each handover method in a handover command message (e.g., RRCReconfiguration message), when instructing the UE to perform handover. The UE may perform a procedure of handover to a target base station according to a handover method indicated through the handover command message. In addition, the UE capability information message may include whether the UE supports a header compression method or protocol for uplink or downlink. In addition, based on the UE capability information, the base station may configure a header compression method for the uplink or downlink for each bearer or for each PDCP layer device to the UE through the RRCReconfiguration message (e.g., a handover command message).

The base station exchanges a SecurityModeCommand message (indicated by reference numeral 14-30) and a SecurityModeComplete message (indicated by reference numeral 14-35) in order to establish security with the UE. If the security configuration is completed, the base station may transmit an RRCConnectionReconfiguration message to the UE (indicated by reference numeral 14-40).

The message includes configuration information for each service/bearer/each RLC device, for each logical channel, or for each bearer, information on whether or not to use ROHC for each bearer/logical channel, ROHC configuration information (e.g., ROHC version, initial information, etc.), statusReportRequired information (information indicating that the base station instructs the UE to perform the PDCP Status report), or drb-ContinueROHC information (which is configuration information for maintaining and using the ROHC configuration information as it is and may be included in the PDCP layer device configuration information and then be transmitted (pdcp-config)). In addition, the message may include RRC connection setup information and the like. A bearer for RRC connection is also referred to as a signaling radio bearer (SRB) and is used for transmitting or receiving an RRC message, which is a control message between a UE and a base station.

In addition, the message includes configuration information of a DRB in which user data is to be processed, and the UE configures the DRB by applying the information and transmits an RRCConnectionReconfigurationComplete message to the base station (indicated by reference numeral 14-45). The base station, which has completed DRB setup with the UE, transmits an INITIAL CONTEXT SETUP COMPLETE message to the MME or AMF (indicated by reference numeral 14-50), and the MME or AMF, which has received the INITIAL CONTEXT SETUP COMPLETE message, may exchange an S1 BEARER SETUP message and an S1 BEARER SETUP RESPONSE message in order to establish the S-GW and S1 bearer (indicated by reference numerals 14-055 and 14-60). The S1 bearer is a connection for data transmission, established between the S-GW and the base station, and corresponds to the DRB in a one-to-one relationship. When the above process is completed, the UE transmits or receives data through S-GW to or from the base station (indicated by reference numerals 14-65 and 14-70). As such, the general data transmission process may largely include three operations of RRC connection setup, security configuration, and DRB configuration. In addition, the base station may transmit an RRCConnectionReconfiguration message to the UE in order to perform updating, adding, or changing of a configuration (indicated by reference numeral 14-75).

In the disclosure, a bearer may include SRB and DRB, the SRB denotes a signaling radio bearer, and the DRB denotes a data radio bearer. The SRB is mainly used to transmit or receive RRC messages of an RRC layer device, and the DRB is mainly used to transmit or receive user layer data. In addition, a UM DRB denotes a DRB which uses an RLC layer device operating in an unacknowledged mode (UM mode), and an AM DRB denotes a DRB which uses an RLC layer device operating in an acknowledged mode (AM mode).

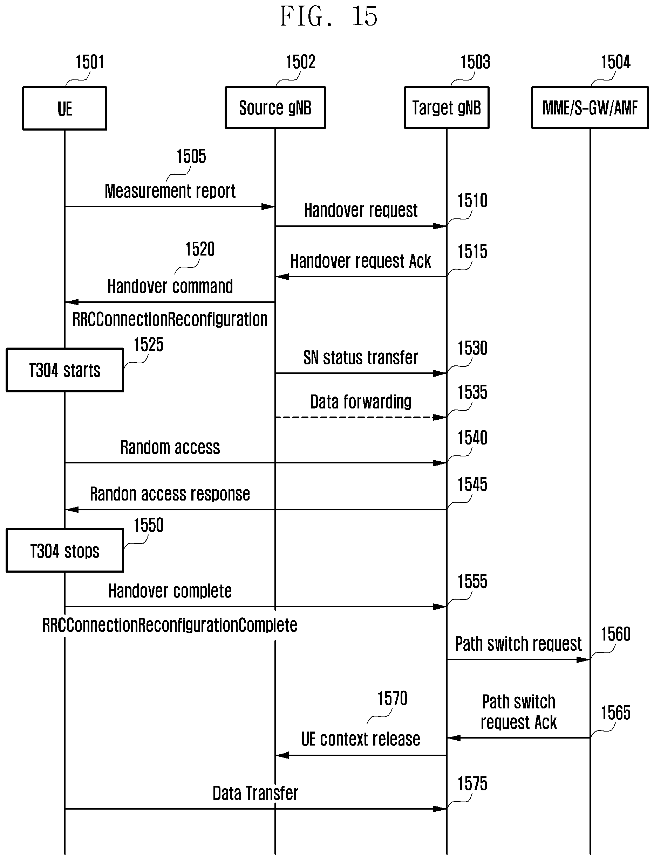

FIG. 15 illustrates signaling procedures for performing handover in a next-generation mobile communication system.

A UE 15-01 in the RRC connected mode reports cell measurement information (measurement Report) to a current source base station 15-02 when a periodic or specific event is satisfied (indicated by reference numeral 15-05) . The source base station determines whether the UE performs handover to an adjacent cell based on the measurement information. The handover is technology for switching a source base station, which provides a service to the connected-mode UE, to another base station (or another cell of the same base station). When the source base station determines to perform the handover, the source base station transmits a handover (HO) request message to a new base station, that is, a target base station 15-03 to provide a service to the UE and make a request for the handover (indicated by reference numeral 15-10).

The HO request message may include a handover method supported or preferred by the source base station or multiple handover methods, or may include an indicator for requesting a handover method preferred by the target base station according to another method.

When the target base station accepts the handover request, the target base station transmits a handover request acknowledgement (HO request Ack) message to the source base station (indicated by reference numeral 15-15) .

The HO request Ack message may include a handover method, which the source base station includes in the handover request message or a handover method, which is supported by (or preferred or instructed by) the target base station, and the source base station may indicate, to the UE, a handover method indicated by the target base station through the HO request Ack message. As another method, the target base station may indicate the handover method, supported by the target base station through the HO request Ack message, using an indicator, so that the source base station and the UE perform the indicated handover method.

Upon receiving the message, the source base station transmits a handover (HO) command message to the UE (indicated by reference numeral 15-20). The HO command message is transmitted to the UE by the source base station by using an RRC Connection Reconfiguration message (indicated by reference numeral 15-20).

By using an indicator, which is defined for each handover method through the handover command message (e.g., the RRCReconfiguration message), the base station may configure, for the UE, a handover method indicated by considering the UE capability. The UE may perform a procedure of handover to the target base station according to the handover method indicated through the handover command message.

Upon receiving the message, the UE stops data transmission or reception to or from the source base station and starts a T304 timer. When the handover of the UE to the target base station is not successful for a predetermined time, T304 returns the UE to the original configuration and switches the UE to the RRC idle state. The source base station transmits a sequence number (SN) status for uplink/downlink data, and if there is downlink data, the source base station transmits the downlink data to the target base station (indicated by reference numerals 15-30 and 15-35). The UE attempts random access to the target cell indicated by the source base station (indicated by reference numeral 15-40) . The random access is to inform the target cell that the UE moves through the handover and also to synchronize uplink. For the random access, the UE transmits a preamble corresponding to a preamble ID received from the source base station or a randomly selected preamble ID to the target cell. After transmitting the preamble, the UE monitors whether a random access response (RAR) is transmitted from the target cell after a predetermined number of subframes. A time window during which monitoring is performed is referred to as a random access response (RAR) window. When the RAR is received for a particular time in operation 15-45, the UE transmits a handover (HO) complete message, which is an RCConnectionReconfigurationComplete message, to the target base station in operation 15-55. As described above, upon successfully receiving the RAR from the target base station, the UE terminates the timer T304 in operation 15-50. In order to switch a path of bearers established in the source base station, the target base station makes a request for switching the path in operations 15-60 and 15-65, and notifies the source base station of deletion of UE context in operation 15-70. Accordingly, the UE attempts data reception from the target base station at a RAR window start time point, and after RAR reception, starts data transmission or reception to or from the target base station while transmitting an RRCConnectionReconfigurationComplete message.

Hereinafter, various embodiments of the disclosure propose specific solutions in order to prevent a header decompression failure problem that may occur during handover in a next-generation mobile communication system.

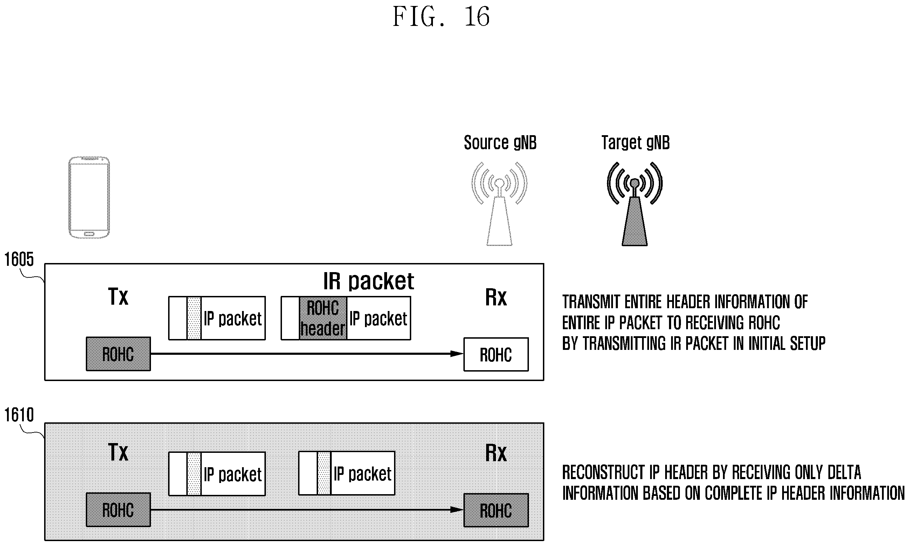

FIG. 16 illustrates a header compression or decompression procedure when PDCP layer devices at the transmitting terminal and the receiving terminal use an ROHC protocol in a handover procedure as shown in FIG. 15.

In FIG. 16, if a transmission or receiving PDCP layer device (AM DRB, AM Data radio bearer), in which an out of delivery indicator is not configured through the RRC message and which is connected or configured with an RLC device supporting AM mode or UM mode, configures a connection with the source base station and receives from the base station a configuration that the ROHC protocol is to be used before transmitting data (configurable through the RRC message as in FIG. 14 or FIG. 15), the transmitting PDCP layer device completes a bearer setup or a ROHC protocol configuration, and configures and transmits an IR packet, and the receiving terminal PDCP layer device receives the IR packet and synchronizes the ROHC protocol with the transmitting terminal. That is, entire header information of an upper layer header (e.g., TCP/IP header) and ROHC protocol-related configuration information for compression or decompression (e.g., ROCH context) are identified and stored so as to be used to decompress a header compressed with the ROHC protocol with regard to received data (indicated by reference numeral 16-05) .

In reference numeral 16-05, when synchronization of the ROHC protocol of the transmitting terminal PDCP device and the ROHC protocol of the receiving terminal PDCP device is completed, data which is transmitted by compressing the upper layer header (e.g., TCP/IP header) using the ROHC protocol by a transmitting terminal may be decompressed and reconstructed by the receiving terminal ROHC protocol and delivered to the upper layer. In the above, the initialization and refresh (IR) packet may be included in data and transmitted from the transmission PDCP layer device to the receiving PDCP layer device, and the IR packet includes compression configuration information for header compression or decompression. Therefore, if the IR packet is not successfully delivered to the receiving PDCP layer device, a header decompression error may occur with regard to the received data. That is, the header decompression failure problem described in the disclosure may occur when the header compression context (ROHC context) is not used as it is during handover, when an indicator indicating use of the header compression context as it is (e.g., drb-ContinueROHC) is not configured or not indicated through an RRC message indicating handover (e.g., RRCReconfiguration message), or when the header compression protocol is initialized. Therefore, when the header decompression failure problem occurs, the methods proposed in the disclosure may be applied. If the header compression context (ROHC context) is used as it is during handover or the header compression protocol is not initialized, the methods proposed in the disclosure may not be applied. However, for convenience of implementation, the methods proposed in the disclosure may always be applied when performing handover.

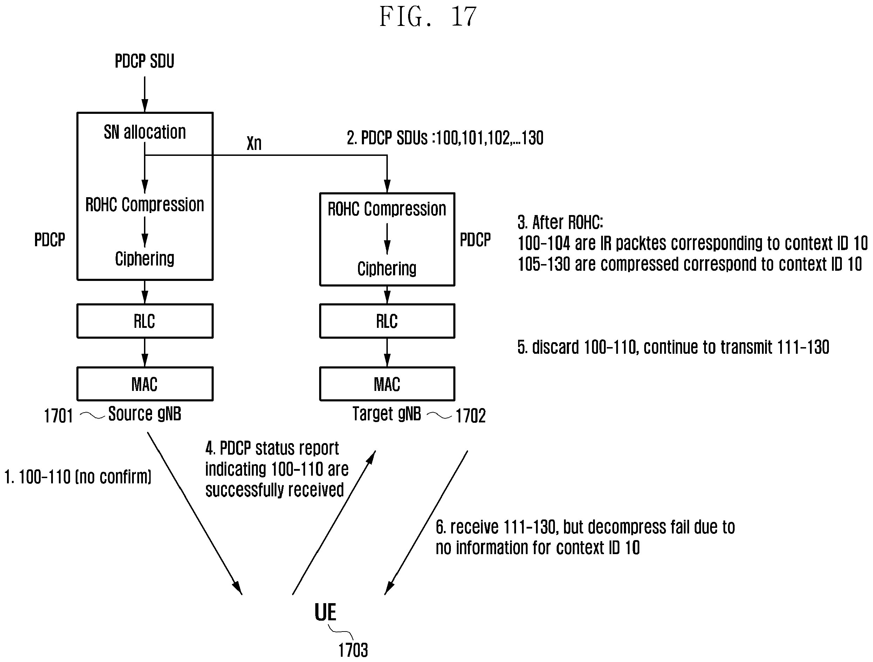

FIG. 17 illustrates a first embodiment in which a header decompression failure problem may occur with regard to downlink data during handover in the disclosure.

In FIG. 17, upon receiving a handover command message from a source base station 17-01, a UE 17-03 performs a handover method indicated through the handover command message and performs a procedure of handover to a target base station 17-02.

In the first embodiment of the disclosure in the above, an embodiment of a specific procedure in which a base station and a UE perform data transmission or reception in a handover procedure is as follows.
- Stage 1: A source base station transmits pieces of data, PDCP serial numbers or COUNT values of which are in the range of from 100 to 110 (e.g., PDCP PDU or PDCP SDU) to a UE through a downlink. In this case, the source base station may not receive an acknowledgement of successful delivery of data corresponding to No. 100 to No. 110 (e.g., RLC ACK of an RLC status report) to the UE. In addition, the source base station indicates a handover by transmitting a handover command message (e.g., an RRCReconfiguration message) to the UE.
- Stage 2: The source base station may deliver, to the target base station, pieces of data for which the acknowledgement of successful delivery has not been received in the stage 1 or all pieces of data in ascending order starting from data, which has the lowest PDCP serial number or the COUNT value and for which the acknowledgement of successful delivery has not been received, to allow the UE to perform transmission or retransmission thereof.
- Stage 3: A target base station may perform data processing of pieces of data (e.g., PDCP SDUs), received from a source base station, in a PDCP layer device. For example, the transmission PDCP layer device of a target base station may perform header compression of the data based on the header compression context (ROHC context) of the target base station, may perform integrity protection or ciphering procedure based on the security key of the target base station, and may deliver the data to a lower layer. In the above, in order to initialize or synchronize the header compression context, the target base station may configure an IR packet in pieces of data, PDCP serial numbers or COUNT values of which corresponds to a range of from No. 100 to No. 104 and perform data processing thereof. More specifically, in the above, when the header compression protocol is operating in a unidirectional mode (U mode, which is a mode in which a receiving terminal does not require feedback (ACK or NACK)), in a reliable mode (R mode, which is a mode in which a receiving terminal sends ACK or NACK), in an optimistic mode (O mode, which is a mode in which a receiving terminal sends NACK), or in an IR state, IR packets can be generated and transmitted. In addition, data from No. 105 to No. 130 may be compressed based on the header compression context, and integrity protection or ciphering thereof may be performed and delivered to a lower layer or prepared for transmission. In the above, the initialization and refresh (IR) packet may be included in data and transmitted from the transmitting PDCP layer device to the receiving PDCP layer device, and may include compression configuration information for compression or decompression. Therefore, if the IR packet is not successfully delivered to a receiving PDCP layer device, a header decompression error may occur with regard to the received data.
- Stage 4: After receiving a handover command message from a source base station, a UE may complete the procedure of handover to the target base station according to the handover method or handover configuration information indicated through the handover command message, and then transmit a handover completion message (e.g., an RRCReconfigurationComplete message) to the target base station and configure and transmit a PDCP status report to each PDCP layer device or bearer. The PDCP status report may include a status report indicating that No. 100 to No. 110 of PDCP serial numbers or COUNT values have been successfully received from the source base station.
- Stage 5: When receiving the PDCP status report in the above, the target base station discards data for which successful delivery has been received. Accordingly, data corresponding to No. 100 to No. 110 of the PDCP serial numbers or COUNT values may be discarded, and data corresponding to No. 111 to No. 130 of the PDCP serial numbers or COUNT values may be transmitted to a UE.
- Stage 6: In the above, the UE may receive and decipher data corresponding to No. 111 to No. 130 of the PDCP serial numbers or COUNT values from the target base station, if integrity protection is configured, the UE may perform integrity verification and then perform the header decompression procedure. However, since the IR packet including the data-compressed information is not received when the header decompression procedure is performed, a header decompression failure occurs, resulting in data loss or an error occurs in data.

In the disclosure, methods for solving the problem of the first embodiment in which a header decompression failure problem may occur with respect to downlink data during handover are proposed as follows. One or multiple methods among the following methods may be applied for transmission.
- Method 1: When a target base station discards data according to a PDCP status report received from a UE during handover, if data including an IR packet generated after data processing in advance is to be discarded, the target base station discards the data, and then newly generates or configures an IR packet and includes the IR packet in multiple pieces of data to be transmitted to the UE for the first time and performs transmission thereof. Therefore, since the UE can receive the IR packet, the UE may normally perform a header decompression procedure of data received thereafter.
- Method 2: if a header compression procedure is configured when performing handover, a UE and a base station may not perform a header compression procedure with regard to pieces of data that are transmitted during handover or until the handover is performed and completed, and may continue to transmit the data by including an IR packet therein. If the header compression procedure is not applied and transmission of the data is continued by including an IR packet therein as described above, a receiving PDCP layer device only stores and synchronizes ROHC contexts and does not perform a header decompression procedure with regard to received data, and thus a header decompression failure problem does not occur. When IR packet transmission occurs in the handover procedure, the IR packet may be applied with one of the following methods and transmitted.
   ■ Method 2-1: With regard to pieces of data continuously transmitted until before reception of a handover completion message from a UE, until a PDCP status report is received, until a predetermined timer is expired, or during a predetermined period of time, a target base station may include IR packet therein and then transmit the same without applying a header compression procedure thereto. Thereafter, a header compression procedure may be applied to pieces of transmitted data.
   ■ Method 2-2: With regard to pieces of data received from a source base station, a target base station may include IR packet therein and then transmit the same without applying a header compression procedure thereto. In addition, the target base station may apply a header compression procedure to new downlink data received from the core network and transmit the same.
   ■ Method 2-3: With regard to pieces of data for retransmission, a target base station may include IR packet therein and then transmit the same without applying a header compression procedure thereto. In addition, the target base station may apply a header compression procedure to downlink data for new transmission or configured to be transmitted for the first time and transmit the same.
   ■ Method 2-4: With regard to pieces of data for retransmission, a target base station may include IR packet therein and then transmit the same without applying a header compression procedure thereto. In addition, with regard to downlink data for new transmission or configured to be transmitted for the first time, the target base station may include IR packet in the first multiple pieces of data and then transmit the same, and the target base station may apply a header compression procedure to pieces of data transmitted thereafter and transmit the same.
- Method 3: In the handover procedure, when transmitting an IR packet, the target base station may perform transmission of downlink PDCP control data (e.g., PDCP control PDU (e.g., a new PDCP control PDU or interspersed ROHC feedback)) by including an IR packet therein instead of including the IR packet in downlink data (e.g., PDCP Data PDU). The downlink PDCP control data is not allocated with a COUNT value or a PDCP serial number and is not discarded due to a PDCP status report, and thus a base station may always transmit the PDCP control data including an IR packet in which data processing is performed in advance, or may transmit multiple pieces of data or first perform data transmission. Therefore, upon receiving PDCP control data including the IR packet, a UE may receive, store, and synchronize a ROHC context, and may normally apply a header decompression procedure to downlink data.

In the disclosure, the problem of the first embodiment in which a header decompression failure problem may occur with regard to downlink data during handover may also occur with regard to uplink data during handover. Therefore, in the following of the disclosure, methods for solving the problem of the first embodiment occurring with respect to uplink data are proposed as follows. One or multiple methods among the following methods may be applied for transmission.
- Method 1: During handover, when a UE discards data according to a PDCP status report received from a source base station or a target base station, if data including an IR packet generated after data processing in advance is to be discarded, the UE discards the data, and then newly generates or configures an IR packet and includes the IR packet in multiple pieces of data to be transmitted to the target base station for the first time and performs transmission thereof. Therefore, since the UE can receive the IR packet, the UE may normally perform a header decompression procedure of data received thereafter.
- Method 2: if a header compression procedure is configured when performing handover, a UE and a base station may not perform a header compression procedure with regard to pieces of data that are transmitted during handover or until the handover is performed and completed, and may continue to transmit the data by including an IR packet therein. If the header compression procedure is not applied and transmission of the data is continued by including an IR packet therein as described above, a receiving PDCP layer device only stores and synchronizes ROHC contexts and does not perform a header decompression procedure with regard to received data, and thus a header decompression failure problem does not occur. When IR packet transmission occurs in the handover procedure, the IR packet may be applied with one of the following methods and transmitted.
   ■ Method 2-1: With regard to pieces of data continuously transmitted until a handover completion message is transmitted after a handover command message is received, until an uplink transmission resource is first allocated by a target base station, until a PDCP status report is received, until a predetermined timer is expired, or during a predetermined period of time, a UE may include an IR packet therein and then transmit the same without applying a header compression procedure thereto. Thereafter, a header compression procedure may be applied to pieces of transmitted data.
   ■ Method 2-2: With regard to pieces of data having been transmitted to a source base station, a UE may include IR packet therein and then transmit the same without applying a header compression procedure thereto. In addition, the UE may apply a header compression procedure to new uplink data and transmit the same.
   ■ Method 2-3: With regard to pieces of data for retransmission, a UE may include IR packet therein and then transmit the same without applying a header compression procedure thereto. In addition, the UE may apply a header compression procedure to uplink data for new transmission or configured to be transmitted for the first time and transmit the same.
   ■ Method 2-4: With regard to pieces of data for retransmission, a UE may include IR packet therein and then transmit the same without applying a header compression procedure thereto. In addition, with regard to uplink data for new transmission and configured to be transmitted for the first time, the UE may include IR packet in the first multiple pieces of data and then transmit the same, and the UE may apply a header compression procedure to pieces of data transmitted thereafter and transmit the same.
- Method 3: In the handover procedure, when transmitting an IR packet, the UE may perform transmission of uplink PDCP control data (e.g., PDCP control PDU (e.g., a new PDCP control PDU or interspersed ROHC feedback)) by including an IR packet therein instead of including the IR packet in uplink data (e.g., PDCP Data PDU) . The uplink PDCP control data is not allocated with a COUNT value or a PDCP serial number and is not discarded due to a PDCP status report, and thus the UE may always transmit the PDCP control data including an IR packet in which data processing is performed in advance, or may transmit multiple pieces of data or first perform data transmission. Therefore, upon receiving PDCP control data including the IR packet, a UE may receive, store, and synchronize a ROHC context, and may normally apply a header decompression procedure to uplink data.

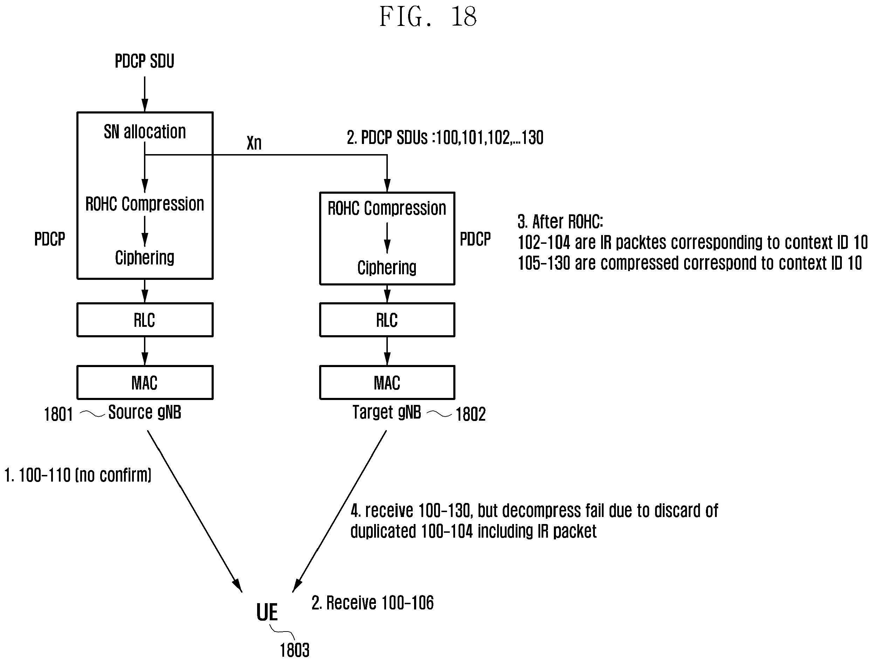

FIG. 18 illustrates a second embodiment in which a header decompression failure problem may occur with regard to downlink data during handover in the disclosure.

In FIG. 18, upon receiving a handover command message from the source base station 18-01, the UE 18-03 performs a handover method indicated through the handover command message and performs a procedure of handover to the target base station 18-02.

In the second embodiment of the disclosure in the above, an embodiment of a specific procedure in which a base station and a UE perform data transmission or reception in a handover procedure is as follows.
- Stage 1: A source base station transmits pieces of data, PDCP serial numbers or COUNT values of which are in the range of from 100 to 110 (e.g., PDCP PDU or PDCP SDU) to a UE through a downlink. In this case, the source base station may not receive an acknowledgement of successful delivery of data corresponding to No. 100 to No. 110 (e.g., RLC ACK of an RLC status report) to the UE. In addition, the source base station indicates a handover by transmitting a handover command message (e.g., an RRCReconfiguration message) to the UE.
- Stage 2: The source base station may deliver, to the target base station, pieces of data for which the acknowledgement of successful delivery has not been received in the stage 1 or all pieces of data in ascending order starting from data, which has the lowest PDCP serial number or the COUNT value and for which the acknowledgement of successful delivery has not been received, to allow the UE to perform transmission or retransmission thereof. In addition, in the stage 1, the UE has successfully received data corresponding to No. 100 to No. 106 of the PDCP serial numbers or COUNT values, but has failed to transmit feedback (RLC ACK) indicating successful reception of the data to the source base station.
- Stage 3: A target base station may perform data processing of pieces of data (e.g., PDCP SDUs), received from a source base station, in a PDCP layer device. For example, the transmission PDCP layer device of the target base station may perform header compression of the data based on the header compression context (ROHC context) of the target base station, may perform integrity protection or ciphering procedure based on the security key of the target base station, and may deliver the data to a lower layer. In the above, in order to initialize or synchronize the header compression context, the target base station may configure an IR packet in pieces of data, PDCP serial numbers or COUNT values of which correspond to a range of from No. 100 to No. 104 and perform data processing thereof. More specifically, in the above, when the header compression protocol is operating in a unidirectional mode (U mode, which is a mode in which a receiving terminal does not require feedback (ACK or NACK)), in a reliable mode (R mode, which is a mode in which a receiving terminal sends ACK or NACK), in an optimistic mode (O mode, which is a mode in which a receiving terminal sends a NACK), or in an IR state, IR packets can be generated and transmitted. In addition, pieces of data from No. 105 to No. 130 may be compressed based on the header compression context, and integrity protection or ciphering thereof may be performed and delivered to a lower layer or prepared for transmission. In the above, the initialization and refresh (IR) packet may be included in data and transmitted from the transmitting PDCP layer device to the receiving PDCP layer device, and may include compression configuration information for compression or decompression. Therefore, if the IR packet is not successfully delivered to a receiving PDCP layer device, a header decompression error may occur with regard to the received data.
- Stage 4: After receiving a handover command message from a source base station, a UE may complete the procedure of handover to the target base station according to the handover method or handover configuration information indicated through the handover command message, and then may transmit a handover completion message (e.g., an RRCReconfigurationComplete message) to the target base station and receive, from the target base station, pieces of data corresponding to No. 100 to No. 130 of PDCP serial numbers or COUNT values. However, in the stage 2, since the UE has already successfully received data corresponding to No. 100 to No. 106 of the PDCP serial numbers or COUNT values, the UE may determine the data corresponding to No. 100 to No. 106 of the PDCP serial numbers or COUNT values, which have been received in the stage 4, as duplicate received data and immediately discard the data. Accordingly, the IR packets included in pieces of data, PDCP serial numbers or COUNT values of which correspond to No. 100 to No. 104, are discarded and lost, so that a header decompression error occurs starting from data corresponding to No. 105.

In the disclosure, methods for solving the problem of the second embodiment in which a header decompression failure problem may occur with respect to downlink data during handover are proposed as follows. One or multiple methods among the following methods may be applied for transmission.
- Method 1: It is characterized in that during handover, a UE, a source base station, or a target base station may always configure and transmit a PDCP status report before transmitting or receiving data. That is, in the second embodiment, if the target base station receives the PDCP status report from the UE, it can be known that the UE has already successfully received the data corresponding to No. 100 to No. 106 of the PDCP serial numbers or COUNT values, and thus the IR packet can be prevented from being discarded by the duplicate detection procedure of the UE. As another method, the target base station may identify data, generated after receiving the PDCP status report from the UE or generate data to perform data transmission, and may delay data generation or data transmission until the PDCP status report is received. As another method, with regard to pieces of data to be retransmitted, the target base station may identify data, generated after receiving the PDCP status report from the UE or generate data to perform data retransmission, may immediately transmit pieces of data for new transmission, and may delay generation or transmission of data for retransmission until a PDCP status report is received.
- Method 2: if a header compression procedure is configured when performing handover, a UE and a base station may not perform a header compression procedure with regard to pieces of data that are transmitted during handover or until the handover is performed and completed, and may continue to transmit the data by including an IR packet therein. If the header compression procedure is not applied and transmission of the data is continued by including an IR packet therein as described above, a receiving PDCP layer device only stores and synchronizes ROHC contexts and does not perform a header decompression procedure with regard to received data, and thus a header decompression failure problem does not occur. When IR packet transmission occurs in the handover procedure, the IR packet may be applied with one of the following methods and transmitted.
   ■ Method 2-1: With regard to pieces of data continuously transmitted until before reception of a handover completion message from a UE, until a PDCP status report is received, until a predetermined timer is expired, or during a predetermined period of time, a target base station may include IR packet therein and then transmit the same without applying a header compression procedure thereto. Thereafter, a header compression procedure may be applied to pieces of transmitted data.
   1 Method 2-2: With regard to pieces of data received from a source base station, a target base station may include IR packet therein and then transmit the same without applying a header compression procedure thereto. In addition, the target base station may apply a header compression procedure to new downlink data received from the core network and transmit the same.
   ■ Method 2-3: With regard to pieces of data for retransmission, a target base station may include an IR packet therein and then transmit the same without applying a header compression procedure thereto. In addition, the target base station may apply a header compression procedure to downlink data for new transmission or configured to be transmitted for the first time and transmit the same.
   ■ Method 2-4: With regard to pieces of data for retransmission, a target base station may include IR packet therein and transmit the same without applying a header compression procedure thereto. In addition, with regard to downlink data for new transmission or configured to be transmitted for the first time, the target base station may include IR packet in the first multiple pieces of data and then transmit the same, and the target base station may apply a header compression procedure to pieces of data transmitted thereafter and transmit the same.
- Method 3: In the handover procedure, when transmitting an IR packet, the target base station may perform transmission of downlink PDCP control data (e.g., PDCP control PDU (e.g., a new PDCP control PDU or interspersed ROHC feedback)) by including an IR packet therein instead of including the IR packet in downlink data (e.g., PDCP Data PDU). The downlink PDCP control data is not allocated with a COUNT value or a PDCP serial number and is not discarded due to a PDCP status report, and thus a base station may always transmit the PDCP control data including an IR packet in which data processing is performed in advance, or may transmit multiple pieces of data or first perform data transmission. Therefore, upon receiving PDCP control data including the IR packet, a UE may receive, store, and synchronize a ROHC context, and may normally apply a header decompression procedure to downlink data.
- Method 4: In a handover procedure, a receiving PDCP layer device may perform a procedure of identifying whether pieces of received data are within the window (e.g., only data within the window is determined as valid data) or a duplicate detection procedure thereof, and may perform a deciphering procedure of pieces of data outside the window or pieces of duplicate data, before discarding the same, and then perform a header decompression procedure thereof. Further, if an IR packet is included in the duplicate data, the receiving PDCP layer device may perform a procedure of extracting the IR packet. That is, in the procedure of identifying whether data is within the window or in the duplicate detection procedure, if data is determined as data outside the header window or duplicate data, the receiving PDCP layer device may perform a deciphering procedure of data outside the window or duplicate data, before discarding the same, and then perform a header decompression procedure thereof to identify whether the IR packet is included therein. If the IR packet is included, a header decompression procedure may be performed by storing the ROHC context information of the IR packet, updating ROHC context information of the receiving PDCP layer device, and applying the header decompression procedure to pieces of data that are received thereafter. In the above, the header decompression procedure may include a procedure of identifying whether the IR packet is included in the received data, storing the ROHC context information of the IR packet if the IR packet is included, and updating the ROHC context information of the receiving PDCP layer device. When data outside the window or duplicate data is processed, in the procedure of identifying whether the data is within the window or the duplicate detection procedure proposed above, the data may be applied with one of the following methods and transmitted. In the following, a RCVD _COUNT value is understood as a COUNT value corresponding to the received data, and RX_DELIV indicates the lower end part of the window which the receiving PDCP layer device meets the validity of data or indicates the COUNT value of first data (or having the lowest COUNT value still waiting for realignment) that has not been delivered to an upper layer.
   ■ Method 4-1: method 4-1 is characterized in that a deciphering procedure is performed before discarding data outside the window or duplicate data, and a header decompression procedure is performed therefor.
      ◆ 1> If RCVD COUNT < RX_DELIV (if the received data is data outside the window), or
      ◆ 1> If a PDCP PDU having a value of RCVD COUNT has ever been successfully received before (if the received data is duplicate data)
         • 2> If a deciphering procedure has not been performed for the received PDCP Data PDU (data part of the PDCP PDU), the deciphering procedure is performed and then a header decompression procedure is performed (for example, if, as a result of identification of an IR packet, there is no IR packet, a ROHC context may be stored or updated).
         • 2> Discard the received PDCP Data PDU (data part of the PDCP PDU) .
   ■ Method 4-2: method 4-2 is characterized in that a deciphering procedure is performed before discarding data outside the window or duplicate data, and a header decompression procedure is performed therefor. In addition, in method 4-2, in order to enhance security, if a COUNT value corresponding to the currently received data has been previously received and data corresponding to the COUNT value has been successfully received before (if integrity protection and verification procedure is configured, the data corresponding to the COUNT value has been previously received and the integrity verification procedure has been successfully performed), it may be determined that a duplicate detection has occurred, and the received data is allowed to be discarded, thereby improving the duplicate detection procedure to prevent hacker attacks. In addition, in a case where the integrity protection and verification procedure is not configured, if a COUNT value corresponding to the currently received data has been previously received, the data may be immediately discarded.
      ◆ 1> If RCVD COUNT < RX_DELIV (if the received data is data outside the window), or
      ◆ 1> If a PDCP PDU having a value of RCVD COUNT has been successfully received before, and if integrity protection and verification procedure has been configured and the integrity verification procedure for the PDCP PDU corresponding to the RCVD _COUNT value has been successfully performed before, or
      ◆ 1> If a PDCP PDU having a value of RCVD _COUNT has been successfully received before, and if integrity protection and verification procedure has not been configured,
         • 2> If a deciphering procedure has not been performed on the received PDCP Data PDU (data part of the PDCP PDU), the deciphering procedure is performed and then a header decompression procedure is performed (for example, if, as a result of identification of an IR packet, there is no IR packet, a ROHC context may be stored or updated).
         • 2> Discard the received PDCP Data PDU (data part of the PDCP PDU) .
   ■ Method 4-3: In method 4-3, it may be characterized in that, only in a handover procedure, only when a header compression protocol is initialized, or only when a header compression protocol is in no context (NC) state of U mode, a deciphering procedure is performed with regard to data outside the window or duplicate data, before discarding the same, and then a header decompression procedure is applied thereto. The operation may be performed such that a reception ROHC protocol is in no context (NC) state or static context (SC) state of unidirectional mode (U mode), bidirectional optimistic mode (O mode), or bidirectional reliable mode (R mode). That is, it is characterized in that even an expired or duplicated packet may be subject to deciphering, integrity verification, and header decompression without immediately being discarded. Therefore, even if an IR packet is loaded in the duplicated packet, the receiving terminal PDCP layer device may receive the same, identify entire header information and ROHC protocol configuration information, and complete synchronization with a transmitting terminal ROHC protocol. Accordingly, header-compressed PDCP PDUs transmitted from a transmitting terminal can be successfully subject to header decompression.
      ◆ 1> If RCVD _COUNT < RX_DELIV (if the received data is data outside the window), or
      ◆ 1> If a PDCP PDU having a value of RCVD COUNT has ever been successfully received before (if the received data is duplicate data)
         • 2> If a header decompression protocol (ROHC) is in the NC state of U mode (or the header compression protocol has been reset and not been reconfigured)
            ■ 3> If a deciphering procedure has not been performed on the received PDCP Data PDU (data part of the PDCP PDU), the deciphering procedure is performed and then a header decompression procedure is performed (for example, if, as a result of identification of an IR packet, there is no IR packet, a ROHC Context may be stored or updated).
         • 2> Discard the received PDCP Data PDU (data part of the PDCP PDU) .
   ■ Method 4-4: In method 4-4, it may be characterized in that, only in a handover procedure, only when a header compression protocol is initialized, or only when a header compression protocol is in no context (NC) state of U mode, a deciphering procedure is performed for data outside the window or duplicate data, before discarding the same, and then a header decompression procedure is applied thereto. The operation may be performed such that a reception ROHC protocol is in no context (NC) state or static context (SC) state of unidirectional mode (U mode), bidirectional optimistic mode (O mode), or bidirectional reliable mode (R mode). That is, it is characterized in that even an expired or duplicated packet may be subject to deciphering, integrity verification, and header decompression without immediately being discarded. Therefore, even if the IR packet is loaded in the duplicated packet, a receiving terminal PDCP layer device may receive the same, identify entire header information and ROHC protocol configuration information, and complete the synchronization with a transmitting terminal ROHC protocol. Accordingly, header-compressed PDCP PDUs transmitted from a transmitting terminal can be successfully subject to header decompression. In addition, in method 4-4, in order to enhance security, if a COUNT value corresponding to the currently received data has been previously received, and data corresponding to the COUNT value has been successfully received before (if integrity protection and verification procedure is configured, if the data corresponding to the COUNT value has been previously received and the integrity verification procedure has been successfully performed), it may be determined that a duplicate detection has occurred, and the received data is allowed to be discarded, thereby improving the duplicate detection procedure to prevent hacker attacks. In addition, if integrity protection and verification procedure is not configured, if a COUNT value corresponding to the currently received data has been previously received, the data may be immediately discarded.
      ◆ 1> If RCVD COUNT < RX_DELIV (if the received data is data outside the window), or
      ◆ 1> If a PDCP PDU having a value of RCVD COUNT has been successfully received before, and if integrity protection and verification procedure has been configured and the integrity verification procedure for the PDCP PDU corresponding to the RCVD _COUNT value has been successfully performed before, or
      ◆ 1> If a PDCP PDU having a value of RCVD _COUNT has been successfully received before, and if integrity protection and verification procedure has not been configured,
         • 2> If a header decompression protocol (ROHC) is in the NC state of U mode (or the header compression protocol has been reset and not been reconfigured)
            ■ 3> If a deciphering procedure has not been performed on the received PDCP Data PDU (data part of the PDCP PDU), the deciphering procedure is performed and then a header decompression procedure is performed (for example, if, as a result of identification of an IR packet, there is no IR packet, a ROHC Context may be stored or updated).
         • 2> Discard the received PDCP Data PDU (data part of the PDCP PDU) .
   ■ Method 5: With regard to method 1, method 2, method 3, and method 4, the proposed duplicate detection procedure applicable when a downlink original data-based data duplicate transmission method (PDCP SDU based duplication) or efficient handover method of a first embodiment is configured or not through a handover command message (or RRC message) may be applied, and with regard to data determined to be duplicated data (or data outside the window), the header decompression procedure may be applied by applying the above methods and the duplicated data (or data outside the window) may then be discarded.

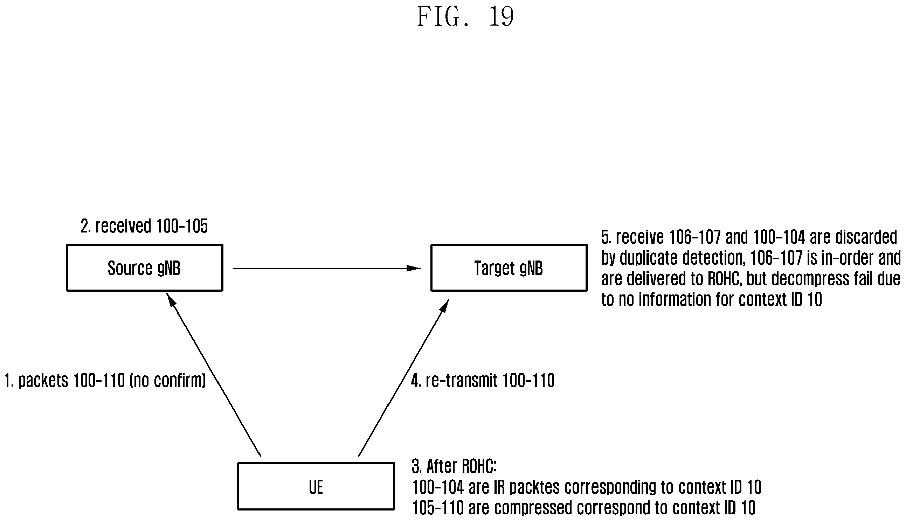

FIG. 19 illustrates another second embodiment in which a header decompression failure problem may occur with regard to uplink data during handover in the disclosure.

In the disclosure, the problem of the second embodiment in which a header decompression failure problem may occur with regard to downlink data during handover may also occur with regard to uplink data during handover as shown in FIG. 19. Therefore, in the following of the disclosure, methods for solving the problem of the second embodiment in which a header decompression failure problem may occur with respect to downlink data during handover are proposed as follows. One or multiple methods among the following methods may be applied for transmission.
- Method 1: It is characterized in that during handover, a UE, a source base station, or a target base station may always configure and transmit a PDCP status report before transmitting or receiving data. That is, in a case of uplink of the second embodiment, if a UE receives the PDCP status report from a target base station, it can be known that the UE has already successfully received the data corresponding to No. 100 to No. 106 of the PDCP serial numbers or COUNT values, and thus the IR packet can be prevented from being discarded by the duplicate detection procedure of the target base station. As another method, the UE may identify data, generated after receiving the PDCP status report from the target base station or generate data to perform data transmission, and may delay data generation or data transmission until the PDCP status report is received. As another method, with regard to pieces of data to be retransmitted, the UE may identify data generated after receiving the PDCP status report from the target base station or the UE may generate data to perform data retransmission, and may delay generation or transmission of data for retransmission until a PDCP status report is received. As another method, with regard to pieces of data for retransmission, the UE may identify data generated after receiving the PDCP status report from the target base station or the UE may generate data to perform data retransmission, may immediately transmit pieces of data for new transmission, and may delay generation or transmission of data for retransmission until a PDCP status report is received.
- Method 2: if a header compression procedure is configured when performing handover, a UE and a base station may not perform a header compression procedure with regard to pieces of data that are transmitted during handover or until the handover is performed and completed, and may continue to transmit the data by including an IR packet therein. If the header compression procedure is not applied and transmission of the data is continued by including an IR packet therein as described above, a receiving PDCP layer device only stores and synchronizes ROHC contexts and does not perform a header decompression procedure with regard to received data, and thus a header decompression failure problem does not occur. When IR packet transmission occurs in the handover procedure, the IR packet may be applied with one of the following methods and transmitted.
   ■ Method 2-1: With regard to pieces of data continuously transmitted until a handover completion message is transmitted after a handover command message is received, until an uplink transmission resource is allocated from a target base station, until a PDCP status report is received, until a predetermined timer is expired, or during a predetermined period of time, a UE may include IR packet therein and then transmit the same without applying a header compression procedure thereto. Thereafter, a header compression procedure may be applied to pieces of transmitted data.
   ■ Method 2-2: With regard to pieces of data transmitted to a source base station, a UE may include IR packet therein and then transmit the same without applying a header compression procedure thereto. In addition, the UE may apply a header compression procedure to new uplink data and transmit.
   ■ Method 2-3: With regard to pieces of data for retransmission, a UE may include IR packet therein and then transmit the same without applying a header compression procedure thereto. In addition, for uplink data for new transmission or configured to be transmitted for the first time, the data may be applied with a header compression procedure and transmitted.
   ■ Method 2-4: With regard to pieces of data for retransmission, a UE may include IR packet therein and then transmit the same without applying a header compression procedure thereto. In addition, with regard to uplink data for new transmission or configured to be transmitted for the first time, the UE may include IR packet in the first multiple pieces of data and transmit the same, and with regard to data transmitted thereafter, the UE may apply a header compression procedure thereto and transmit the same.
- Method 3: In the handover procedure, when transmitting an IR packet, the UE may perform transmission of uplink PDCP control data (e.g., PDCP control PDU (e.g., a new PDCP control PDU or interspersed ROHC feedback)) by including an IR packet therein instead of including the IR packet in uplink data (e.g., PDCP Data PDU) . The uplink PDCP control data is not allocated with a COUNT value or a PDCP serial number and is not discarded due to a PDCP status report, and thus the UE may always transmit the PDCP control data including an IR packet in which data processing is performed in advance, or may transmit multiple pieces of data or first perform data transmission. Therefore, upon receiving PDCP control data including the IR packet, a target base station may receive, store, and synchronize a ROHC context, and may normally apply a header decompression procedure to uplink data.
- Method 4: In a handover procedure, a receiving PDCP layer device may perform a procedure of identifying whether pieces of received data are within the window (e.g., only data within the window is determined as valid data) or a duplicate detection procedure thereof, and may perform a deciphering procedure of pieces of data outside the window or pieces of duplicate data, before discarding the same, and then perform a header decompression procedure thereof. Further, if an IR packet is included in the duplicate data, the receiving PDCP layer device may perform a procedure of extracting the IR packet. That is, in the procedure of identifying whether data is within the window or in the duplicate detection procedure, if data is determined as data outside the header window or duplicate data, the receiving PDCP layer device may perform a deciphering procedure of data outside the window or duplicate data, before discarding the same, and then perform a header decompression procedure thereof to identify whether the IR packet is included therein. If the IR packet is included, a header decompression procedure may be performed by storing the ROHC context information of the IR packet, updating ROHC context information of the receiving PDCP layer device, and applying the header decompression procedure to pieces of data that are received thereafter. In the above, the header decompression procedure may include a procedure of identifying whether the IR packet is included in the received data, storing the ROHC context information of the IR packet if the IR packet is included, and updating the ROHC context information of the receiving PDCP layer device. When data outside the window or duplicate data is processed, in the procedure of identifying whether the data is within the window or the duplicate detection procedure proposed above, the data may be applied with one of the following methods and transmitted. In the following, a RCVD _COUNT value is understood as a COUNT value corresponding to the received data, and RX_DELIV indicates the lower end part of the window which the receiving PDCP layer device meets the validity of data or indicates the COUNT value of first data (or having the lowest COUNT value still waiting for realignment) that has not been delivered to an upper layer.
   ■ Method 4-1: method 4-1 is characterized in that a deciphering procedure is performed before discarding data outside the window or duplicate data, and a header decompression procedure is performed therefor.
      ◆ 1> If RCVD COUNT < RX_DELIV (if the received data is data outside the window), or
      ◆ 1> If a PDCP PDU having a value of RCVD COUNT has ever been successfully received before (if the received data is duplicate data)
         • 2> If a deciphering procedure has not been performed for the received PDCP Data PDU (data part of the PDCP PDU), the deciphering procedure and a header decompression procedure are performed therefor (for example, if, as a result of identification of an IR packet, there is no IR packet, a ROHC context may be stored or updated).
         • 2> Discard the received PDCP Data PDU (data part of the PDCP PDU) .
   ■ Method 4-2: method 4-2 is characterized in that a deciphering procedure is performed before discarding data outside the window or duplicate data, and a header decompression procedure is performed therefor. In addition, in method 4-2, in order to enhance security, if a COUNT value corresponding to the currently received data has been previously received and data corresponding to the COUNT value has been successfully received before (if integrity protection and verification procedure is configured, the data corresponding to the COUNT value has been previously received and the integrity verification procedure has been successfully performed), it may be determined that a duplicate detection has occurred, and the received data is allowed to be discarded, thereby improving the duplicate detection procedure to prevent hacker attacks. In addition, in a case where the integrity protection and verification procedures are not configured, if a COUNT value corresponding to the currently received data has been previously received, the data may be immediately discarded.
      * 1> If RCVD COUNT < RX_DELIV (if the received data is data outside the window),
      * 1> If a PDCP PDU having a value of RCVD COUNT has been successfully received before, and if integrity protection and verification procedure has been configured and the integrity verification procedure for the PDCP PDU corresponding to the RCVD _COUNT value has been successfully performed before, or
      * 1> If a PDCP PDU having a value of RCVD COUNT has been successfully received before, and if integrity protection and verification procedure has not been configured,
         40 2> If a deciphering procedure has not been performed on the received PDCP Data PDU (data part of the PDCP PDU), the deciphering procedure is performed and then a header decompression procedure is performed (for example, if, as a result of identification of an IR packet, there is no IR packet, a ROHC context may be stored or updated).
         • 2> Discard the received PDCP Data PDU (data part of the PDCP PDU) .
   ■ Method 4-3: In method 4-3, it may be characterized in that, only in a handover procedure, only when a header compression protocol is initialized, or only when a header compression protocol is in no context (NC) state of U mode, a deciphering procedure is performed with regard to data outside the window or duplicate data, before discarding the same, and a header decompression procedure is applied thereto. The operation may be performed such that a reception ROHC protocol is in no context (NC) state or static context (SC) state of unidirectional mode (U mode), bidirectional optimistic mode (O mode), or bidirectional reliable mode (R mode). That is, it is characterized in that even an expired or duplicated packet may be subject to deciphering, integrity verification, and header decompression without immediately being discarded. Therefore, even if an IR packet is loaded in the duplicated packet, the receiving terminal PDCP layer device may receive the same, identify entire header information and ROHC protocol configuration information, and complete synchronization with a transmitting terminal ROHC protocol. Accordingly, header-compressed PDCP PDUs transmitted from a transmitting terminal can be successfully subject to header decompression.
      * 1> If RCVD COUNT < RX_DELIV (if the received data is data outside the window), or
      * 1> If a PDCP PDU having a value of RCVD COUNT has ever been successfully received before (if the received data is duplicate data)
         • 2> If a header decompression protocol (ROHC) is in the NC state of U mode (or the header compression protocol has been reset and not been reconfigured)
            ■ 3> If a deciphering procedure has not been performed on the received PDCP Data PDU (data part of the PDCP PDU), the deciphering procedure is performed and then a header decompression procedure is performed (for example, if, as a result of identification of an IR packet, there is no IR packet, a ROHC Context may be stored or updated).
         • 2> Discard the received PDCP Data PDU (data part of the PDCP PDU) .
   ■ Method 4-4: In method 4-4, it may be characterized in that, only in a handover procedure, only when a header compression protocol is initialized, or only when a header compression protocol is in no context (NC) state of U mode, a deciphering procedure is performed with regard to data outside the window or duplicate data, before discarding the same, and then a header decompression procedure is applied thereto. The operation may be performed such that a reception ROHC protocol is in no context (NC) state or static context (SC) state of unidirectional mode (U mode), bidirectional optimistic mode (O mode), or bidirectional reliable mode (R mode). That is, it is characterized in that even an expired or duplicated packet may be subject to deciphering, integrity verification, and header decompression without immediately being discarded. Therefore, even if the IR packet is loaded in the duplicated packet, a receiving terminal PDCP layer device may receive the same, identify entire header information and ROHC protocol configuration information, and complete the synchronization with a transmitting terminal ROHC protocol. Accordingly, header-compressed PDCP PDUs transmitted from a transmitting terminal can be successfully subject to header decompression. In addition, in method 4-4, in order to enhance security, if a COUNT value corresponding to the currently received data has been previously received, and data corresponding to the COUNT value has been successfully received before (if integrity protection and verification procedure is configured, if the data corresponding to the COUNT value has been previously received and the integrity verification procedure has been successfully performed), it may be determined that a duplicate detection has occurred, and the received data is allowed to be discarded, thereby improving the duplicate detection procedure to prevent hacker attacks. In addition, if integrity protection and verification procedures are not configured, if a COUNT value corresponding to the currently received data has been previously received, the data may be immediately discarded.
      * 1> If RCVD _COUNT < RX_DELIV (if the received data is data outside the window), or
      * 1> If a PDCP PDU having a value of RCVD _COUNT has been successfully received before, and if integrity protection and verification procedure has been configured and the integrity verification procedure for the PDCP PDU corresponding to the RCVD _COUNT value has been successfully performed before, or
      * 1> If a PDCP PDU having a value of RCVD COUNT has been successfully received before, and if integrity protection and verification procedure has not been configured,
         • 2> If a header decompression protocol (ROHC) is in the NC state of U mode (or the header compression protocol has been reset and not been reconfigured)
            ■ 3> If a deciphering procedure has not been performed on the received PDCP Data PDU (data part of the PDCP PDU), the deciphering procedure and a header decompression procedure are performed therefor (for example, if, as a result of identification of an IR packet, there is no IR packet, a ROHC Context may be stored or updated).
         • 2> Discard the received PDCP Data PDU (data part of the PDCP PDU) .
   ■ Method 5: With regard to method 1, method 2, method 3, and method 4, the proposed duplicate detection procedure applicable when an uplink original data-based data duplicate transmission method (PDCP SDU based duplication) or efficient handover method of a first embodiment is configured or not through a handover command message (or RRC message) may be applied, and with regard to data determined to be duplicated data (or data outside the window), the header decompression procedure may be applied by applying the above methods and the duplicated data (or data outside the window) may then be discarded.

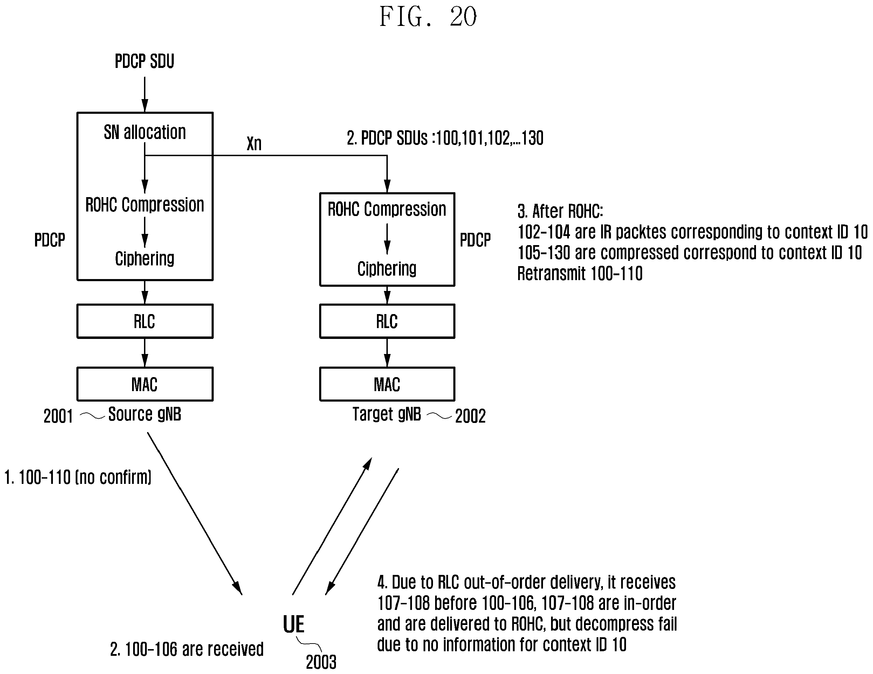

FIG. 20 illustrates a third embodiment in which a header decompression failure problem may occur with regard to downlink data during handover in the disclosure.

In FIG. 20, upon receiving a handover command message from the source base station 20-01, the UE 20-03 performs a handover method indicated through the handover command message and performs a procedure of handover to the target base station 20-02.

In the third embodiment of the disclosure in the above, an embodiment of a specific procedure in which a base station and a UE perform data transmission or reception in a handover procedure is as follows.
- Stage 1: A source base station transmits pieces of data, PDCP serial numbers or COUNT values of which are in the range of from 100 to 110 (e.g., PDCP PDU or PDCP SDU) to a UE through a downlink. In this case, the source base station may not receive an acknowledgement of successful delivery of data corresponding to No. 100 to No. 110 (e.g., RLC ACK of an RLC status report) to the UE. In addition, the source base station indicates a handover by transmitting a handover command message (e.g., an RRCReconfiguration message) to the UE.
- Stage 2: The source base station may deliver, to the target base station, pieces of data for which the acknowledgement of successful delivery has not been received in the stage 1 or all pieces of data in ascending order starting from data, which has the lowest PDCP serial number or the COUNT value and for which the acknowledgement of successful delivery has not been received, to allow the UE to perform transmission or retransmission thereof. In addition, in the stage 1, the UE has successfully received data corresponding to No. 100 to No. 106 of the PDCP serial numbers or COUNT values, but has failed to transmit feedback (RLC ACK) indicating successful reception of the data to the source base station.
- Stage 3: A target base station may perform data processing of pieces of data (e.g., PDCP SDUs), received from a source base station, in a PDCP layer device. For example, the transmission PDCP layer device of a target base station may perform header compression of the data based on the header compression context (ROHC context) of the target base station, may perform integrity protection or ciphering procedure based on the security key of the target base station, and may deliver the data to a lower layer. In the above, in order to initialize or synchronize the header compression context, the target base station may configure an IR packet in pieces of data, PDCP serial numbers or COUNT values of which corresponds to a range of from No. 100 to No. 104 and perform data processing thereof. More specifically, in the above, when the header compression protocol is operating in a unidirectional mode (U mode, which is a mode in which a receiving terminal does not require feedback (ACK or NACK)), in a reliable mode (R mode, which is a mode in which a receiving terminal sends ACK or NACK), in an optimistic mode (O mode, which is a mode in which a receiving terminal sends NACK), or in an IR state, IR packets can be generated and transmitted. In addition, data from No. 105 to No. 130 may be compressed based on the header compression context, and integrity protection or ciphering thereof may be performed and delivered to a lower layer or prepared for transmission. In addition, pieces of data, PDCP serial numbers or COUNT values of which correspond to No. 100 to No. 110, may be transmitted to the UE. In the above, the initialization and refresh (IR) packet may be included in data and transmitted from the transmitting PDCP layer device to the receiving PDCP layer device, and may include compression configuration information for compression or decompression. Therefore, if the IR packet is not successfully delivered to a receiving PDCP layer device, a header decompression error may occur with regard to the received data.
- Stage 4: After receiving a handover command message from a source base station, a UE may complete the procedure of handover to the target base station according to the handover method or handover configuration information indicated through the handover command message, and then may transmit a handover completion message (e.g., an RRCReconfigurationComplete message) to the target base station and receive data corresponding to No. 107 to No. 108 of the PDCP serial numbers or COUNT values from the target base station. Further, if a reception RLC layer device is configured as out-of-order delivery function or performs the out-of-order delivery function, when a RLC layer device receives the pieces of data, even if the data from No. 100 to No. 106 have not yet been received, data corresponding to No. 107 and No. 108 may be delivered to the PDCP layer device, which is a higher layer device. In addition, since the UE has already successfully received data corresponding to the PDCP serial numbers or COUNT values of No. 100 to No. 106 in the stage 2, data corresponding to the PDCP serial numbers or COUNT values of No. 107 to No. 108 received in the stage 4 may be determined as the data in which the sequence is arranged or is in order after No. 106, the deciphering procedure may be performed immediately, and the header decompression procedure may be applied thereto. However, since IR packets included in the PDCP serial numbers or COUNT values of No. 100 to No. 104 have not yet been received, a header decompression error occurs starting from data of No. 106.

In the disclosure, methods for solving the problem of the third embodiment in which a header decompression failure problem may occur with respect to downlink data during handover are proposed as follows. One or multiple methods among the following methods may be applied for transmission.
- Method 1: It is characterized in that during handover, a UE, a source base station, or a target base station may always configure and transmit a PDCP status report before transmitting or receiving data. That is, in the third embodiment, if a UE receives the PDCP status report from a target base station, it can be known that the UE has already successfully received the data corresponding to No. 100 to No. 106 of the PDCP serial numbers or COUNT values, and thus the IR packet may be included in data starting from No. 107 and transmitted. As another method, the UE may identify data generated after receiving the PDCP status report from the target base station or the UE may generate data to perform data transmission, and may delay data generation or data transmission until the PDCP status report is received. As another method, with regard to pieces of data for retransmission, the UE may identify data generated after receiving the PDCP status report from the target base station or the UE may generate data to perform data retransmission, may immediately transmit pieces of data for new transmission, and may delay generation or transmission of data for retransmission until a PDCP status report is received.
- Method 2: if a header compression procedure is configured when performing handover, a UE and a base station may not perform a header compression procedure with regard to pieces of data that are transmitted during handover or until the handover is performed and completed, and may continue to transmit the data by including an IR packet therein. More specifically, in the above, when the header compression protocol is operating in a unidirectional mode (U mode, which is a mode in which a receiving terminal does not require feedback (ACK or NACK)), in a reliable mode (R mode, which is a mode in which a receiving terminal sends ACK or NACK), or in an optimistic mode (O mode, which is a mode in which a receiving terminal sends NACK), the UE and base station may allow the header compression protocol to be operated or maintained in an IR state, to thereby generate and transmit IR packets. Therefore, when performing handover, the UE or the base station may, with regard to bearers for which a header compression protocol is configured during handover, maintain or operate the header compression protocol in IR state when the header compression protocol is operating in a unidirectional mode (U mode, which is a mode in which a receiving terminal does not require feedback (ACK or NACK)), in a reliable mode (R mode, which is a mode in which a receiving terminal sends ACK or NACK), in an optimistic mode (O mode, which is a mode in which a receiving terminal sends NACK) during handover or until the handover is performed and completed. If a header compression procedure is not applied and an IR packet is included and transmitted continuously as described above, since a receiving PDCP layer device only stores and synchronizes a ROHC context and does not perform a header decompression procedure on data that is received, a header decompression failure problem does not occur. If the method 2 is applied to the first embodiment or second embodiment of the efficient handover method (for example, a DAPS handover method) proposed in the disclosure, it may be characterized in that if a header compression procedure is configured when performing handover as described above, the header compression procedure is not performed for pieces of data, which are transmitted during handover or until a handover is performed and completed (that is, a handover command message is received, a procedure of random access to a target base station is completed (when the first condition is satisfied), until an instruction to release a connection with a source base station (or source cell) (when the second condition is satisfied) is received from a target base station, or until a connection with a source base station (or source cell) is released), and IR packet is continuously included in the data and same is transmitted. More specifically, in the above, when the header compression protocol is operating in a unidirectional mode (U mode, which is a mode in which a receiving terminal does not require feedback (ACK or NACK)), in a reliable mode (R mode, which is a mode in which a receiving terminal sends ACK or NACK), or in an optimistic mode (O mode, which is a mode in which a receiving terminal sends NACK), the UE and base station may allow the header compression protocol to be operated or maintained in an IR state, to thereby generate and transmit IR packets. Therefore, when performing an efficient handover (e.g. DAPS handover method), the UE or the base station may, with regard to bearers for which a header compression protocol is configured, maintain or operate the header compression protocol to be in an IR state when operating the header compression protocol in a unidirectional mode (U mode, which is a mode in which a receiving terminal does not require feedback (ACK or NACK)), in a reliable mode (R mode, which is a mode in which a receiving terminal sends ACK or NACK), in an optimistic mode (O mode, which is a mode in which a receiving terminal sends NACK), during handover or until a handover is performed and completed (that is, a handover command message is received, a procedure of random access to a target base station is completed (when the first condition is satisfied), until an instruction to release a connection with a source base station (or source cell) (when the second condition is satisfied) is received from a target base station, or until a connection with a source base station (or source cell) is released). If a header compression procedure is not applied as described above and an IR packet is continuously included and transmitted, since a receiving PDCP layer device only stores and synchronizes a ROHC context and does not perform a header decompression procedure on data that is received, a header decompression failure problem does not occur. When an IR packet is transmitted in the handover procedure, the IR packet may be applied with one of the following methods and transmitted.
   ■ Method 2-1: With regard to pieces of data continuously transmitted until before reception of a handover completion message from a UE, until a PDCP status report is received, until a predetermined timer is expired, or during a predetermined period of time, a target base station may include IR packet therein and then transmit the same without applying a header compression procedure thereto. Thereafter, a header compression procedure may be applied to pieces of transmitted data.
   ■ Method 2-2: With regard to pieces of data received from a source base station, a target base station may include IR packet therein and then transmit the same without applying a header compression procedure thereto. In addition, the target base station may apply a header compression procedure to new downlink data received from a core network and transmit the same.
   ■ Method 2-3: With regard to pieces of data for retransmission, a target base station may include IR packet therein and then transmit the same without applying a header compression procedure thereto. In addition, the target base station may apply a header compression procedure to downlink data for new transmission or configured to be transmitted for the first time and transmit the same.
   ■ Method 2-4: With regard to pieces of data for retransmission, a target base station may include IR packet therein and then transmit the same without applying a header compression procedure thereto. In addition, with regard to downlink data for new transmission or configured to be transmitted for the first time, the target base station may transmit include IR packet in the first multiple pieces of data and then transmit, and the target base station may apply a header compression procedure to pieces of data transmitted thereafter and transmit the same.

In order to further improve the performance of the method 2 proposed in the disclosure, the method 2 proposed above may be used during handover when the sixth condition proposed below is satisfied. As described in the disclosure, the header compression decompression failure problem described in the disclosure occurs when the header compression context (ROHC context) is not used as it is during handover or when the header compression protocol is initialized. Therefore, if the header compression context (ROHC context) is used as it is during handover or the header compression protocol is not initialized, it may not be required to apply the methods proposed in the disclosure unnecessarily. For example, in a case where a security key is not changed during handover, if a separate procedure is not instructed to an UM bearer, if a PDCP data recovery procedure is instructed to an AM bearer, if a separate procedure is not instructed to an UM bearer for which a DAPS handover method is not configured, if a PDCP data recovery procedure is instructed to an AM bearer for which a DAPS handover method is not configured, or if, with regard to a bearer (UM or AM bearer) for which a DAPS handover method is configured, the same header compression context is continuously applied as the header compression context of the source base station and the header compression context of the target base station by using the second PDCP layer device structure, it is not required to unnecessarily perform the method 2 proposed above. If the header compression context (ROHC context) is used as it is during handover, or if the method 2 is used even when the header compression protocol is not initialized, the header compression context or header compression protocol is unnecessarily initialized to generate an unnecessary overhead and thus resulting in waste of transmission resources. In addition, method 2 proposed in the disclosure may be applied to a bearer (UM or AM bearer) for which header compression protocol is configured in a general handover method, a bearer (UM or AM bearer) for which a DAPS handover method is configured in an efficient handover method (DAPS handover method), or a bearer (UM or AM bearer) for which a DAPS handover method is not configured, according to the bearers. The sixth condition may indicate one or multiple conditions among the following conditions.
- 1) When a header compression context (ROHC context) is not used as it is in a general handover method or an efficient handover method (DAPS handover method), or when an indicator indicating to use a header compression context as it is (e.g., drb-ContinueROHC) is not configured or is not indicated in an RRC message indicating handover (e.g., RRCReconfiguration message),
- 2) when a header compression protocol is initialized in a general handover method or an efficient handover method (DAPS handover method)
- 3) when a header compression protocol is in a unidirectional mode (U-mode, which is a mode in which the receiving terminal does not require feedback (ACK or NACK)), a reliable mode (R-mode, which is a mode in which the receiving terminal sends ACK or NACK), or an optimistic mode (O-mode, which is a mode in which the receiving terminal sends NACK) or in or operating in IR state in a general handover method or an efficient handover method (DAPS handover method),
- 4) when a header compression protocol is in a unidirectional mode (U-mode, which is a mode in which the receiving terminal does not require feedback (ACK or NACK)), a reliable mode (R-mode, which is a mode in which the receiving terminal sends ACK or NACK), or an optimistic mode (O-mode, which is a mode in which the receiving terminal sends NACK) or in or operating in NC state in a general handover method or an efficient handover method (DAPS handover method),
- 5) when a handover is performed or when a handover is instructed in a general handover method or an efficient handover method (DAPS handover method), if a security key is changed,
- 6) when a handover is performed or when a handover is instructed in a general handover method or an efficient handover method (DAPS handover method), if a security key or security configuration information is configured,
- 7) when a general handover method or an efficient handover method (DAPS handover method) is indicated or configured, if a header compression context (ROHC context) for a source base station and a header compression context for a target base station are not the same header compression context,
- 8) when a general handover method or an efficient handover method (DAPS handover method) is indicated or configured, if a header compression context for a target base station is not continuously used as a header compression context (ROHC context) for a source base station, or
- 9) when a general handover method or an efficient handover method (DAPS handover method) is indicated or configured, if the same header compression context is not continuously applied to a header compression context of a source base station and a header compression context of a target base station

In addition, when the efficient handover method (DAPS handover method) proposed in the disclosure is indicated or configured, if a security key is not changed, if security configuration information does not exist, or if a security key change is not indicated or configured, a separate procedure is not indicated to a UM bearer for which a DAPS handover method is not configured, a PDCP data recovery procedure is instructed to an AM bearer for which a DAPS handover method is not configured, the same header compression context for the bearers can be continuously applied as a header compression context of a source base station or a header compression context of a target base station, with regard to a bearer (UM or AM bearer) for which a DAPS handover method is configured, by using a second PDCP layer device structure (a PDCP layer device structure in which a security key for a source base station, a security key for a target base station, a header compression context for a source base station, or a header compression context for a target base station are maintained and applied, respectively, and a realignment function is performed), or the single same header compression context can be maintained and applied for a source base station and a target base station. If a header compression context is initialized or reconfigured when a security key is used as it is, different pieces of data encrypted with the same security key (different pieces of data, headers of which are compressed in different methods) may be transmitted when a base station (or a UE) transmits or retransmits data, and thus a security problem may occur. That is, a hacker, a large number of unspecified persons, or unauthorized attackers may receive different pieces of data encrypted with the same security key as above and thus obtain useful information for deriving the security key, to thereby cause a security problem.
- Method 3: In the handover procedure, when transmitting an IR packet, the target base station may perform transmission of downlink PDCP control data (e.g., PDCP control PDU (e.g., a new PDCP control PDU or interspersed ROHC feedback)) by including an IR packet therein instead of including the IR packet in downlink data (e.g., PDCP Data PDU). The downlink PDCP control data is not allocated with a COUNT value or a PDCP serial number and is not discarded due to a PDCP status report, and thus a base station may always transmit the PDCP control data including an IR packet in which data processing is performed in advance, or may transmit multiple pieces of data or first perform data transmission. Therefore, upon receiving PDCP control data including the IR packet, a UE may receive, store, and synchronize a ROHC context, and may normally apply a header decompression procedure to downlink data.
- Method 4: In a handover procedure, a receiving PDCP layer device may perform a procedure of identifying whether pieces of received data are within the window (e.g., only data within the window is determined as valid data) or a duplicate detection procedure thereof, and may perform a deciphering procedure of pieces of data outside the window or pieces of duplicate data, before discarding the same, and then perform a header decompression procedure thereof. Further, if an IR packet is included in the duplicate data, the receiving PDCP layer device may perform a procedure of extracting the IR packet. That is, in the procedure of identifying whether data is within the window or in the duplicate detection procedure, if data is determined as data outside the header window or duplicate data, the receiving PDCP layer device may perform a deciphering procedure of data outside the window or duplicate data, before discarding the same, and then perform a header decompression procedure thereof to identify whether the IR packet is included therein. If the IR packet is included, a header decompression procedure may be performed by storing the ROHC context information of the IR packet, updating ROHC context information of the receiving PDCP layer device, and applying the header decompression procedure to pieces of data that are received thereafter. In the above, the header decompression procedure may include a procedure of identifying whether the IR packet is included in the received data, storing the ROHC context information of the IR packet if the IR packet is included, and updating the ROHC context information of the receiving PDCP layer device. When data outside the window or duplicate data is processed, in the procedure of identifying whether the data is within the window or the duplicate detection procedure proposed above, the data may be applied with one of the following methods and transmitted. In the following, a RCVD_COUNT value is understood as a COUNT value corresponding to the received data, and RX_DELIV indicates the lower end part of the window which the receiving PDCP layer device meets the validity of data or indicates the COUNT value of first data (or having the lowest COUNT value still waiting for realignment) that has not been delivered to an upper layer.
   ■ Method 4-1: method 4-1 is characterized in that a deciphering procedure is performed before discarding data outside the window or duplicate data, and a header decompression procedure is performed therefor.
      * 1> If RCVD_COUNT < RX_DELIV (if the received data is data outside the window), or
      * 1> If a PDCP PDU having a value of RCVD_COUNT has ever been successfully received before (if the received data is duplicate data)
         ● 2> If a deciphering procedure has not been performed for the received PDCP Data PDU (data part of the PDCP PDU), the deciphering procedure is performed and then a header decompression procedure is performed (for example, if, as a result of identification of an IR packet, there is no IR packet, a ROHC context may be stored or updated).
         ● 2> Discard the received PDCP Data PDU (data part of the PDCP PDU) .
   ■ Method 4-2: Method 4-2 is characterized in that a deciphering procedure is performed before discarding data outside the window or duplicate data, and a header decompression procedure is performed therefor. In addition, in method 4-2, in order to enhance security, if a COUNT value corresponding to the currently received data has been previously received and data corresponding to the COUNT value has been successfully received before (if integrity protection and verification procedure is configured, the data corresponding to the COUNT value has been previously received and the integrity verification procedure has been successfully performed), it may be determined that a duplicate detection has occurred, and the received data is allowed to be discarded, thereby improving the duplicate detection procedure to prevent hacker attacks. In addition, in a case where the integrity protection and verification procedure is not configured, if a COUNT value corresponding to the currently received data has been previously received, the data may be immediately discarded.
      ◆ 1> If RCVD COUNT < RX_DELIV (if the received data is data outside the window),
      ◆ 1> If a PDCP PDU having a value of RCVD_COUNT has been successfully received before, and if integrity protection and verification procedure has been configured and the integrity verification procedure for the PDCP PDU corresponding to the RCVD_COUNT value has been successfully performed before, or
      * 1> If a PDCP PDU having a value of RCVD COUNT has been successfully received before, and if integrity protection and verification procedure has not been configured,
         ● 2> If a deciphering procedure has not been performed on the received PDCP Data PDU (data part of the PDCP PDU), the deciphering procedure is performed and then a header decompression procedure is performed (for example, if, as a result of identification of an IR packet, there is no IR packet, a ROHC context may be stored or updated).
         ● 2> Discard the received PDCP Data PDU (data part of the PDCP PDU) .
   ■ Method 4-3: In method 4-3, it may be characterized in that, only in a handover procedure, only when a header compression protocol is initialized, or only when a header compression protocol is in no context (NC) state of U mode, a deciphering procedure is performed with regard to data outside the window or duplicate data, before discarding the same, and then a header decompression procedure is applied thereto. The operation may be performed such that a reception ROHC protocol is in no context (NC) state or static context (SC) state of unidirectional mode (U mode), bidirectional optimistic mode (O mode), or bidirectional reliable mode (R mode). That is, it is characterized in that even an expired or duplicated packet may be subject to deciphering, integrity verification, and header decompression without immediately being discarded. Therefore, even if an IR packet is loaded in the duplicated packet, the receiving terminal PDCP layer device may receive the same, identify entire header information and ROHC protocol configuration information, and complete synchronization with a transmitting terminal ROHC protocol. Accordingly, headercompressed PDCP PDUs transmitted from a transmitting terminal can be successfully subject to header decompression.
      ◆ 1> If RCVD COUNT < RX_DELIV (if the received data is data outside the window), or
      * 1> If a PDCP PDU having a value of RCVD COUNT has ever been successfully received before (if the received data is duplicate data)
         ● 2> If a header decompression protocol (ROHC) is in the NC state of U mode (or the header compression protocol has been reset and not been reconfigured)
            ■ 3> If a deciphering procedure has not been performed on the received PDCP Data PDU (data part of the PDCP PDU), the deciphering procedure is performed and then a header decompression procedure is performed (for example, if, as a result of identification of an IR packet, there is no IR packet, a ROHC Context may be stored or updated).
         ● 2> Discard the received PDCP Data PDU (data part of the PDCP PDU) .
   ■ Method 4-4: In method 4-4, it may be characterized in that, only in a handover procedure, only when a header compression protocol is initialized, or only when a header compression protocol is in no context (NC) state of U mode, a deciphering procedure is performed with regard to data outside the window or duplicate data, before discarding the same, and then a header decompression procedure is applied thereto. The operation may be performed such that a reception ROHC protocol is in no context (NC) state or static context (SC) state of unidirectional mode (U mode), bidirectional optimistic mode (O mode), or bidirectional reliable mode (R mode). That is, it is characterized in that even an expired or duplicated packet may be subject to deciphering, integrity verification, and header decompression without immediately being discarded. Therefore, even if the IR packet is loaded in the duplicated packet, a receiving terminal PDCP layer device may receive the same, identify entire header information and ROHC protocol configuration information, and complete the synchronization with a transmitting terminal ROHC protocol. Accordingly, headercompressed PDCP PDUs transmitted from a transmitting terminal can be successfully subject to header decompression. In addition, in method 4-4, in order to enhance security, if a COUNT value corresponding to the currently received data has been previously received, and data corresponding to the COUNT value has been successfully received before (if integrity protection and verification procedure is configured, if the data corresponding to the COUNT value has been previously received and the integrity verification procedure has been successfully performed), it may be determined that a duplicate detection has occurred, and the received data is allowed to be discarded, thereby improving the duplicate detection procedure to prevent hacker attacks. In addition, if integrity protection and verification procedure is not configured, if a COUNT value corresponding to the currently received data has been previously received, the data may be immediately discarded.
      ◆ 1> If RCVD COUNT < RX_DELIV (if the received data is data outside the window), or
      * 1> If a PDCP PDU having a value of RCVD COUNT has been successfully received before, and if integrity protection and verification procedure has been configured and the integrity verification procedure for the PDCP PDU corresponding to the RCVD_COUNT value has been successfully performed before, or
      ◆ 1> If a PDCP PDU having a value of RCVD _COUNT has been successfully received before, and if integrity protection and verification procedure has not been configured,
         ● 2> If a header decompression protocol (ROHC) is in the NC state of U mode (or the header compression protocol has been reset and not been reconfigured)
            ■ 3> If a deciphering procedure has not been performed on the received PDCP Data PDU (data part of the PDCP PDU), the deciphering procedure is performed and then a header decompression procedure is performed (for example, if, as a result of identification of an IR packet, there is no IR packet, a ROHC Context may be stored or updated).
         ● 2> Discard the received PDCP Data PDU (data part of the PDCP PDU) .
   ■ Method 5: With regard to method 1, method 2, method 3, and method 4, the proposed duplicate detection procedure applicable when a downlink original data-based data duplicate transmission method (PDCP SDU based duplication) or efficient handover method of a first embodiment is configured or not through a handover command message (or RRC message) may be applied, and with regard to data determined to be duplicated data (or data outside the window), the header decompression procedure may be applied by applying the above methods and the duplicated data (or data outside the window) may then be discarded.

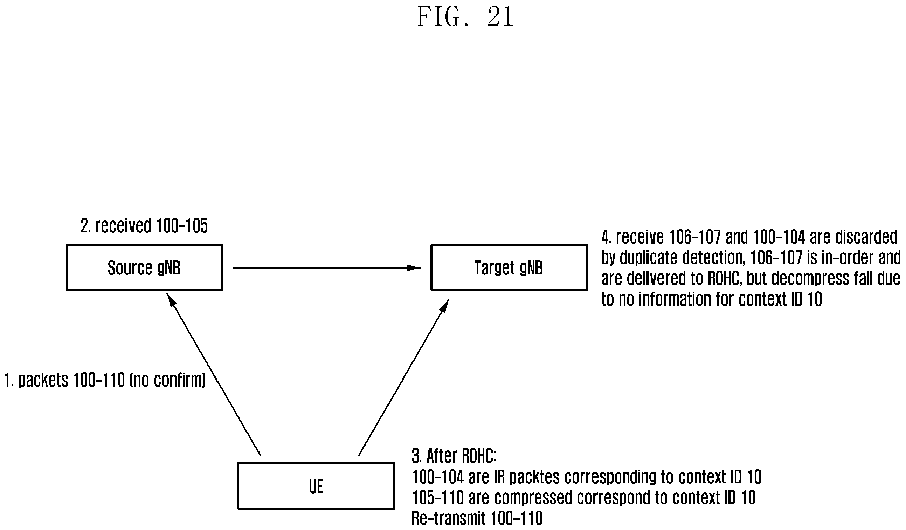

FIG. 21 illustrates another third embodiment in which a header decompression failure problem may occur with regard to uplink data during handover in the disclosure.

In the disclosure, the problem of the third embodiment in which header decompression failure may occur for downlink data during handover may also occur for uplink data during handover as shown in FIG. 21. Therefore, in the following of the disclosure, methods for solving the problem of the third embodiment in which a header decompression failure problem may occur with respect to uplink data or downlink data are proposed as follows. One or multiple methods among the following methods may be applied for transmission. The methods disclosed below may also be applied to the third embodiment of downlink data transmission described with reference to FIG. 20.
- Method 1: It is characterized in that during handover, a UE, a source base station, or a target base station may always configure and transmit a PDCP status report before transmitting or receiving data. That is, in a case of uplink of the third embodiment, if a UE receives the PDCP status report from a target base station, it can be known that the UE has already successfully transmitted the data corresponding to No. 100 to No. 106 of the PDCP serial numbers or COUNT values, and thus the IR packet may be included in data starting from No. 107 and then transmitted. As another method, the UE may identify data generated after receiving the PDCP status report from the target base station or the UE may generate data to perform data transmission, and may delay data generation or data transmission until the PDCP status report is received. As another method, with regard to pieces of data for retransmission, the UE may identify data generated after receiving the PDCP status report from the target base station or the UE may generate data to perform data retransmission, may immediately transmit pieces of data for new transmission, and may delay generation or transmission of data for retransmission until a PDCP status report is received.
- Method 2: if a header compression procedure is configured when performing handover, a UE and a base station may not perform a header compression procedure with regard to pieces of data that are transmitted during handover or until the handover is performed and completed, and may continue to transmit the data by including an IR packet therein. More specifically, in the above, when the header compression protocol is operating in a unidirectional mode (U mode, which is a mode in which a receiving terminal does not require feedback (ACK or NACK)), in a reliable mode (R mode, which is a mode in which a receiving terminal sends ACK or NACK), or in an optimistic mode (O mode, which is a mode in which a receiving terminal sends NACK), the UE and base station may allow the header compression protocol to be operated or maintained in an IR state, to thereby generate and transmit IR packets. Therefore, when performing handover, the UE or the base station may, with regard to bearers for which a header compression protocol is configured during handover, maintain or operate the header compression protocol in IR state when the header compression protocol is operating in a unidirectional mode (U mode, which is a mode in which a receiving terminal does not require feedback (ACK or NACK)), in a reliable mode (R mode, which is a mode in which a receiving terminal sends ACK or NACK), in an optimistic mode (O mode, which is a mode in which a receiving terminal sends NACK) during handover or until the handover is performed and completed. If a header compression procedure is not applied and an IR packet is included and transmitted continuously as described above, since a receiving PDCP layer device only stores and synchronizes a ROHC context and does not perform a header decompression procedure on data that is received, a header decompression failure problem does not occur. If the method 2 is applied to the first embodiment or second embodiment of the efficient handover method (for example, a DAPS handover method) proposed in the disclosure, it may be characterized in that if a header compression procedure is configured when performing handover as described above, the header compression procedure is not performed for pieces of data, which are transmitted during handover or until a handover is performed and completed (that is, a handover command message is received, a procedure of random access to a target base station is completed (when the first condition is satisfied), until an instruction to release a connection with a source base station (or source cell) (when the second condition is satisfied) is received from a target base station, or until a connection with a source base station (or source cell) is released), and IR packet is continuously included in the data and same is transmitted. More specifically, in the above, when the header compression protocol is operating in a unidirectional mode (U mode, which is a mode in which a receiving terminal does not require feedback (ACK or NACK)), in a reliable mode (R mode, which is a mode in which a receiving terminal sends ACK or NACK), or in an optimistic mode (O mode, which is a mode in which a receiving terminal sends NACK), the UE and base station may allow the header compression protocol to be operated or maintained in an IR state, to thereby generate and transmit IR packets. Therefore, when performing an efficient handover (e.g. DAPS handover method), the UE or the base station may, with regard to bearers for which a header compression protocol is configured, maintain or operate the header compression protocol to be in an IR state when operating the header compression protocol in a unidirectional mode (U mode, which is a mode in which a receiving terminal does not require feedback (ACK or NACK)), in a reliable mode (R mode, which is a mode in which a receiving terminal sends ACK or NACK), in an optimistic mode (O mode, which is a mode in which a receiving terminal sends NACK), during handover or until a handover is performed and completed (that is, a handover command message is received, a procedure of random access to a target base station is completed (when the first condition is satisfied), until an instruction to release a connection with a source base station (or source cell) (when the second condition is satisfied) is received from a target base station, or until a connection with a source base station (or source cell) is released). In the method 2, when transmitting an IR packet in the handover procedure, one or more of the following methods may be applied to transmit the IR packet.
   ■ Method 2-1: With regard to pieces of data continuously transmitted until before reception of a handover completion message from a UE, until a PDCP status report is received, until a predetermined timer is expired, or during a predetermined period of time, a UE, a source base station, or a target base station may include IR packet therein and then transmit the same without applying a header compression procedure thereto. Thereafter, a header compression procedure may be applied to pieces of transmitted data.
   ■ Method 2-2: With regard to pieces of data received from a source base station, a UE, a source base station, or a target base station may include IR packet therein and then transmit the same without applying a header compression procedure thereto. In addition, the UE, source base station, or target base station may apply a header compression procedure to new downlink data received from a core network and transmit the same.
   ■ Method 2-3: With regard to pieces of data for retransmission, a UE, a source base station, or a target base station may include IR packet therein and then transmit the same without applying a header compression procedure thereto. In addition, the UE, source base station, or target base station may apply a header compression procedure to uplink data for new transmission or configured to be transmitted for the first time and transmit the same.
   ■ Method 2-4: With regard to pieces of data for retransmission, a UE, a source base station, or a target base station may include IR packet therein and then transmit the same without applying a header compression procedure thereto. In addition, with regard to uplink data for new transmission or configured to be transmitted for the first time, the UE, source base station, or target base station may include IR packet in the first multiple pieces of data and then transmit the same, and may apply a header compression procedure to pieces of data transmitted thereafter and transmit the same.

In order to further improve the performance of the method 2 proposed in the disclosure, the method 2 proposed above may be used during handover when the sixth condition proposed below is satisfied. As described in the disclosure, the header compression decompression failure problem described in the disclosure occurs when the header compression context (ROHC context) is not used as it is during handover or when the header compression protocol is initialized. Therefore, if the header compression context (ROHC context) is used as it is during handover or the header compression protocol is not initialized, it may not be required to apply the methods proposed in the disclosure unnecessarily. For example, in a case where a security key is not changed during handover, if a separate procedure is not instructed to an UM bearer, if a PDCP data recovery procedure is instructed to an AM bearer, if a separate procedure is not instructed to an UM bearer for which a DAPS handover method is not configured, if a PDCP data recovery procedure is instructed to an AM bearer for which a DAPS handover method is not configured, or if, with regard to a bearer (UM or AM bearer) for which a DAPS handover method is configured, the same header compression context is continuously applied as the header compression context of the source base station and the header compression context of the target base station by using the second PDCP layer device structure, it is not required to unnecessarily perform the method 2 proposed above. If the header compression context (ROHC context) is used as it is during handover, or if the method 2 is used even when the header compression protocol is not initialized, the header compression context or header compression protocol is unnecessarily initialized to generate an unnecessary overhead and thus resulting in waste of transmission resources. In addition, method 2 proposed in the disclosure may be applied to a bearer (UM or AM bearer) for which header compression protocol is configured in a general handover method, a bearer (UM or AM bearer) for which a DAPS handover method is configured in an efficient handover method (DAPS handover method), or a bearer (UM or AM bearer) for which a DAPS handover method is not configured, according to the bearers. The sixth condition may indicate one or multiple conditions among the following conditions.
- 1) When a header compression context (ROHC context) is not used as it is in a general handover method or an efficient handover method (DAPS handover method), or when an indicator indicating to use a header compression context as it is (e.g., drb-ContinueROHC) is not configured or is not indicated in an RRC message indicating handover (e.g., RRCReconfiguration message),
- 2) when a header compression protocol is initialized in a general handover method or an efficient handover method (DAPS handover method),
- 3) when a header compression protocol is in a unidirectional mode (U-mode, which is a mode in which the receiving terminal does not require feedback (ACK or NACK)), a reliable mode (R-mode, which is a mode in which the receiving terminal sends ACK or NACK), or an optimistic mode (O-mode, which is a mode in which the receiving terminal sends NACK) or in or operating in IR state in a general handover method or an efficient handover method (DAPS handover method),
- 4) when a header compression protocol is in a unidirectional mode (U-mode, which is a mode in which the receiving terminal does not require feedback (ACK or NACK)), a reliable mode (R-mode, which is a mode in which the receiving terminal sends ACK or NACK), or an optimistic mode (O-mode, which is a mode in which the receiving terminal sends NACK) or in or operating in NC state in a general handover method or an efficient handover method (DAPS handover method),
- 5) when a handover is performed or when a handover is instructed in a general handover method or an efficient handover method (DAPS handover method), if a security key is changed,
- 6) when a handover is performed or when a handover is instructed in a general handover method or an efficient handover method (DAPS handover method), if a security key or security configuration information is configured,
- 7) when a general handover method or an efficient handover method (DAPS handover method) is indicated or configured, if a header compression context (ROHC context) for a source base station and a header compression context for a target base station are not the same header compression context,
- 8) when a general handover method or an efficient handover method (DAPS handover method) is indicated or configured, if a header compression context for a target base station is not continuously used as a header compression context (ROHC context) for a source base station, or
- 9) when a general handover method or an efficient handover method (DAPS handover method) is indicated or configured, if the same header compression context is not continuously applied to a header compression context of a source base station and a header compression context of a target base station

In addition, when the efficient handover method (DAPS handover method) proposed in the disclosure is indicated or configured, if a security key is not changed, if security configuration information does not exist, or if a security key change is not indicated or configured, a separate procedure is not indicated to a UM bearer for which a DAPS handover method is not configured, a PDCP data recovery procedure is instructed to an AM bearer for which a DAPS handover method is not configured, the same header compression context for the bearers can be continuously applied as a header compression context of a source base station or a header compression context of a target base station, with regard to a bearer (UM or AM bearer) for which a DAPS handover method is configured, by using a second PDCP layer device structure (a PDCP layer device structure in which a security key for a source base station, a security key for a target base station, a header compression context for a source base station, or a header compression context for a target base station are maintained and applied, respectively, and a realignment function is performed), or the single same header compression context can be maintained and applied for a source base station and a target base station. If a header compression context is initialized or reconfigured when a security key is used as it is, different pieces of data encrypted with the same security key (different pieces of data, headers of which are compressed in different methods) may be transmitted when a base station (or a UE) transmits or retransmits data, and thus a security problem may occur. That is, a hacker, a large number of unspecified persons, or unauthorized attackers may receive different pieces of data encrypted with the same security key as above and thus obtain useful information for deriving the security key to thereby cause a security problem.
- Method 3: In the handover procedure, when transmitting an IR packet, the UE may perform transmission of uplink PDCP control data (e.g., PDCP control PDU (e.g., a new PDCP control PDU or interspersed ROHC feedback)) by including an IR packet therein instead of including the IR packet in uplink data (e.g., PDCP Data PDU) . The uplink PDCP control data is not allocated with a COUNT value or a PDCP serial number and is not discarded due to a PDCP status report, and thus a base station may always transmit the PDCP control data including an IR packet in which data processing is performed in advance, or may transmit multiple pieces of data or first perform data transmission. Therefore, upon receiving PDCP control data including the IR packet, a UE may receive, store, and synchronize a ROHC context, and may normally apply a header decompression procedure to downlink data.
- Method 4: In a handover procedure, a receiving PDCP layer device may perform a procedure of identifying whether pieces of received data are within the window (e.g., only data within the window is determined as valid data) or a duplicate detection procedure thereof, and may perform a deciphering procedure of pieces of data outside the window or pieces of duplicate data, before discarding the same, and then perform a header decompression procedure thereof. Further, if an IR packet is included in the duplicate data, the receiving PDCP layer device may perform a procedure of extracting the IR packet. That is, in the procedure of identifying whether data is within the window or in the duplicate detection procedure, if data is determined as data outside the header window or duplicate data, the receiving PDCP layer device may perform a deciphering procedure of data outside the window or duplicate data, before discarding the same, and then perform a header decompression procedure thereof to identify whether the IR packet is included therein. If the IR packet is included, a header decompression procedure may be performed by storing the ROHC context information of the IR packet, updating ROHC context information of the receiving PDCP layer device, and applying the header decompression procedure to pieces of data that are received thereafter. In the above, the header decompression procedure may include a procedure of identifying whether the IR packet is included in the received data, storing the ROHC context information of the IR packet if the IR packet is included, and updating the ROHC context information of the receiving PDCP layer device. When data outside the window or duplicate data is processed, in the procedure of identifying whether the data is within the window or the duplicate detection procedure proposed above, the data may be applied with one of the following methods and transmitted. In the following, a RCVD_COUNT value is understood as a COUNT value corresponding to the received data, and RX_DELIV indicates the lower end part of the window which the receiving PDCP layer device meets the validity of data or indicates the COUNT value of first data (or having the lowest COUNT value still waiting for realignment) that has not been delivered to an upper layer.
   ■ Method 4-1: method 4-1 is characterized in that a deciphering procedure is performed before discarding data outside the window or duplicate data, and a header decompression procedure is performed therefor.
      ◆ 1> If RCVD_COUNT < RX_DELIV (if the received data is data outside the window), or
      ◆ 1> If a PDCP PDU having a value of RCVD_COUNT has ever been successfully received before (if the received data is duplicate data)
         ● 2> If a deciphering procedure has not been performed for the received PDCP Data PDU (data part of the PDCP PDU), the deciphering procedure is performed and then a header decompression procedure is performed (for example, if, as a result of identification of an IR packet, there is no IR packet, a ROHC context may be stored or updated).
         ● 2> Discard the received PDCP Data PDU (data part of the PDCP PDU) .
   ■ Method 4-2: The method 4-2 is characterized in that a deciphering procedure is performed before discarding data outside the window or duplicate data, and a header decompression procedure is performed therefor. In addition, in the method 4-2, in order to enhance security, if a COUNT value corresponding to the currently received data has been previously received and data corresponding to the COUNT value has been successfully received before (if integrity protection and verification procedure is configured, the data corresponding to the COUNT value has been previously received and the integrity verification procedure has been successfully performed), it may be determined that a duplicate detection has occurred, and the received data is allowed to be discarded, thereby improving the duplicate detection procedure to prevent hacker attacks. In addition, in a case where the integrity protection and verification procedure is not configured, if a COUNT value corresponding to the currently received data has been previously received, the data may be immediately discarded.
      ◆ 1> If RCVD_COUNT < RX_DELIV (if the received data is data outside the window),
      ◆ 1> If a PDCP PDU having a value of RCVD_COUNT has been successfully received before, and if integrity protection and verification procedure has been configured and the integrity verification procedure for the PDCP PDU corresponding to the RCVD_COUNT value has been successfully performed before, or
      * 1> If a PDCP PDU having a value of RCVD COUNT has been successfully received before, and if integrity protection and verification procedure has not been configured,
         ● 2> If a deciphering procedure has not been performed on the received PDCP Data PDU (data part of the PDCP PDU), the deciphering procedure is performed and then a header decompression procedure is performed (for example, if, as a result of identification of an IR packet, there is no IR packet, a ROHC context may be stored or updated).
         ● 2> Discard the received PDCP Data PDU (data part of the PDCP PDU) .
   ■ Method 4-3: In method 4-3, it may be characterized in that, only in a handover procedure, only when a header compression protocol is initialized, or only when a header compression protocol is in no context (NC) state of U mode, a deciphering procedure is performed with regard to data outside the window or duplicate data, before discarding the same, and then a header decompression procedure is applied thereto. The operation may be performed such that a reception ROHC protocol is in no context (NC) state or static context (SC) state of unidirectional mode (U mode), bidirectional optimistic mode (O mode), or bidirectional reliable mode (R mode). That is, it is characterized in that even an expired or duplicated packet may be subject to deciphering, integrity verification, and header decompression without immediately being discarded. Therefore, even if an IR packet is loaded in the duplicated packet, the receiving terminal PDCP layer device may receive the same, identify entire header information and ROHC protocol configuration information, and complete synchronization with a transmitting terminal ROHC protocol. Accordingly, headercompressed PDCP PDUs transmitted from a transmitting terminal can be successfully subject to header decompression.
      ◆ 1> If RCVD COUNT < RX_DELIV (if the received data is data outside the window), or
      * 1> If a PDCP PDU having a value of RCVD COUNT has ever been successfully received before (if the received data is duplicate data)
         ● 2> If a header decompression protocol (ROHC) is in the NC state of U mode (or the header compression protocol has been reset and not been reconfigured)
            ■ 3> If a deciphering procedure has not been performed on the received PDCP Data PDU (data part of the PDCP PDU), the deciphering procedure is performed and then a header decompression procedure is performed (for example, if, as a result of identification of an IR packet, there is no IR packet, a ROHC Context may be stored or updated).
         ● 2> Discard the received PDCP Data PDU (data part of the PDCP PDU) .
   ■ Method 4-4: In method 4-4, it may be characterized in that, only in a handover procedure, only when a header compression protocol is initialized, or only when a header compression protocol is in no context (NC) state of U mode, a deciphering procedure is performed with regard to data outside the window or duplicate data, before discarding the same, and then a header decompression procedure is applied thereto. The operation may be performed such that a reception ROHC protocol is in no context (NC) state or static context (SC) state of unidirectional mode (U mode), bidirectional optimistic mode (O mode), or bidirectional reliable mode (R mode). That is, it is characterized in that even an expired or duplicated packet may be subject to deciphering, integrity verification, and header decompression without immediately being discarded. Therefore, even if the IR packet is loaded in the duplicated packet, a receiving terminal PDCP layer device may receive the same, identify entire header information and ROHC protocol configuration information, and complete the synchronization with a transmitting terminal ROHC protocol. Accordingly, headercompressed PDCP PDUs transmitted from a transmitting terminal can be successfully subject to header decompression. In addition, in method 4-4, in order to enhance security, if a COUNT value corresponding to the currently received data has been previously received, and data corresponding to the COUNT value has been successfully received before (if integrity protection and verification procedure is configured, if the data corresponding to the COUNT value has been previously received and the integrity verification procedure has been successfully performed), it may be determined that a duplicate detection has occurred, and the received data is allowed to be discarded, thereby improving the duplicate detection procedure to prevent hacker attacks. In addition, if integrity protection and verification procedure is not configured, if a COUNT value corresponding to the currently received data has been previously received, the data may be immediately discarded.
      ◆ 1> If RCVD COUNT < RX_DELIV (if the received data is data outside the window), or
      ◆ 1> If a PDCP PDU having a value of RCVD_COUNT has been successfully received before, and if integrity protection and verification procedure has been configured and the integrity verification procedure for the PDCP PDU corresponding to the RCVD_COUNT value has been successfully performed before, or
      ◆ 1> If a PDCP PDU having a value of RCVD_COUNT has been successfully received before, and if integrity protection and verification procedure has not been configured,
         ● 2> If a header decompression protocol (ROHC) is in the NC state of U mode (or the header compression protocol has been reset and not been reconfigured)
            ■ 3> If a deciphering procedure has not been performed on the received PDCP Data PDU (data part of the PDCP PDU), the deciphering procedure is performed and then a header decompression procedure is performed (for example, if, as a result of identification of an IR packet, there is no IR packet, a ROHC Context may be stored or updated).
         ● 2> Discard the received PDCP Data PDU (data part of the PDCP PDU) .
   ■ Method 5: With regard to method 1, method 2, method 3, and method 4, the proposed duplicate detection procedure applicable when the downlink original data-based data duplicate transmission method (PDCP SDU based duplication) or efficient handover method of the first embodiment is configured or not through a handover command message (or RRC message) may be applied, and with regard to data determined to be duplicated data (or data outside the window), the header decompression procedure may be applied by applying the above methods and the duplicated data (or data outside the window) may then be discarded.

In the disclosure, the various embodiments in which a header decompression failure problem may occur during handover may be applied to PDCP layer devices or bearers driven in RLC AM mode, and the embodiments may also be extended and applied to PDCP layer devices or bearers driven in RLC UM mode. In addition, by extending the embodiments, when a PDCP re-establishment procedure is triggered for the RLC UM mode or RLC AM mode through the RRC message, when a PDCP data recovery procedure is triggered, during handover, when a handover command message is received, or when a handover completion message is transmitted, an indicator to configure and transmit a PDCP status report may be newly defined to be indicated to a UE.

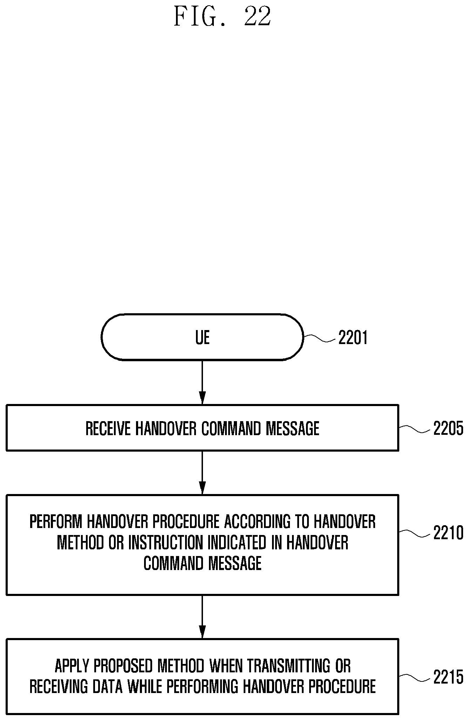

FIG. 22 illustrates an operation of a UE proposed in the disclosure.

In FIG. 22, when a UE 22-01 receives a handover command message (e.g., an RRC message) from a base station in operation 22-05, the UE performs a handover procedure by performing a procedure according to a handover method indicated through the handover command message and performing a function indicated through the handover command message in operation 22-10. In addition, in order to prevent a header decompression failure error described in the disclosure, for example, to prevent problems such as the first embodiment, the second embodiment, or the third embodiment, the UE performs a data transmission/reception procedure according to the method 1, the method 2, the method 3, the method 4, or the method 5 in operation 22-15.

The UE operation described above may be extended to the base station and applied to a base station operation.

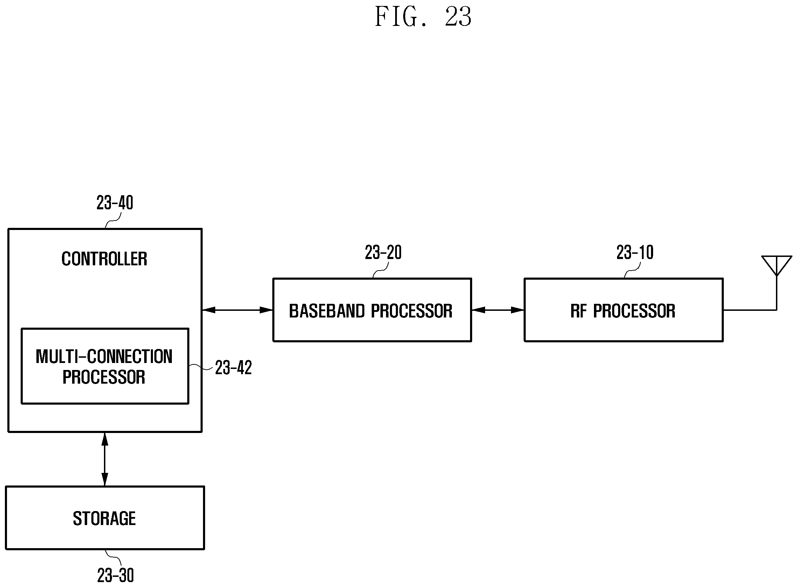

FIG. 23 illustrates the structure of a UE to which an embodiment may be applied.

Referring to FIG. 23, the UE includes a radio frequency (RF) processor 23-10, a baseband processor 23-20, a storage 23-30, and a controller 23-40.

The RF processor 23-10 performs a function of transmitting and receiving a signal through a radio channel, such as band conversion and amplification of a signal. That is, the RF processor 23-10 up-converts a baseband signal provided from the baseband processor 23-20 to an RF band signal to thus transmit the same through an antenna, and down-converts an RF band signal received through the antenna to a baseband signal. For example, the RF processor 23-10 may include a transmission filter, a reception filter, an amplifier, a mixer, an oscillator, a digital-to-analog converter (DAC), an analog-to-digital converter (ADC), and the like. Although only one antenna is illustrated in FIG. 23, the UE may have multiple antennas. In addition, the RF processor 23-10 may include multiple RF chains. Further, the RF processor 23-10 may perform beamforming. To perform beamforming, the RF processor 23-10 may adjust the phases and magnitudes of signals transmitted and received through multiple antennas or antenna elements. In addition, the RF processor may perform MIMO, and may receive multiple layers when performing the MIMO operation. The RF processor 23-10 may perform reception beam sweeping by appropriately setting multiple antennas or antenna elements under the control of the controller, or may adjust the direction and beam width of the reception beam such that the reception beam is coordinated with the transmission beam.

The baseband processor 23-20 performs a function of conversion between a baseband signal and a bit string according to the physical layer specification of the system. For example, in a case of data transmission, the baseband processor 23-20 encodes and modulates transmission bit strings, thereby generating complex symbols. In addition, upon receiving data, the baseband processor 23-20 demodulates and decodes a baseband signal provided from the RF processor 23-10 to thus recover reception bit strings. For example, in a case where an orthogonal frequency division multiplexing (OFDM) scheme is applied, when transmitting data, the baseband processor 23-20 generates complex symbols by encoding and modulating transmission bit strings, maps the complex symbols to subcarriers, and then configures OFDM symbols through an inverse fast Fourier transform (IFFT) operation and cyclic prefix (CP) insertion. In addition, when receiving data, the baseband processor 23-20 divides the baseband signal provided from the RF processor 23-10 into OFDM symbol units, restores the signals mapped to the subcarriers through a fast Fourier transform (FFT) operation, and then restores reception bit strings through demodulation and deciphering.

The baseband processor 23-20 and the RF processor 23-10 transmit and receive signals as described above. Accordingly, the baseband processor 23-20 and the RF processor 23-10 may be referred to as a "transmitter", a "receiver", a "transceiver", or a "communication unit". Further, at least one of the baseband processor 23-20 and the RF processor 23-10 may include multiple communication modules in order to support multiple different radio access techniques. In addition, at least one of the baseband processor 23-20 and the RF processor 23-10 may include different communication modules to process signals in different frequency bands. For example, the different radio access techniques may include an LTE network, an NR network, and the like. In addition, the different frequency bands may include super-high frequency (SHF) (e.g., 2.5 GHz or 5 GHz) bands or millimeter wave (e.g., 60 GHz) bands.

The storage 23-30 stores data such as fundamental programs, application programs, and configuration information for the operation of the UE. The storage 23-30 provides the stored data in response to a request from the controller 23-40.

The controller 23-40 controls the overall operation of the UE. For example, the controller 23-40 transmits and receives signals through the baseband processor 23-20 and the RF processor 23-10. In addition, the controller 23-40 records and reads data in and from the storage 23-30. To this end, the controller 23-40 may include at least one processor. For example, the controller 23-40 may include a communication processor (CP) for controlling communication and an application processor (AP) for controlling upper layers such as application programs.

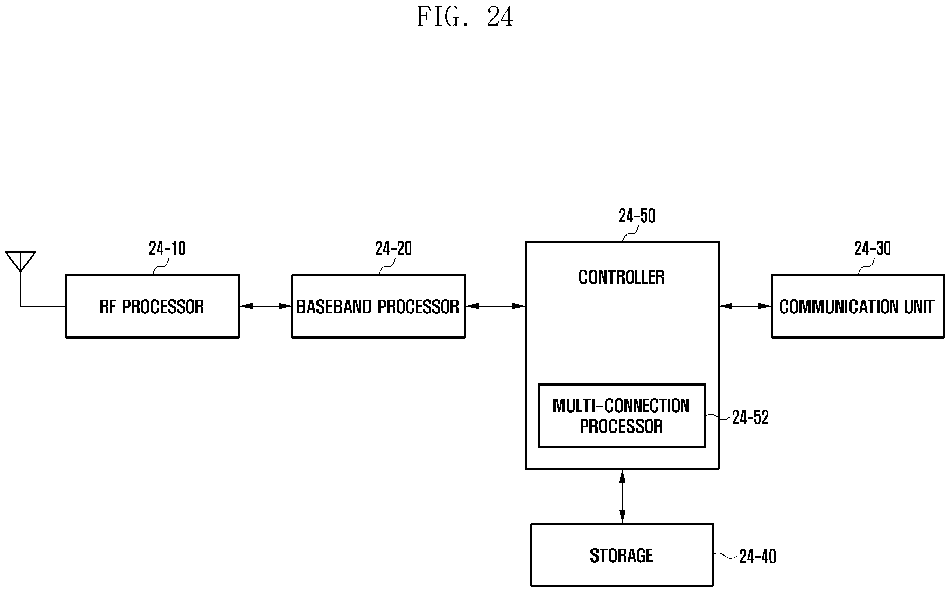

FIG. 24 illustrates a block diagram of a TRP in a wireless communication system to which an embodiment may be applied.

As shown in FIG. 24, the base station includes an RF processor 24-10, a baseband processor 24-20, a backhaul communication unit 24-30, a storage 24-40, and a controller 24-50.

The RF processor 24-10 performs a function of transmitting and receiving signals, such as band conversion and amplification of a signal, through a radio channel. That is, the RF processor 24-10 up-converts a baseband signal provided from the baseband processor 24-20 to an RF band signal to thus transmit the same through an antenna, and down-converts an RF band signal received through the antenna to a baseband signal. For example, the RF processor 24-10 may include a transmission filter, a reception filter, an amplifier, a mixer, an oscillator, a DAC, an ADC, and the like. Although only one antenna is shown in the drawing, the first access node may have multiple antennas. In addition, the RF processor 24-10 may include multiple RF chains. Further, the RF processor 24-10 may perform beamforming. To perform beamforming, the RF processor 24-10 may adjust the phases and magnitudes of signals transmitted and received through multiple antennas or antenna elements. The RF processor may perform a downlink MIMO operation by transmitting one or more layers.

The baseband processor 24-20 performs a function of conversion between a baseband signal and a bit string according to a physical layer specification of a first radio access technique. For example, in a case of data transmission, the baseband processor 24-20 encodes and modulates transmission bit strings, thereby generating complex symbols. In addition, upon receiving data, the baseband processor 24-20 demodulates and decodes a baseband signal provided from the RF processor 24-10 to thus recover reception bit strings. For example, in a case where an OFDM scheme is applied, when transmitting data, the baseband processor 24-20 generates complex symbols by encoding and modulating transmission bit strings, maps the complex symbols to subcarriers, and then configures OFDM symbols through the IFFT operation and CP insertion. In addition, when receiving data, the baseband processor 24-20 divides the baseband signal provided from the RF processor 24-10 into OFDM symbol units, restores the signals mapped to the subcarriers through the FFT operation, and then restores reception bit strings through demodulation and deciphering. The baseband processor 24-20 and the RF processor 24-10 transmit and receive signals as described above. Accordingly, the baseband processor 24-20 and the RF processor 24-10 may be referred to as a "transmitter", a "receiver", a "transceiver", a "communication unit", or a "wireless communication unit".

The communication unit 24-30 provides an interface for performing communication with other nodes in the network.

The storage 24-40 stores data such as fundamental programs, application programs, and configuration information for the operation of the primary base station. In particular, the storage 24-40 may store information about bearers allocated to a connected terminal, a measurement result reported from a connected terminal, and the like. In addition, the storage 24-40 may store information that is a criterion for determining whether a multi-connection is provided to the UE or is released. In addition, the storage 24-40 provides the stored data in response to a request from the controller 24-50.

The controller 24-50 controls the overall operation of the primary base station. For example, the controller 24-50 transmits and receives signals through the baseband processor 24-20 and the RF processor 24-10 or the backhaul communication unit 24-30. In addition, the controller 24-50 records and reads data in and from the storage 24-40. To this end, the controller 24-50 may include at least one processor.

## Claims

1. A method being performed by a base station associated with a first cell for a wireless communication system, the method comprising:
identifying a data radio bearer, DRB, configured as a dual active protocol stack, DAPS, bearer, established with a user equipment, UE (1-35, 601, 720, 1101, 1501, 1703, 1803, 2003, 2201);
identifying that a robust header compression, ROHC, is configured for a packet data convergence protocol, PDCP, entity associated with the DRB; and
transmitting downlink data to the UE (1-35, 601, 720, 1101, 1501, 1703, 1803, 2003, 2201) based on maintaining an initialization and refresh, IR, state for a ROHC protocol of the first cell during a DAPS handover before a release of a second cell, wherein the ROHC protocol operates in an unidirectional mode, U-mode, or a bidirectional optimistic mode, O-mode.

2. The method of claim 1, wherein the first cell is a target cell and the second cell is a source cell of the DAPS handover.

3. A method being performed by a user equipment, UE (1-35, 601, 720, 1101, 1501, 1703, 1803, 2003, 2201), for a wireless communication system, the method comprising:
identifying a data radio bearer, DRB, configured as a dual active protocol stack, DAPS, bearer, established with a base station associated with a first cell;
identifying that a robust header compression, ROHC, is configured for a packet data convergence protocol, PDCP entity associated with the DRB; and
receiving downlink data from the base station based on maintaining an initialization and refresh, IR, state for a ROHC protocol
of the first cell during a DAPS handover before a release of a second cell, wherein
the ROHC protocol operates in an unidirectional mode, U-mode, or a bidirectional optimistic mode, O-mode.

4. The method of claim 3, wherein the first cell is a target cell and the second cell is a source cell of the DAPS handover.

5. A base station associated with a first cell for a wireless communication system, the base station comprising:
a transceiver; and
a controller (13-50, 24-50) configured to:
identify a data radio bearer, DRB, configured as a dual active protocol stack, DAPS, bearer, established with a user equipment, UE (1-35, 601, 720, 1101, 1501, 1703, 1803, 2003, 2201),
identify that a robust header compression, ROHC, is configured for a packet data convergence protocol, PDCP, entity associated with the DRB, and
transmit downlink data to the UE (1-35, 601, 720, 1101, 1501, 1703, 1803, 2003, 2201) based on maintaining an initialization and refresh, IR, state for a ROHC protocol of the first cell during a DAPS handover before a release of a second cell,
wherein the ROHC protocol operates in an unidirectional mode, U-mode, or a bidirectional optimistic mode, O-mode.

6. The base station of claim 5, wherein the first cell is a target cell and the second cell is a source cell of the DAPS handover.

7. A UE (1-35, 601, 720, 1101, 1501, 1703, 1803, 2003, 2201) for a wireless communication system, the UE (1-35, 601, 720, 1101, 1501, 1703, 1803, 2003, 2201) comprising:
a transceiver; and
a controller (12-40, 23-40) configured to:
identify a data radio bearer, DRB, configured as a dual active protocol stack (DAPS) bearer, established with a base station associated with a first cell,
identify that a robust header compression, ROHC, is configured for a packet data convergence protocol, PDCP, entity associated with the DRB, and
receive downlink data from the base station based on maintaining an initialization and refresh. IR, state for a ROHC protocol
of the first cell during a DAPS handover, before a release of a second cell,
wherein the ROHC protocol operates in an unidirectional mode, U-mode, or a bidirectional optimistic mode, O-mode.

8. The UE of claim 7, wherein the first cell is a target cell and the second cell is a source cell of the DAPS handover.

## Patentansprüche

1. Verfahren, das von einer Basisstation, die einer ersten Zelle zugeordnet ist, für ein drahtloses Kommunikationssystem durchgeführt wird, wobei das Verfahren umfasst:
Identifizieren eines Datenfunkträgers, DRB, der als Dualaktivprotokollstapel-, DAPS, Träger konfiguriert ist, der mit einem Benutzergerät, UE (1-35, 601, 720, 1101, 1501, 1703, 1803, 2003, 2201) eingerichtet ist;
Identifizieren, dass eine robuste Header-Kompression, ROHC, für eine Paketdatenkonvergenzprotokoll-, PDCP,-Einheit konfiguriert ist, die dem DRB zugeordnet ist; und
Übertragen von Downlink-Daten an das UE (1-35, 601, 720, 1101, 1501, 1703, 1803, 2003, 2201) basierend auf dem Aufrechterhalten eines Initialisierungs- und Aktualisierungs-, IR,-Zustands für ein ROHC-Protokoll der ersten Zelle während eines DAPS-Handover vor einer Freigabe einer zweiten Zelle, wobei das ROHC-Protokoll in einem unidirektionalen Modus, U-Modus, oder einem bidirektionalen optimistischen Modus, O-Modus, arbeitet.

2. Verfahren nach Anspruch 1, wobei die erste Zelle eine Zielzelle und die zweite Zelle eine Quellzelle des DAPS-Handover ist.

3. Verfahren, das von einem Benutzergerät, UE (1-35, 601, 720, 1101, 1501, 1703, 1803, 2003, 2201), für ein drahtloses Kommunikationssystem durchgeführt wird, wobei das Verfahren umfasst:
Identifizieren eines Datenfunkträgers, DRB, der als Dualaktivprotokollstapel-, DAPS, Träger konfiguriert ist, der mit einer einer ersten Zelle zugeordneten Basisstation eingerichtet ist;
Identifizieren, dass eine robuste Header-Kompression, ROHC, für eine Paketdatenkonvergenzprotokoll-, PDCP,-Einheit konfiguriert ist, die dem DRB zugeordnet ist; und
Empfangen von Downlink-Daten von der Basisstation basierend auf dem Aufrechterhalten eines Initialisierungs- und Aktualisierungs-, IR,-Zustands für ein ROHC-Protokoll der ersten Zelle während eines DAPS-Handover vor einer Freigabe einer zweiten Zelle, wobei das ROHC-Protokoll in einem unidirektionalen Modus, U-Modus, oder einem bidirektionalen optimistischen Modus, O-Modus, arbeitet.

4. Verfahren nach Anspruch 3, wobei die erste Zelle eine Zielzelle und die zweite Zelle eine Quellzelle des DAPS-Handover ist.

5. Basisstation, die einer ersten Zelle zugeordnet ist, für ein drahtloses Kommunikationssystem, wobei die Basisstation Folgendes umfasst:
einen Transceiver; und
eine Steuerung(13-50, 24-50), die konfiguriert ist zum:
Identifizieren eines Datenfunkträgers, DRB, der als Dualaktivprotokollstapel-, DAPS, Träger konfiguriert ist, der mit einem Benutzergerät, UE (1-35, 601, 720, 1101, 1501, 1703, 1803, 2003, 2201) eingerichtet ist,
Identifizieren, dass eine robuste Header-Kompression, ROHC, für eine Paketdatenkonvergenzprotokoll-, PDCP,-Einheit konfiguriert ist, die dem DRB zugeordnet ist, und
Übertragen von Downlink-Daten an das UE (1-35, 601, 720, 1101, 1501, 1703, 1803, 2003, 2201) basierend auf dem Aufrechterhalten eines Initialisierungs- und Aktualisierungs-, IR,-Zustands für ein ROHC-Protokoll der ersten Zelle während eines DAPS-Handover vor einer Freigabe einer zweiten Zelle, wobei das ROHC-Protokoll in einem unidirektionalen Modus, U-Modus, oder einem bidirektionalen optimistischen Modus, O-Modus, arbeitet.

6. Basisstation nach Anspruch 5, wobei die erste Zelle eine Zielzelle und die zweite Zelle eine Quellzelle des DAPS-Handover ist.

7. UE (1-35, 601, 720, 1101, 1501, 1703, 1803, 2003, 2201) für ein drahtloses Kommunikationssystem, wobei das UE (1-35, 601, 720, 1101, 1501, 1703, 1803, 2003, 2201) umfasst:
einen Transceiver; und
eine Steuerung(13-50, 23-50), die konfiguriert ist zum:
Identifizieren eines Datenfunkträgers, DRB, der als Dualaktivprotokollstapel-, (DAPS),-Träger konfiguriert ist, der mit einer einer ersten Zelle zugeordneten Basisstation eingerichtet ist,
Identifizieren, dass eine robuste Header-Kompression, ROHC, für eine Paketdatenkonvergenzprotokoll-, PDCP,-Einheit konfiguriert ist, die dem DRB zugeordnet ist, und
Empfangen von Downlink-Daten von der Basisstation basierend auf der Aufrechterhaltung eines Initialisierungs- und Aktualisierungs- IR, Zustands für ein ROHC-Protokoll der ersten Zelle während eines DAPS-Handover, vor einer Freigabe einer zweiten Zelle, wobei das ROHC-Protokoll in einem unidirektionalen Modus, U-Modus, oder einem bidirektionalen optimistischen Modus, O-Modus, arbeitet.

8. UE nach Anspruch 7, wobei die erste Zelle eine Zielzelle und die zweite Zelle eine Quellzelle des DAPS-Handover ist.

## Revendications

1. Procédé exécuté par une station de base associée à une première cellule pour un système de communication sans fil, le procédé comprenant :
identifier un support radio de données, DRB, configuré comme un support à double pile de protocoles actifs, DAPS, établi avec un équipement utilisateur, UE (1-35, 601, 720, 1101, 1501, 1703, 1803, 2003, 2201) ;
identifier qu'une compression d'en-tête robuste, ROHC, est configurée pour une entité de protocole de convergence de données par paquets, PDCP, associée au DRB ; et
transmettre des données de liaison descendante à l'UE (1-35, 601, 720, 1101, 1501, 1703, 1803, 2003, 2201) sur la base du maintien d'un état d'initialisation et de rafraîchissement, IR, pour un protocole ROHC de la première cellule pendant un transfert DAPS avant la libération d'une deuxième cellule, le protocole ROHC fonctionnant en mode unidirectionnel, mode U, ou en mode optimiste bidirectionnel, mode O.

2. Procédé de la revendication 1, dans lequel la première cellule est une cellule cible et la deuxième cellule est une cellule source du transfert DAPS.

3. Procédé exécuté par un équipement utilisateur, UE (1-35, 601, 720, 1101, 1501, 1703, 1803, 2003, 2201), pour un système de communication sans fil, le procédé comprenant :
identifier un support radio de données, DRB, configuré comme un support à double pile de protocoles actifs, DAPS, établi avec une station de base associée à une première cellule ;
identifier qu'une compression d'en-tête robuste, ROHC, est configurée pour une entité de protocole de convergence de données par paquets, PDCP, associée au DRB ; et
recevoir des données de liaison descendante de la station de base sur la base du maintien d'un état d'initialisation et de rafraîchissement, IR, pour un protocole ROHC de la première cellule pendant un transfert DAPS avant la libération d'une deuxième cellule, le protocole ROHC fonctionnant en mode unidirectionnel, mode U, ou en mode optimiste bidirectionnel, mode O.

4. Procédé de la revendication 3, dans lequel la première cellule est une cellule cible et la deuxième cellule est une cellule source du transfert DAPS.

5. Station de base associée à une première cellule pour un système de communication sans fil, la station de base comprenant :
un émetteur-récepteur ; et
une commande (13-50, 24-50) configurée pour :
identifier un support radio de données, DRB, configuré comme un support à double pile de protocoles actifs, DAPS, établi avec un équipement utilisateur, UE (1-35, 601, 720, 1101, 1501, 1703, 1803, 2003, 2201),
identifier qu'une compression d'en-tête robuste, ROHC, est configurée pour une entité de protocole de convergence de données par paquets, PDCP, associée au DRB, et
transmettre des données de liaison descendante à l'UE (1-35, 601, 720, 1101, 1501, 1703, 1803, 2003, 2201) sur la base du maintien d'un état d'initialisation et de rafraîchissement, IR, pour un protocole ROHC de la première cellule pendant un transfert DAPS avant la libération d'une deuxième cellule, le protocole ROHC fonctionnant en mode unidirectionnel, mode U, ou en mode optimiste bidirectionnel, mode O.

6. Station de base de la revendication 5, dans laquelle la première cellule est une cellule cible et la deuxième cellule est une cellule source du transfert DAPS.

7. UE (1-35, 601, 720, 1101, 1501, 1703, 1803, 2003, 2201) pour un système de communication sans fil, l'UE (1-35, 601, 720, 1101, 1501, 1703, 1803, 2003, 2201) comprenant :
un émetteur-récepteur ; et
une commande (13-40, 24-40) configurée pour :
identifier un support radio de données, DRB, configuré comme un support à double pile de protocoles actifs, DAPS, établi avec une station de base associée à une première cellule,
identifier qu'une compression d'en-tête robuste, ROHC, est configurée pour une entité de protocole de convergence de données par paquets, PDCP, associée au DRB, et
recevoir des données de liaison descendante de la station de base sur la base du maintien d'un état d'initialisation et de rafraîchissement, IR, d'un protocole ROHC de la première cellule pendant un transfert DAPS, avant la libération d'une deuxième cellule, le protocole ROHC fonctionnant en mode unidirectionnel, mode U, ou en mode optimiste bidirectionnel, mode O.

8. UE de la revendication 7, dans lequel la première cellule est une cellule cible et la deuxième cellule est une cellule source du transfert DAPS.
